# EUROPÄISCHE PATENTSCHRIFT

(11) **EP 3 308 052 B1**
(45) Veröffentlichungstag und Bekanntmachung des Hinweises auf die Patenterteilung: **05.08.2020**
(21) Anmeldenummer: 16732542.2
(22) Anmeldetag: 14.06.2016
(51) Int. Cl.: F16D 65/097, F16D 55/226, F16D 65/18

(54) **SCHEIBENBREMSE FÜR EIN NUTZFAHRZEUG UND BREMSBELAGSATZ**
DISK BRAKE FOR A COMMERCIAL VEHICLE AND BRAKE PAD SET
FREIN À DISQUE POUR VÉHICULE UTILITAIRE ET JEU DE GARNITURES DE FREIN

(30) Priorität: 15.06.2015 DE 102015109540; 09.10.2015 DE 102015117285; 17.03.2016 DE 102016104970
(43) Veröffentlichungstag der Anmeldung: 18.04.2018
(73) Patentinhaber: KNORR-BREMSE Systeme für Nutzfahrzeuge GmbH, 80809 München (DE)
(72) Erfinder: FRICKE, Jens, 94474 Vilshofen (DE); RGUICHI, Abdelaziz, 82140 Olching (DE); EICHLER, Thomas, 80803 München (DE); KRAUSE, Oliver, 82515 Wolfratshausen (DE); KLINGNER, Matthias, 82272 Moorenweis (DE); PESCHEL, Michael, 82296 Schöngeising (DE); SCHÖFBERGER, Tobias, 84048 Mainburg (DE); ADAMCZYK, Philipp, 87677 Stöttwang (DE); MOLNAR, Markus, 94081 Fürstenzell (DE); HAUSER, Maximilian, 94081 Fürstenzell (DE); NESMJANOWITSCH, Igor, 94491 Hengersberg (DE); HEINDL, Martin, 94535 Eging am See (DE); BRANDL, Christian, 94447 Plattling (DE); PLEINTINGER, Martin, 94428 Eichendorf (DE); ROTH, Natalie, 94474 Vilshofen (DE); SAKEL, Kerstin, 81245 München (DE); GASSLBAUER, Franz, 84381 Johanniskirchen (DE); TROPP, Martin, 84364 Bad Birnbach (DE); ASEN, Alexander, 94428 Eichendorf (DE)
(86) Internationale Anmeldenummer: PCT/EP2016/063612
(87) Internationale Veröffentlichungsnummer: WO 2016/202791

(56) Entgegenhaltungen:
- WO-A1-96/08663
- CN-A- 101 498 346
- DE-A1-102009 009 567
- JP-A- S57 179 435
- JP-A- 2010 270 799
- US-A- 4 491 204
- US-A1- 2012 085 597

## Beschreibung

Die Erfindung betrifft eine Scheibenbremse für ein Nutzfahrzeug nach dem Oberbegriff des Anspruchs 1. Die Erfindung bezieht sich auch auf einen Bremsbelagsatz.

Bei einer gattungsgemäßen, auch als Schiebesattel-Bremse bekannten Scheibenbremse wird im Fall einer Bremsung mittels einer Zuspanneinrichtung, die pneumatisch oder elektromotorisch betätigbar ist, ein aktionsseitiger Bremsbelag gegen eine fahrzeugseitige Bremsscheibe gepresst. Im weiteren Verlauf des Bremsvorgangs wird der Bremssattel, bezogen auf die Bremsscheibe, entgegen der Zuspannrichtung des aktionsseitigen Bremsbelages verschoben unter Mitnahme und Anpressen des gegenüberliegenden, reaktionsseitigen Bremsbelages an die andere Seite der Bremsscheibe.

Nach einem Lösen der Bremse verbleibt bei der bekannten Scheibenbremse der Bremssattel in dieser Position, in der die Bremsbeläge, zumindest aber der reaktionsseitige Bremsbelag zwar drucklos, jedoch schleifend an der Bremsscheibe anliegt. Die dadurch im Fahrbetrieb auftretenden Restschleifmomente der Bremsbeläge wirken sich insofern nachteilig aus als sie zu einem erhöhten Kraftstoffverbrauch führen ebenso wie zu einer Verringerung der Standzeit der beteiligten Bauteile, nämlich der Bremsscheibe und der Bremsbeläge.

Zwar erfolgt ein geringes Lösen der Bremsbeläge im Fahrbetrieb beispielsweise durch einen Taumelschlag der Bremsscheibe sowie durch Erschütterungen und Querbeschleunigungen bei Kurvenfahrten. Diese Effekte sind jedoch nicht ausreichend, um die genannten Restschleifmomente wirksam zu verhindern.

Um diesem Problem zu begegnen, ist in der gattungsgemäßen DE 10 2007 001 213 eine Scheibenbremse offenbart mit einer Rückstelleinrichtung, die in einem der Führungsholme, über die der Bremssattel verschiebbar am Bremsträger gehalten ist, angeordnet ist und die ein federndes Rückstellelement aufweist, durch das der Bremssattel in eine Ausgangsstellung verschoben wird.

Prinzipiell hat sich diese Konstruktion bewährt. Jedoch kann der Einsatz dieser bekannten Rückstelleinrichtung bei druckluftbetätigten Scheibenbremsen schwerer Nutzfahrzeuge zu Problemen führen, da hier weite Grenzen variabler Einflüsse durch Bauteiltoleranzen und Bauteildeformationen wirksam sind, die eine sichere Funktion dieser Rückstelleinrichtung nicht in jedem Fall zulassen.

Vergleichbare Probleme ergeben sich bei einer Scheibenbremse wie sie in der DE 10 2012 006 111 A1 thematisiert ist. Dabei ist eine Rückstelleinrichtung auf der der Zuspanneinrichtung gegenüberliegenden, dem reaktionsseitigen Bremsbelag zugewandten Seite angeordnet, wodurch eine wirksame, insbesondere automatische Rückstellung des Bremssattels erreicht wird, bei gleichzeitig minimalstem Eingriff in die Systemsteifigkeit.

In jedem Fall wirkt die Rückstelleinrichtung auf den Bremssattel, wobei der Bremsträger als Widerlager fungiert.

Die DE 43 01 621 A1 und die WO96/08663 A1 beschreiben eine Schwimmsattel-Scheibenbremse mit einem ortsfesten Bremsträger, der zwei über den äußeren Rand einer Bremsscheibe ragende Trägerarme aufweist, mit beiderseits der Bremsscheibe angeordneten, je einen Reibbelag und eine Rückenplatte aufweisenden Bremsbacken, die an den Trägerarmen verschiebbar abgestützt sind, mit einem am Bremsträger axial verschiebbar geführten Schwimmsattel, der die Bremsbacken umgreift und einen zum Andruck der Bremsbacken an die Bremsscheibe bestimmte Betätigungsvorrichtung aufweist, mit einer auf die Bremsbacken axial in Bremslöserichtung einwirkenden Federanordnung, die nach dem Bremsen das Einstellen eines Lüftspiels zwischen Bremsbacken und Bremsscheibe unterstützt. Die Federanordnung weist zumindest eine Spreizfeder auf, die an einem Trägerarm des Bremsträgers in axialer Richtung insgesamt unverschiebbar befestigt ist, dass die Befestigung an einem über dem äußeren Rand der Bremsscheibe befindlichen Abschnitt des Trägerarms erfolgt, und dass die Spreizfeder zumindest zwei Federarme aufweist, die an den Rückplatten der Bremsbacken in axialer Richtung federnd anliegen.

Die US2014/0339026 A1 beschreibt eine Spreizfeder, umfassend einen Verriegelungsarm, der die Spreizfeder mit einem Bremskomponente verbindet, einen Rückzugarm; und eine Vorspanneinrichtung, die zwischen dem Verriegelungsarm und dem Rückholarm angeordnet ist, wobei die Vorspannvorrichtung sechs spiralförmige Schleifen oder mehr umfasst, die Energie während einer Bremsenaktivierung speichern und sobald der Bremsvorgang abgeschlossen ist, die Bremskomponenten (Bremsbelag) zurückziehen. Es wird ein Bremssattel in Form eines Faustsattels, welcher kein Schiebesattel ist, angegeben. Dieser ist für ein Personenfahrzeug geeignet, jedoch nicht für ein Nutzfahrzeug.

Der Erfindung liegt die Aufgabe zugrunde, eine Scheibenbremse der gattungsgemäßen Art so weiterzuentwickeln, dass mit konstruktiv einfachsten Mitteln die Standzeit insbesondere der Bremsbeläge und der Bremsscheibe erhöht und die Betriebskosten insgesamt gesenkt werden.

Diese Aufgabe wird durch eine Scheibenbremse mit den Merkmalen des Anspruchs 1 gelöst.

Durch die erfindungsgemäße Ausgestaltung der Scheibenbremse wird eine synchrone Rückstellung beider Bremsbeläge sowie einer Rückstellung des Bremssattels bei gelöster Bremse erreicht, wobei die synchrone Rückstellung sowohl die Rückstellkräfte wie auch die Rückstellwege betrifft. Dabei wirkt die Rückstellkraft entgegen der jeweiligen Zuspannrichtung der beiden Bremsbeläge, also beim reaktionsseitigen Bremsbelag zum Sattelrücken hin und beim aktionsseitigen Bremsbelag zum Sattelkopf hin, unter Spaltbildungen gegenüber der Bremsscheibe.

Der Angriff der Spreizeinrichtung an den beiden Bremsbelägen erfolgt zweckmäßigerweise an den Belagträgerplatten und zwar auf der dem daran befestigten Reibbelag zugewandten Seite oder an der gegenüberliegenden Rückenseite. Um ein Verkanten des jeweiligen Bremsbelages bei der Rückstellung zu vermeiden, greift das Spreizelement entweder zentral, an einem oberen frei liegenden Randbereich der Belagträgerplatte an oder symmetrisch an zwei Anlagebereichen rechts und links.

Die Anbringung des Haltebogens am Bremsträger ermöglicht eine Nachrüstung der Rückstelleinrichtung ohne Veränderung am Bremssattel oder Bremsträger der Scheibenbremse.

Ein Halteabschnitt einer Belagträgerplatte eines Bremsbelags kann auf einer Druckseite der Belagträgerplatte bügelartig ohne Hinterschneidungen mit einer Öffnung und einer Ausnehmung auf einer Belagseite der Belagträgerplatte für eine Platte einstückig mit der Belagträgerplatte als Gussteil hergestellt sein. Dies ist kostengünstig, da weder Kerne für das Gussverfahren notwendig sind noch nachträglich Bearbeitungen anfallen.

In einer Ausführung erstrecken sich die Spreizelemente ausgehend von einem zentralen Bereich in der Mitte der Öffnung von innen nach außen zu den gleichmäßig zur Mitte abständig zueinander angeordneten Anlagebereichen. Damit ist ein kompakter Aufbau möglich.

Auf diese Weise ist die Spreizeinrichtung mittig im Bremssattel angeordnet, wobei sie ebenfalls innerhalb einer Hüllkurve einer Felge eines zugeordneten Rades angeordnet ist.

Die beiden Spreizelemente sind mittig (in Bezug auf die Trägerhörner) miteinander verbunden. Somit kann eine - in einem kleinen Toleranzbereich - gleiche Federkraft sowohl einlaufseitig als auch auslaufseitig sichergestellt werden. Unterschiedliche Federkräfte zwischen Auslauf- und Einlaufseite, die zu Schrägverschleiß führen können, werden durch das einseitige Angreifen je einer Feder pro Belag minimiert

Eine weitere Ausführung sieht vor, dass der sich der zentrale Bereich der Öffnung beiderseits einer virtuellen Mitte der Öffnung in etwa parallel zu der Ebene der Bremsscheibe in einer Länge in einem Bereich von 30 bis 50 % einer Längsachse der Öffnung erstreckt. Damit ergibt sich eine vorteilhafte Anpassung der Federkräfte.

In einer anderen Ausführung weist die Spreizeinrichtung Federarme auf, von denen jeweils zwei an einer zugeordneten Belagträgerplatte anliegen, wobei die Federarme in dem zentralen Bereich der Öffnung miteinander verbunden sind, was einen Einbau bei Montage und Wartung vereinfacht.

Nach einem weiteren Gedanken der Erfindung weist die Spreizeinrichtung gegensinnig wirkende Spreizelemente auf, vorzugsweise elastisch wirkend, insbesondere in Form von Federelementen.

Nach einem Gedanken der Erfindung steht die Spreizeinrichtung mit dem Bremsträger in Wirkverbindung, der ein Widerlager bildet und in dem die Bremsbeläge achsgleich zur Bremsscheibe verschiebbar gelagert sind.

Hierzu ist bevorzugt der Haltebogen vorgesehen, der die Bremsscheibe im Umfangsbereich, bis zu beidseitig einen Belagschacht begrenzenden Bremsträgerhörnern des Bremsträgers überspannt. Der Haltebogen ist kein Belaghaltebügel, sondern ein zusätzliches Bauteil.

Der Haltebogen kann in einer Ausführung an zwei sich gegenüberliegenden, mit dem Bremsträger verbundenen Bügeln angeschlossen sein, was eine einfache Anbindung ermöglicht.

Alternativ kann der Haltebogen im Bereich eines zuspannseitigen Rands der Öffnung angeordnet sein, während die an beiden Bremsbelägen angreifenden Spreizelemente mit dem Haltebogen verbunden sind. Dieser bildet somit eine Zentriereinrichtung, die in Korrespondenz mit dem Bremsträger als Fixlager konstruktiv auch anders verwirklicht werden kann.

Bevorzugt ist der Haltebogen ortsfest zwischen dem Bremsträger und Lagerholmen des Bremssattels angebracht. Dazu kann der Haltebogen zumindest einen Befestigungsabschnitt mit einer Öffnung aufweisen, welche koaxial zu einer Lageraufnahme des Bremsträgers, an welcher der Bremssattel über einen Lagerholm befestigt ist, angeordnet sein. Dies ergibt den Vorteil, dass zur Anbringung des Haltebogens keine Veränderungen am Bremssattel oder am Bremsträger vorgenommen werden müssen.

Mittels des Haltebogens, an dem die Spreizeinrichtung mit ihren Federarmen ib einer Ausführung über eine Haltebügel befestigt ist, erfolgt eine automatische Zentrierung des Bremssattels nach einem Lösen der Bremse, also nach Beenden eines Bremsvorgangs, wobei durch die insoweit fixierte Positionierung der Spreizeinrichtung die Bremsbeläge derart zurückgestellt werden, dass sich der Bremssattel gegenüber der Bremsscheibe zentriert.

Hierzu sind die Federarme über einen Haltebügel mit dem Haltebogen verbunden sind, wobei der Haltebügel zwei Haltearme aufweist, von denen sich jeder bis über den Haltebogen erstreckt und mit diesem fest verbunden ist. Damit lässt sich ein einfacher und stabiler Aufbau erzielen.

Im Übrigen ist die Spreizeinrichtung so ausgelegt, dass sie über das komplette Verschleißmaß der Bremsbeläge wirksam ist.

Da sich mit zunehmendem Verschleiß die Kraftangriffspunkte an den Bremsbelägen verändern, sind die die Bremsbeläge kontaktierenden Funktionsteile der Spreizeinrichtung so ausgebildet, dass sie sich gleitend an der Belagträgerplatte der jeweiligen Bremsbeläge abstützen.

Um eine sichere Halterung der Federschenkel bzw. bei einer anderen konstruktiven Variante der Federarme auch bei Rüttelbelastung im Fahrbetrieb zu gewährleisten, stützen sich die Federarme an der, bezogen auf den Grund des Belagschachtes, oberen Kante der Belagträgerplatte ab, ebenfalls, wie vorbeschrieben gleitend.

Die bauliche Realisierung der erfindungsgemäßen Spreizeinrichtung kann konstruktiv unterschiedlich sein, wobei sich ein wesentlicher Vorteil daraus ergibt, dass auf bewegliche Bauteile im Wesentlichen verzichtet werden kann, mit Ausnahme natürlich der federnden Spreizelemente, die zur Funktion eine federnde Auslenkung vollführen.

Der nun mögliche Verzicht auf bewegliche Teile wirkt sich naturgemäß standzeiterhöhend auf die Spreizeinrichtung aus, ebenso wie die geringe Anzahl notwendiger Bauteile, wodurch sich überdies eine äußerst kostengünstige Herstellung und Montage ergibt.

In einer weiteren Ausführung können die Federarme als zwei Paare von Federarmen ausgebildet sein, wobei die Paare sich gegenüberliegend in Längsrichtung der Öffnung so angeordnet sind, dass sie mit inneren Enden, die jeweils über einen Verbindungsabschnitt verbunden sind, in der Mitte der Öffnung an dem Haltebügel befestigt sind, wobei ihre äußeren freien Enden mit den Belagträgerplatte der Bremsbeläge zusammenwirken.. Dies ergibt einen kompakten und effektiven Aufbau.

In einer Ausführung können die Haltearme des Haltebügels Langlöcher an Befestigungsstellen an dem Haltebogen aufweisen. Damit ergibt sich der Vorteil, dass mittels der Langlöcher eine Zentrierung und Ausrichtung zur Bremsscheibenmitte einfach möglich ist. Die eigentliche Zusammenführung und Einstellung findet erst beim Kunden statt. Dabei wird das Lüftspiel zwischen Scheibe und Beläge durch Zuspannen auf 0 mm gestellt und das Federpaket zwischen die Beläge eingespannt. Durch das Langloch im Haltebügel kann sich das Federpaket zentrieren und ist somit exakt zur Scheibenmitte ausgerichtet. Die Langlochverbindung wird danach fixiert und das Lüftspiel wird wieder eingestellt.

In weiterer Ausgestaltung kann jeder Federarm endseitig mit einem Druckabschnitt ausgebildet sein, welcher in seiner Längsrichtung mit einem Langloch ausgebildet ist, das ein Führungsabschnitt des Federarms der Spreizeinrichtung ist. Dadurch kann eine weitere relative Bewegungsmöglichkeit erreicht werden.

Außerdem liegt hierbei jeder Druckabschnitt jeweils auf einer Auflagefläche einer jeweiligen Belagträgerplatte auf, wobei die Langlöcher eines jeden Druckabschnitts jeweils mit einem Vorsprung der Belagrückenplatte in Zusammenwirkung stehen. Dies ergibt eine vorteilhafte Führung in Radialrichtung.
- Die Spreizeinrichtung umfasst zwei Spreizelemente, wobei ein erstes Spreizelement auf einen ersten Belag und ein zweites Spreizelement auf einen zweiten Belag wirkt. Die beiden Spreizelemente sind mittig (in Bezug auf die Trägerhörner) miteinander verbunden. Somit kann eine - in einem kleinen Toleranzbereich - gleiche Federkraft sowohl einlaufseitig als auch auslaufseitig sichergestellt werden. Unterschiedliche Federkräfte zwischen Auslauf- und Einlaufseite, die zu Schrägverschleiß führen können, werden durch das einseitige Angreifen je einer Feder pro Belag minimiert
- Eine gleichmäßige Kraftaufbringung der Federn aktionsseitig und reaktionsseitig, bzw. auf der Druckstück- und Sattelseite, kann durch eine flexible Einstellung des Mittelstegs realisiert werden. Weiterhin können durch den flexiblen Mittelsteg geringe geometrische Fehlstellungen von Scheibe, Belag und Träger ausgeglichen werden.
- Durch den Mittelsteg kann die aktive Rückstelleinrichtung leicht positioniert und durch den Belaghaltebügel niedergehalten werden. Vorteilhaft kann bei einem Belagwechsel das die Rückstelleinrichtung problemlos entnommen und mitgetauscht werden.
- Durch die Ausnutzung des gesamten Belagschachtes zwischen den Trägerhörner können Spreizelemente beziehungsweise Federn mit einer sehr geringen Federrate genutzt werden, um bei Belagverschleiß ziemlich konstante Kräfte aufzubringen. Durch die langen Federwege können die Spreizelemente tolerant in Bezug auf Federkräfte sein. Die Federwege führen zu einer konstanten Federrate mit geringen Toleranzen
- In einer bevorzugten Ausführungsvariante werden lediglich zwei Federn verwendet.
- Die Spreizelemente können aus kostengünstigen und geometrisch flexiblen Blechen gebildet werden.
- Durch den Versatz mit unterschiedlichen Drehpunkten kann eine niedrigere Federrate abgebildet werden. Vorteilhaft sind keine vielen Windungen (kostenintensiv, platzraubend) nötig.
- Weitere Vorteile sind:
   Einstellbarkeit (der Zentrierung)
   Pro Belagseite die Federkonstante anpassbar, wodurch unterschiedlich für innen/außen und an Umgebung - in Grenzen - besser anpassbar Einbau über mittleren Zentrierbügel - kompensiert ungleichen Kraftaufbau Evtl. "aktive" Sattelzentrierung
   Aktive Belagbefederung durch "Gabel" am Ende der Spinne

Eine weitere Ausführung sieht vor, dass die Spreizeinrichtung zumindest ein zusätzliches Rückstellelement aufweist, welches zusätzlich zu dem Angriffspunkt/den Angriffspunkten der Federarme in einem weiteren Angriffspunkt an der jeweiligen Belagträgerplatte eines Bremsbelags angreift. Dies ist vorteilhaft, da auf diese Weise eine unterstützte Rückstellung der Bremsbeläge bewirkt werden kann. Ein Restschleifmoment kann damit verhindert werden.

Das zumindest eine Rückstellelement kann in einer Ausführung über den Haltebügel an dem Haltebogen befestigt sein. Das ergibt einen kompakten Aufbau und Zeitersparnis beim Einbau.

Alternativ kann das zumindest eine zusätzliche Rückstellelement an einem Belaghaltebügel angebracht sein, auf den es nur aufgeschoben, aufgesteckt oder aufgeklipst werden kann. Das ergibt eine einfache Montage.

In einer Ausführung ist das zumindest eine Rückstellelement mit einem oberen Halteende in einer Öffnung des Belaghaltebügels an einer zuspannseitigen Wand der Öffnung angeordnet und mit einem unteren Druckabschnitt eine Druckseite der Belagträgerplatte eines rückenseitigen Bremsbelags kontaktiert. Dies ergibt einen kompakten und platzsparenden Aufbau.

Es ist auch möglich, dass das zumindest eine Rückstellelement einen Federarm, dessen oberes Ende über einen Federwickel mit einem Befestigungsabschnitt an einem zuspannseitigen Halteende des Belaghaltebügels angebracht ist, und ein unteres Ende des Federarms, das über einen weiteren Federwickel mit einem Einspannende verbunden ist, aufweist, wobei das Einspannende mit einem Halteabschnitt an der Druckseite der Belagträgerplatte des zuspannseitigen Bremsbelags in Eingriff steht. Dadurch ist eine einfache Anpassung an Rückstellwege möglich.

Hierbei sind die Federwickel als Spiralfedern mit parallelen Längsachsen, die tangential zur Bremsscheibe verlaufen, ausgebildet, wodurch ein kompakter Aufbau ermöglicht ist.

In einer anderen Ausführung kann das zumindest eine Rückstellelement an einem zuspannseitigen Halteende des Belaghaltebügels angebracht sein und einen Federarm aufweisen, der mit einer Federeinheit verbunden ist, die wiederum mit einem Halteabschnitt an der Druckseite der Belagträgerplatte des zuspannseitigen Bremsbelags in Eingriff steht. Hiermit kann auch eine Anpassung an größere Rückstellwege einfach erzielt werden.

Alternativ kann vorgesehen sein, dass das zumindest eine Rückstellelement eine Federeinheit ist, die an einer Bodenplatte eines Zuspannabschnitts angebracht ist und mit einem Halteabschnitt an der Druckseite der Belagträgerplatte des zuspannseitigen Bremsbelags in Eingriff steht, wodurch größere Rückstellwege erreicht werden können.

Die Federeinheit kann als eine Evolutfeder ausgebildet sein.

In einer weiteren Ausführung ist das zumindest eine Rückstellelement aus mindestens zwei Federeinheiten gebildet, von denen beide Federeinheiten mit jeweils einem Federende mit einem Halteabschnitt an der Druckseite der Belagträgerplatte des zuspannseitigen Bremsbelags in Eingriff stehen, und wobei die mindestens zwei Federeinheiten in einer Ebene angeordnet sind.

Alternativ können die anderen Federenden der mindestens zwei Federeinheiten jeweils an einer Bodenplatte eines Zuspannabschnitts des Bremssattels angebracht sein.

Es ist auch möglich, dass das andere Federende der einen Federeinheit der mindestens zwei Federeinheiten an einem Belaghaltebügel angebracht ist, wobei das andere Federende der anderen Federeinheit der mindestens zwei Federeinheiten an einer Bodenplatte eines Zuspannabschnitts des Bremssattels angebracht ist. Diese obigen Lösungen mit zwei Federn bringen den Vorteil, dass große Rückstellwege bei kleinem Bauraum möglich sind.

Eine noch andere Ausführung sieht vor, dass das mindestens eine Rückstellelement mindestens eine Zugfeder ist, die in einer Bohrung im Zuspannabschnitt des Bremssattels aufgenommen und mit einem Federende in der Bohrung festgelegt ist, wobei das andere Federende mit einem Halteabschnitt an der Druckseite der Belagträgerplatte eines zuspannseitigen Bremsbelags in Eingriff steht. Hierbei können schon vorhanden Bohrungen für Befestigungsschrauben der Bodenplatte verwendet werden, wodurch ein kompakter Aufbau möglich wird.

In einer noch weiteren Ausführung können vorteilhaft lange Rückstellwege durch ein selbstjustierendes Rückstellelement bewältigt werden. Hierbei ist vorgesehen, dass das mindestens eine an dem Belaghaltebügel angebrachte Rückstellelement als ein selbstjustierendes Rückstellelement mit einer Rasteinrichtung versehen ist, die mit einem Rastabschnitt des Belaghaltebügels in Zusammenwirkung steht.

Eine andere Ausführung sieht vor, dass das mindestens eine an dem Belaghaltebügel angebrachte Rückstellelement beidseitig an einem rückenseitigen Halteende des Belaghaltebügels mit jeweils einem Einspannende angebracht ist, wobei die Einspannenden jeweils mit einem sich zur Bremsscheibe tangential erstreckenden Federarm verbunden sind, dessen anderes jeweiliges Ende im Bereich der Seiten der Belagträgerplatte um 90° nach unten abgebogen und als vertikaler Federarm ausgebildet ist und jeweils mit einem nach außen umgebogenen Federende jeweils mit einem seitlichen Halteabschnitt an der Druckseite einer Belagträgerplatte eines rückenseitigen Bremsbelags in Eingriff steht. Dieser Aufbau ist bei einer Drahtausführung der Federelemente kompakt und einfach.

Wenn der zumindest eine Befestigungsabschnitt des Haltebogens mit einem Falzabschnitt versehen ist, welcher mit einem Kragen eines Faltenbalgs eines Führungsholms des Bremssattels derart in Kontakt steht, dass der Kragen in einer Nut des Führungsholms des Bremssattels fixiert ist, kann ein üblicher Sicherungsring eingespart werden, wodurch sich eine Teilezahl verringert.

In einer Ausführung ist vorgesehen, dass eine Verbindung für ein Rückstellelement mit der Belagträgerplatte eines Bremsbelags eine Halteplatte mit einer Öse aufweist, wobei die Halteplatte zwischen einem Reibbelag und einer Belagseite der Belagträgerplatte angeordnet ist, und wobei sich die Öse durch eine Durchgangsöffnung durch die Belagträgerplatte hindurch erstreckt und von einer Druckseite der Belagträgerplatte hervorsteht. Dies ist eine einfache Alternative zu einer Gussherstellung der Belagträgerplatte mit Kernen und eventueller Nachbearbeitung, wodurch die dazu notwendigen Kosten entfallen können.

Eine Ausführung der Bremsbeläge sieht vor, dass jeweils ein länglicher Zwischenraum zwischen einem Reibbelag und einer Belagseite der jeweiligen Belagträgerplatte angeordnet ist, wodurch eine einfache Kontaktierung für die Federarme von weiteren Rückstellelementen geschaffen ist.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
Figur 1 eine perspektivische Ansicht eines Ausführungsbeispiels einer nicht erfindungsgemäßen Scheibenbremse mit einer Rückstelleinrichtung;
Figur 2 eine perspektivische Ansicht eines Ausführungsbeispiels einer erfindungsgemäßen Scheibenbremse mit Rückstelleinrichtung;
Figur 2a eine perspektivische Ansicht einer Variante der Rückstelleinrichtung nach Figur 2;
Figur 3-3a perspektivische Ansichten einer ersten Funktionsgruppe der Rückstelleinrichtung des Ausführungsbeispiels der Scheibenbremse nach Figur 2;
Figuren 3b-6 schematische Ansichten der ersten Funktionsgruppe nach Figur 3 mit einer zweiten Funktionsgruppe;
Figuren 7-13 schematische Ansichten einer Variante der zweiten Funktionsgruppe nach Figuren 3b-6;
Figuren 14-18 perspektivische Ansichten von Rückstellelementen der zweiten Funktionsgruppe der Rückstelleinrichtung nach Figuren 7-13;
Figuren 19-28 perspektivische Ansichten von weiteren Rückstellelementen der zweiten Funktionsgruppe der Rückstelleinrichtung nach Figuren 7-13;
Figuren 29-37 perspektivische Ansichten von selbstjustierenden Rückstellelementen der zweiten Funktionsgruppe der Rückstelleinrichtung nach Figuren 7-13;
Figuren 38-39 perspektivische Ansichten eines weiteren Rückstellelementes der zweiten Funktionsgruppe;
Figuren 40-48 perspektivischen Ansichten von Verbindungen von Rückstellelementen der zweiten Funktionsgruppe an Bremsbelägen; und
Figuren 49-54 Ansichten einer weiteren Funktionsgruppe der Rückstelleinrichtung.

Die Begriffe "oben", "unten", "links", "rechts" beziehen sich auf die jeweilige Anordnungen in den Figuren.

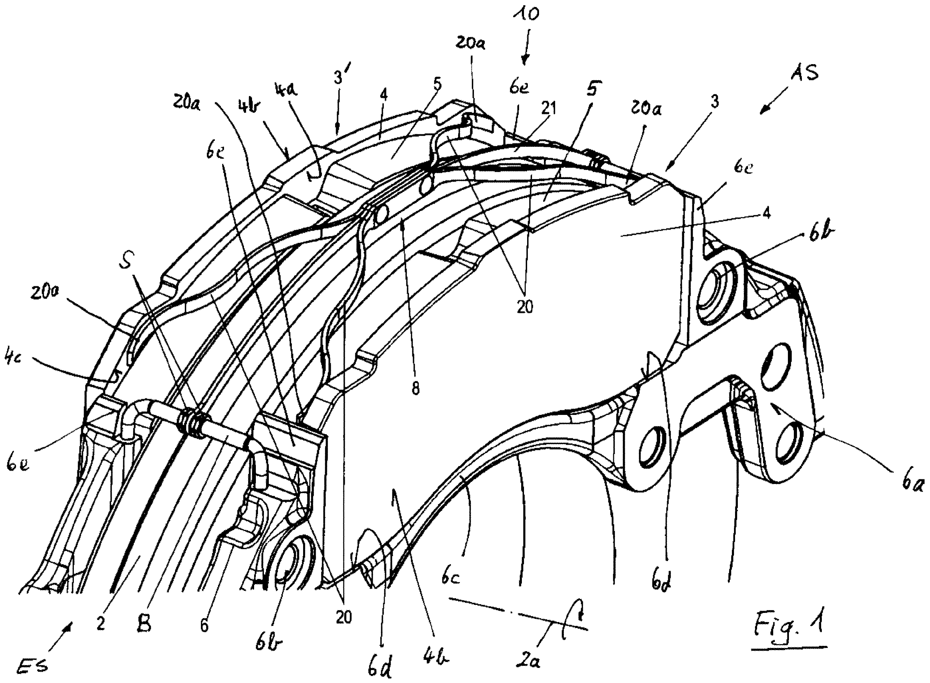

Eine "Oberseite" und eine "Unterseite" eines Bremsbelags 3, 3' bzw. einer Belagträgerplatte 4 beziehen sich immer auf die Einbausituation des jeweiligen Bremsbelags 3, 3'. Dabei liegt die Unterseite des jeweiligen Bremsbelags 3, 3' in radialer Richtung näher an einer Bremsscheibendrehachse 2a als die Oberseite dieses Bremsbelags 3, 3', wie z.B. aus Figur 1 deutlich hervorgeht.

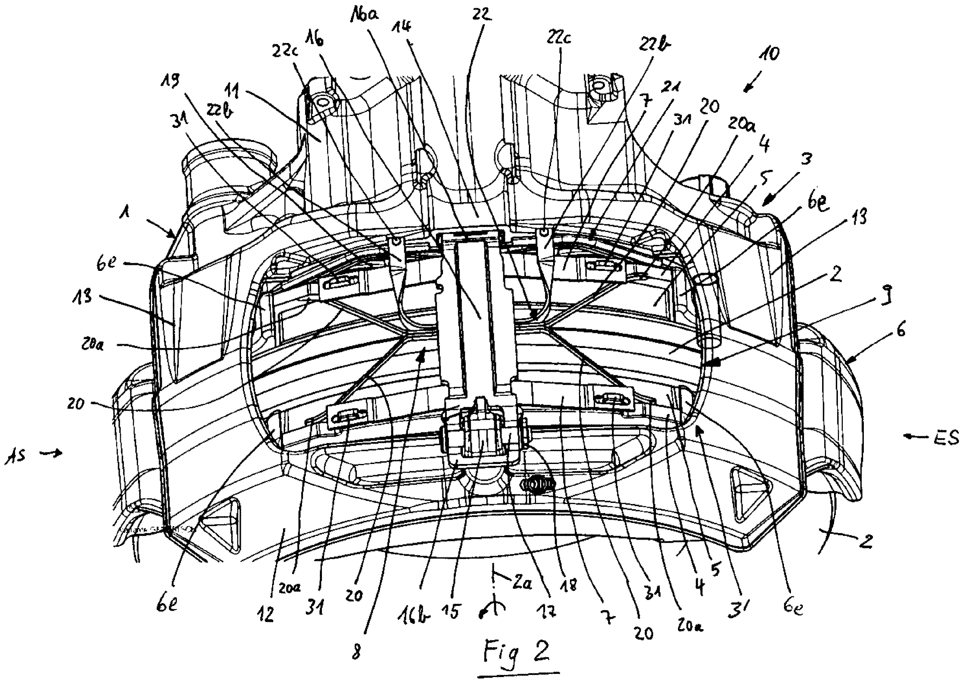

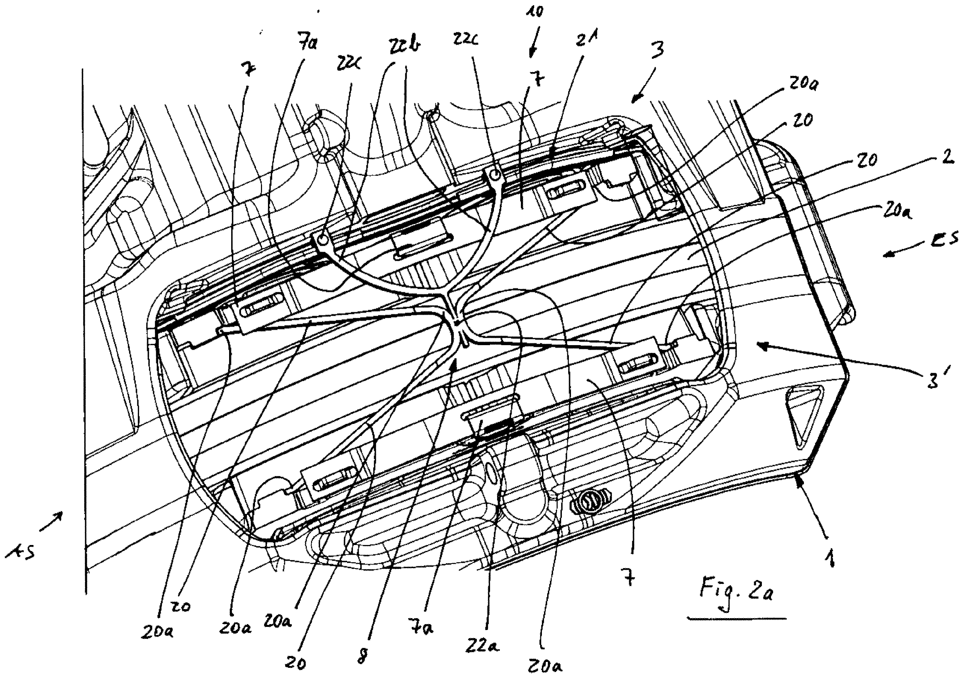

**Figuren 1** **und** **2** zeigen perspektivische Ansichten von Ausführungsbeispielen einer erfindungsgemäßen Scheibenbremse 10 mit einer Rückstelleinrichtung aus verschiedenen Blickwinkeln von oben.

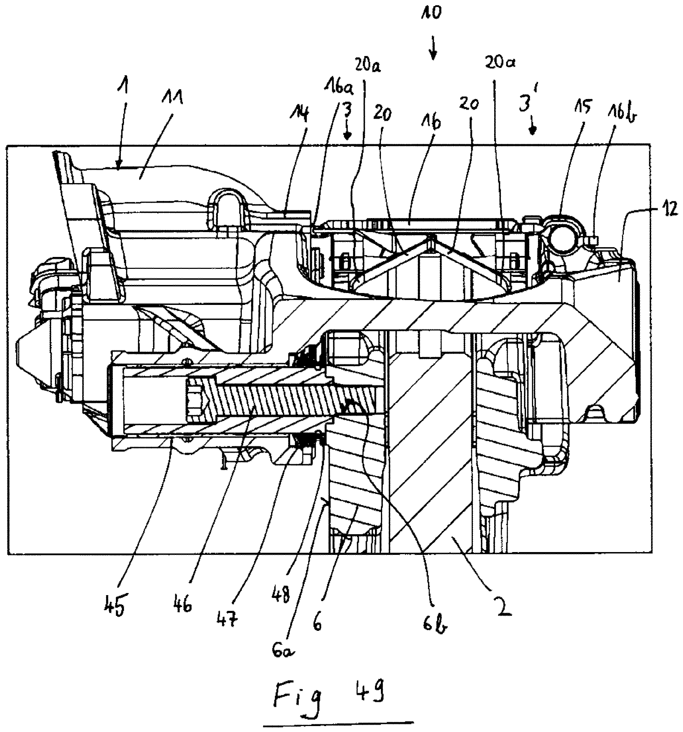

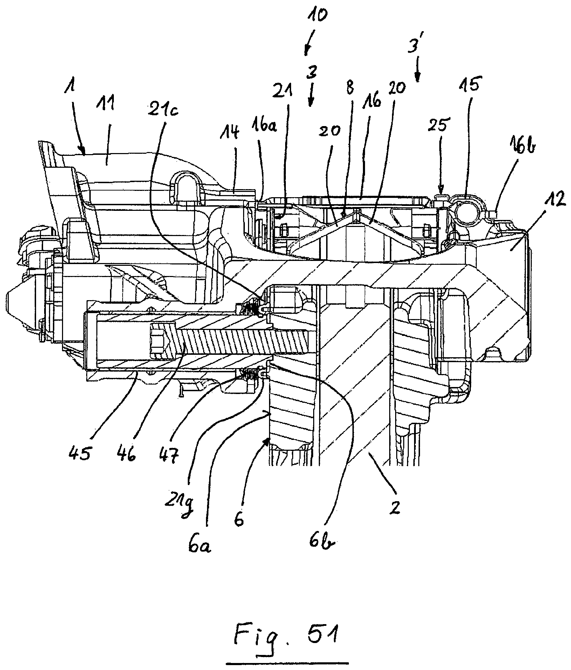

Ein Bremssattel 1 übergreift eine Bremsscheibe 2 mit einer Bremsscheibendrehachse 2a. Der Bremssattel 1 ist bezogen auf die Bremsscheibe 2 axial in Richtung der Bremsscheibendrehachse 2a verschiebbar an einem Bremsträger 6 angebracht, wozu der Bremssattel 1 auf Lagerholmen 45 (siehe Figuren 49 und 51) gelagert ist, die mit dem ortsfest am Fahrzeug gehaltenen Bremsträger 6 verbunden sind.

In **Figur 1** ist der Bremsträger 6 mit der Bremsscheibe 2, ihrer Bremsscheibendrehachse 2a und Bremsbelägen 3, 3' in einer Ansicht von einer Zuspannseite her gezeigt. Eine Befestigungsseite 6a des Bremsträgers 6 ist mit einem nicht gezeigten ortsfesten Bauteil eines zuzuordnenden Fahrzeugs verbunden. Zudem weist der Bremsträger 6 Lageraufnahmen 6b für die Lagerholme 45 (Figuren 49 und 51) für die Lagerung des Bremssattels 1 und einen zuspannseitigen geschwungenen Brückenverbinder 6c auf.

Zudem ist in Figur 1 eine Spreizeinrichtung 8 mit vier Federarmen 20 und einem Haltebogen 21 dargestellt. Die Spreizeinrichtung 8 besteht hier aus zwei identischen Federarmen 20, die im Mittenbereich miteinander verbunden sind, ebenso wie mit einem Haltebogen 21, der über Bügel B am Bremsträger 6, und zwar an den Bremsträgerhörnern 6e befestigt ist. Zur axialen Sicherung des Haltebogens 21 sind auf dem Bügel B, das jeweilige Ende des Haltebogens 21 zwischen sich einklemmend, Sicherungen S vorgesehen.

Hierbei liegen die Federarme 20 an zwei sich gegenüberliegenden Endbereichen der Belagträgerplatte 4 an und zwar in einem oberseitig vorstehenden Randbereich, der hier als Auflagefläche 4c bezeichnet ist. Die Enden der Federarme 20 sind gleichfalls zu Druckabschnitten 20a gebogen, so dass ein Gleiten an der Belagträgerplattenfläche beim Zuspannen und Lösen der Bremse problemlos möglich ist. Hierbei wird durch die beim Zuspannen sich ergebende Vorspannung eine Spreizung der Bremsbeläge 3, 3' nach einem Lösen der Bremse möglich.

Die Spreizeinrichtung 8 wird unten noch in einer weiteren Ausführung im Detail erläutert.

Der Bremssattel 1 umfasst einen Zuspannabschnitt 11, einen Sattelrücken 12 und zwei Zugstreben 13. Der Zuspannabschnitt 11 verläuft mit einer Seite parallel zu der Ebene der Bremsscheibe 2 auf einer Seite der Bremsscheibe 2. Auf der anderen Seite der Bremsscheibe 2 ist, ebenfalls parallel zu der Bremsscheibe 2 verlaufend, der Sattelrücken 12 angeordnet. Der Sattelrücken 12 ist mit dem Zuspannabschnitt 11 an jeweils einem Ende mit jeweils einer Zugstrebe 13 verbunden. Die Zugstreben 13 verlaufen dabei im Wesentlichen rechtwinklig zum Zuspannabschnitt 11 und zum Sattelrücken 12.

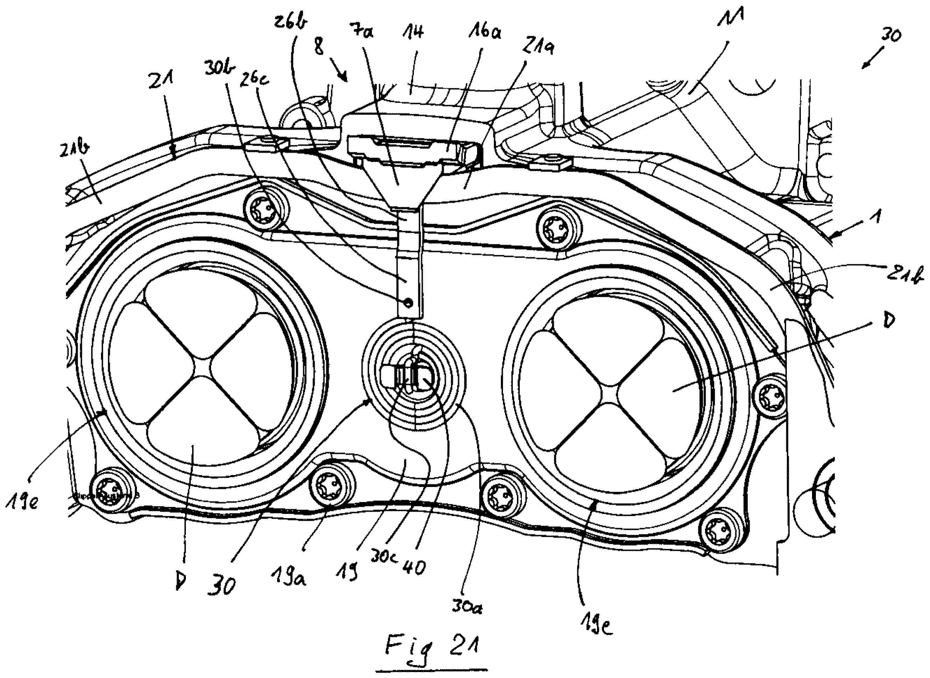

Der Zuspannabschnitt 11 weist einen Innenraum auf, in welchem eine nicht gezeigte Zuspanneinrichtung der Scheibenbremse 10 angeordnet ist. Eine Öffnung des Innenraums weist zur Bremsscheibe 2 und ist mit einer Platte, die als Bodenblech 19 bezeichnet wird, verschlossen (siehe Figur 2 und z.B. Figur 21).

Der Zuspannabschnitt 11, der Sattelrücken 12 und die Zugstreben 13 legen in dieser Anordnung eine zentrale Öffnung 9 zwischen sich fest, welche die Bremsscheibe 2 überspannt. Die Öffnung 9 weist eine gedachte Längsmittellinie auf, welche in der Ebene der Bremsscheibe 2 liegt und die gedachten Mitten der Zugstreben 13 verbindet. Außerdem weist die Öffnung 9 eine weitere gedachte Quermittellinie auf, welche eine gedachte Mitte des Zuspannabschnitts 11 eine gedachte Mitte des Sattelrückens 12 verbindet. Die Längsmittellinie und die Quermittellinie schneiden sich in einem gedachten Mittelpunkt, welcher hier als virtuelle Mitte der Öffnung 9 bezeichnet wird.

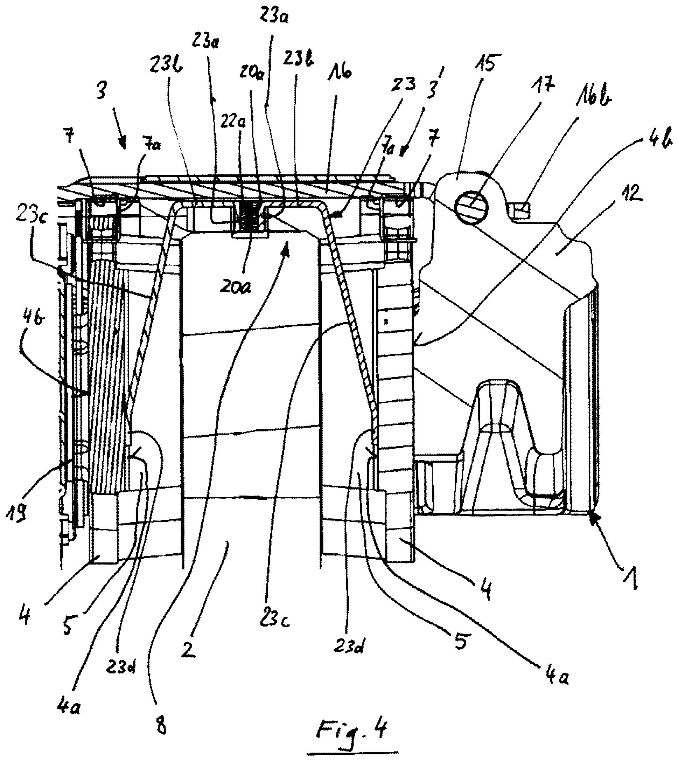

In dem Bremsträger 6 sind Bremsbeläge 3, 3' in den so genannten Belagschächten zwischen den jeweiligen zwei Bremsträgerhörnern 6e angeordnet und liegen mit Abschnitten ihrer Unterseiten auf einem jeweiligen Belagschachtboden 6d auf. Dies ist in Figur 1 deutlich erkennbar. Die Bremsbeläge 3, 3' sind im Fall einer Bremsung beidseitig an die Bremsscheibe 2 anpressbar. Dabei weist jeder Bremsbelag 3, 3' eine Belagträgerplatte 4 und einen auf der der Bremsscheibe 2 zugewandten Seite daran befestigten Reibbelag 5 auf einer Belagseite 4a (siehe Figur 4) auf, der in Funktion, also bei einer Bremsung, gegen die Bremsscheibe 2 gepresst ist. Die andere Seite der Belagträgerplatte 4 wird im Weiteren als Druckseite 4b bezeichnet.

Die Bremsbeläge 3, 3' sind durch die zentrale Öffnung 9 für einen Wechsel und zur Wartung erreichbar. Sie können durch diese zentrale Öffnung 9 in ihre zugehörigen Belagschächte eingesetzt und wieder daraus entnommen werden. Die Belagschächte sind jeweils seitlich durch Bremsträgerhörner 6e festgelegt, wobei die Bremsbeläge 3, 3' jeweils mit Teilabschnitten ihrer Unterseiten auf einem Belagschachtboden 6d stehen.

Ein Drehpfeil um die Bremsscheibendrehachse 2a deutet eine Hauptdrehrichtung für Vorwärtsfahrt eines Fahrzeugs, dem die Scheibenbremse 10 zugeordnet ist, an. In Bezug auf die Hauptdrehrichtung der Bremsscheibe 2 sind an der Scheibenbremse 10 eine Einlaufseite ES und gegenüberliegend eine Auslaufseite AS festgelegt. Dementsprechend werden die Bremsträgerhörner 6e an der Einlaufseite ES einlaufseitige Bremsträgerhörner 6e und an der Auslaufseite AS auslaufseitige Bremsträgerhörner 6e genannt.

Ein Belaghaltebügel 16 ist über den Bremsbelägen 3, 3' in Querrichtung der Öffnung 9 bzw. in Richtung der Bremsscheibendrehachse 2a zwischen dem Zuspannabschnitt 11 und dem Sattelrücken 12 angeordnet. Ein zuspannseitiges Halteende 16a des Belaghaltebügels 16 ist in einem Halteabschnitt 14 an dem Zuspannabschnitt 11 des Bremssattels 1 befestigt, wobei ein gegenüberliegendes, rückenseitiges Halteende 16b des Belaghaltebügels 16 an einem Halteabschnitt 15 des Sattelrückens 12 festgelegt ist. Das rückenseitige Halteende 16b des Belaghaltebügels 16 ist hier an dem Halteabschnitt 15 durch ein bolzenartiges Sicherungselement 17 befestigt, welches durch ein nicht näher beschriebenes Klammerelement 18 gegen Lösen gesichert ist.

Der Belaghaltebügel 16 drückt hier mit Abschnitten seiner Unterseite auf Klammerelemente 7a beider Bremsbeläge 3, 3' und somit auch auf deren Belaghaltefedern 7, wodurch die Bremsbeläge 3, 3' in ihren Belagschächten gehalten werden. Die Belaghaltefedern 7 sind jeweils an den Belagträgerplatten 4 an Vorsprüngen 31 gehalten.

Die Bremsung erfolgt mittels der im Zuspannabschnitt 11 des Bremssattels 1 dort in einem Aufnahmeraum angeordneten Zuspanneinrichtung beispielsweise mit einem Bremshebel, der in einem Dom des Bremssattels 1 positioniert ist. Der zugeordnete Bremsbelag 3, als aktionsseitiger oder auch zuspannseitiger Bremsbelag bezeichnet, kontaktiert zunächst bei einer Bremsung die Bremsscheibe 2. Im weiteren Verlauf wird mittels auftretender Reaktionskräfte der Bremssattel 1 entgegengesetzt verschoben, unter Mitnahme des reaktionsseitigen Bremsbelags 3', bis dieser gleichfalls an der Bremsscheibe 2 reibend zur Anlage kommt. Der reaktionsseitige Bremsbelag 3' wird auch rückenseitiger Bremsbelag genannt und im weiteren durch das Bezugszeichen 3' von dem zuspannseitigen Bremsbelag 3 unterschieden.

Nach einem Lösen der Bremse werden die beiden sich gegenüberliegenden Bremsbeläge 3, 3' mittels der Rückstelleinrichtung so weit von der Bremsscheibe 2 gelöst, dass diese gegenüber den Bremsbelägen 3, 3' frei läuft.

Die Rückstelleinrichtung besteht hier aus zwei Funktionsgruppen. Die erste Funktionsgruppe umfasst die mindestens eine Spreizeinrichtung 8, wobei die zweite Funktionsgruppe mindestens ein Rückstellelement aufweist. Die beiden Funktionsgruppen sind hier gemeinsam vorhanden und unterstützen sich. Es ist aber auch möglich, dass nur eine der beiden Funktionsgruppen eingesetzt werden kann.

Die erste Funktionsgruppe greift mit der Spreizeinrichtung 8 im oberen Bereich der Belagträgerplatten 4 der sich gegenüberliegenden Bremsbeläge 3, 3' gleich wirkend entgegen der Zuspannrichtung an. Die zweite Funktionsgruppe übt mittels des Rückstellelementes/der Rückstellelemente im mittleren oder/und im unteren Bereich der Belagträgerplatten 4 der sich gegenüberliegenden Bremsbeläge 3, 3' jeweils Druck- oder/und Zugkräfte auf die Bremsbeläge 3, 3' ebenfalls entgegen der Zuspannrichtung aus. Auf diese Weise werden die Bremsbeläge 3, 3' sowohl in ihren oberen Bereichen als auch in ihren mittleren oder/und unteren Bereichen von der Rückstelleinrichtung gleichzeitig mit Rückstellkräften beaufschlagt.

Die Spreizeinrichtung 8 umfasst hier zwei identische Paare von Federarmen 20, einen Haltebogen 21 und einen Haltebügel 22. Der Haltebogen 21 ist hier ortsfest zwischen Bremsträger 6 und Lagerholmen 45 (siehe Figur 49 und 51) angebracht und bildet zusammen mit dem Haltebügel 22 eine Halterung für die Paare der Federarme 20.

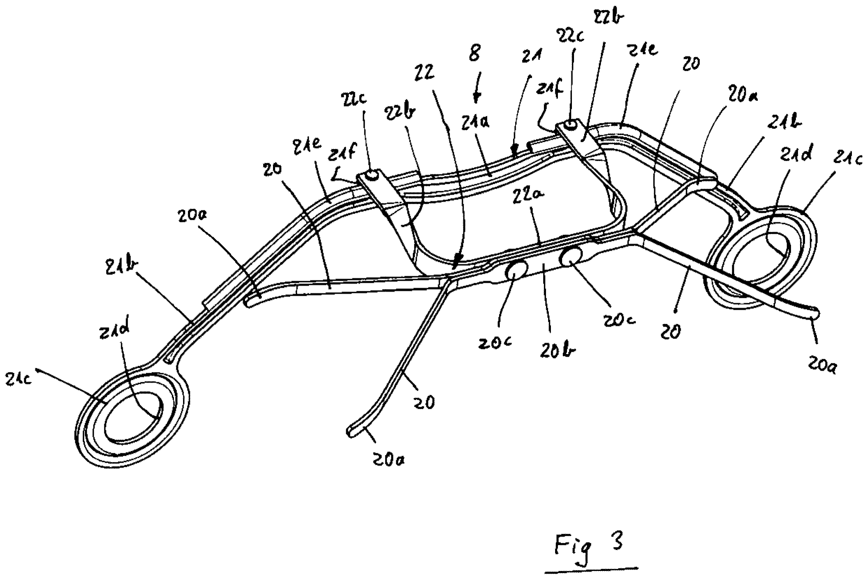

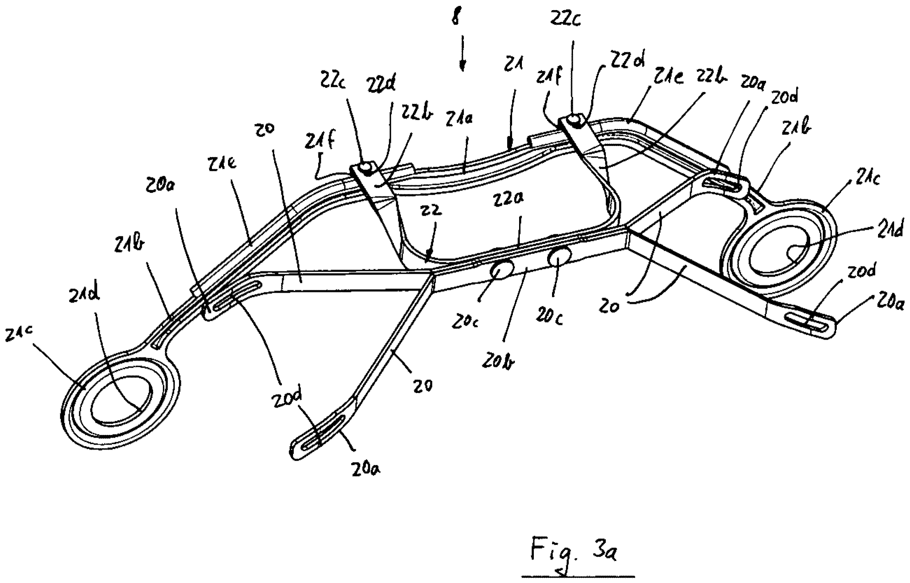

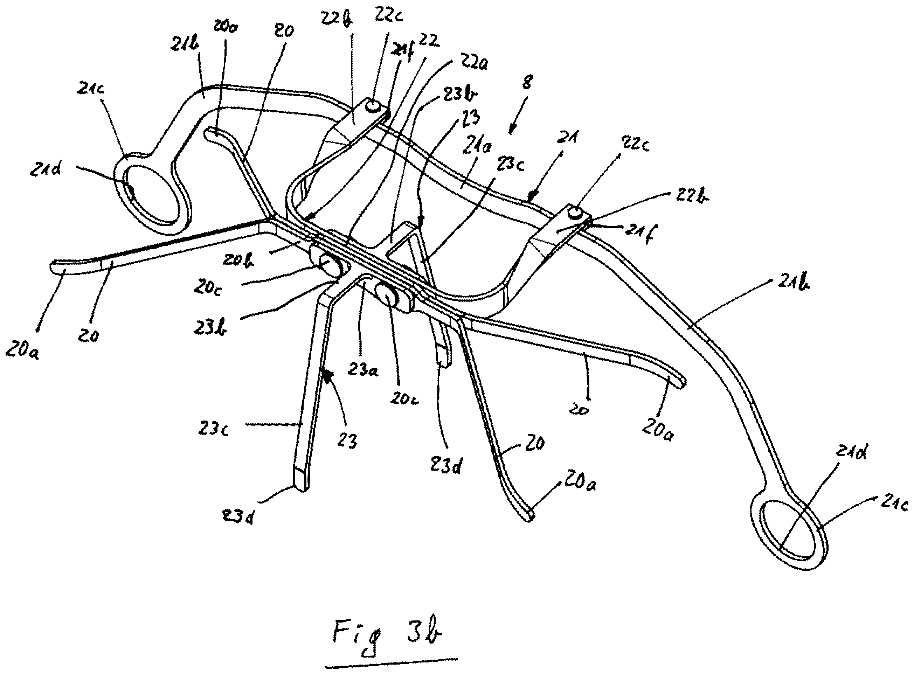

Jeweils ein Paar von Federarmen 20 wirkt mit einem Bremsbelag 3, 3' zusammen. Jedes Paar von Federarmen 20 weist einen zentralen Verbindungsabschnitt 20b (siehe Figur 3) auf, an welchem in Längsrichtung an beiden Enden jeweils ein Federarm 20 angebracht und von der Mitte zu dem jeweiligen Bremsbelag 3, 3' in gebogen ist. Die beiden Paare von Federarmen 20 sind mit ihren zentralen Verbindungsabschnitten 20b und einem Verbindungsabschnitt 22a des Haltebügels 22 in der Mitte der Öffnung fest verbunden. Die Verbindungsabschnitte 20a, 22a liegen parallel aneinander und in Ebenen der Bremsscheibe 2.

Der Haltebügel 22 weist zwei Haltearme 22b auf, von denen jeweils einer an jedem Ende des Verbindungsabschnitts 22a angebracht und zum Zuspannabschnitt 11 hin umgebogen ist. Die Haltearme 22b erstrecken sich bis über den Haltebogen 21, welcher im Bereich eines zuspannseitigen Rands der Öffnung 9 angeordnet ist, und sind mit diesem über Befestigungselemente 22c, z.B. Nieten, fest verbunden. Dies wird unten noch weiter erläutert.

**Figur 2a** zeigt eine perspektivische Ansicht einer Variante der Rückstelleinrichtung nach Figur 2. Hierbei sind die Paare von Federarmen 20 nicht längs, sondern quer in der Öffnung angeordnet, wobei der Verbindungsabschnitt 22a des Haltebügels 22 quer zur Öffnung 9, d.h. in Richtung der Bremsscheibendrehachse 2a verläuft und mit den beiden Federarmpaare zentral verbunden ist. Die Haltearme 22b des Haltebügels 22 verlaufen jeweils in einem Bogen zum Haltebogen 21.

**Figur 3 bis 3a** stellen perspektivische Ansichten der ersten Funktionsgruppe der Rückstelleinrichtung des Ausführungsbeispiels der Scheibenbremse 10 nach Figur 2 dar. Figur 3b-6 zeigen schematische Ansichten der ersten Funktionsgruppe nach Figur 3 mit einer zweiten Funktionsgruppe.

Der Haltebogen 21 umfasst einen leicht geschwungenen Zentralabschnitt 21a. An den Zentralabschnitt 21a schließt sich auf jeder Seite ein um etwa 45° nach unten verlaufender Bügelarm 21b an. An den freien Ende dieser beiden Bügelarme 21b ist jeweils ein kreisrunder Befestigungsabschnitt 21c mit einer Öffnung 21d angebracht. So erstreckt sich der Haltebogen 21 im eingebauten Zustand (Figur 2) mit seinen Bügelarmen 21b beidseitig jeweils bis zu den Lageraufnahmen 6b des Bremsträgers 6 auf dessen Befestigungsseite 6a (siehe Figur 1). Im eingebauten Zustand sind die Befestigungsabschnitte 21c mit den Öffnungen 21d koaxial zu den jeweiligen Lageraufnahmen 6b des Bremsträgers 6 angeordnet.

In der Ausführung nach Figur 3 sind die oberen Ränder der Bügelarme 21b bis über ihre Verbindungsabschnitte zu dem Zentralabschnitt 21a mit einer Verstärkung 21 versehen, in deren Endbereichen über den Enden des Zentralabschnitts 21a jeweils ein horizontales Auflager 21f, z.B. in Form einer Winkellasche, angebracht ist. Diese Auflage 21f dienen zur Verbindung mit den darauf aufliegenden Enden eines jeden Haltearms 22b des Haltebügels 22.

Der Haltebogen 21 bildet insofern eine Zentriereinrichtung für den Bremssattel 1, als der Bremsträger 6, an dem der Haltebogen 21 über die Lagerholme 45 (Figur 49 und 51) befestigt ist, ein ortsfestes Teil bildet, dem gegenüber der Bremssattel 1 verschieblich gelagert ist, so dass nach einem Lösen der Bremse und einem Spreizen der Spreizeinrichtung 8, d.h. einem Auseinanderdrücken der Bremsbeläge 3, 3' der Bremssattel 1 in eine zentrierte Stellung geführt wird.

Der Haltebogen 21 kann z.B. als ein Stanzbiegeteil hergestellt werden, wobei zur Versteifung geeignete Maßnahmen vorgesehen sein können, wie z.B. Versteifungen und Sicken u.dgl.

Die beiden Federarme 20 eines jeden Paars von Federarmen 20 sind hier spiegelbildlich zu einer gedachten Längsachse der Öffnung 9, die in einer Mittenebene der Bremsscheibe 2 liegt, angeordnet.

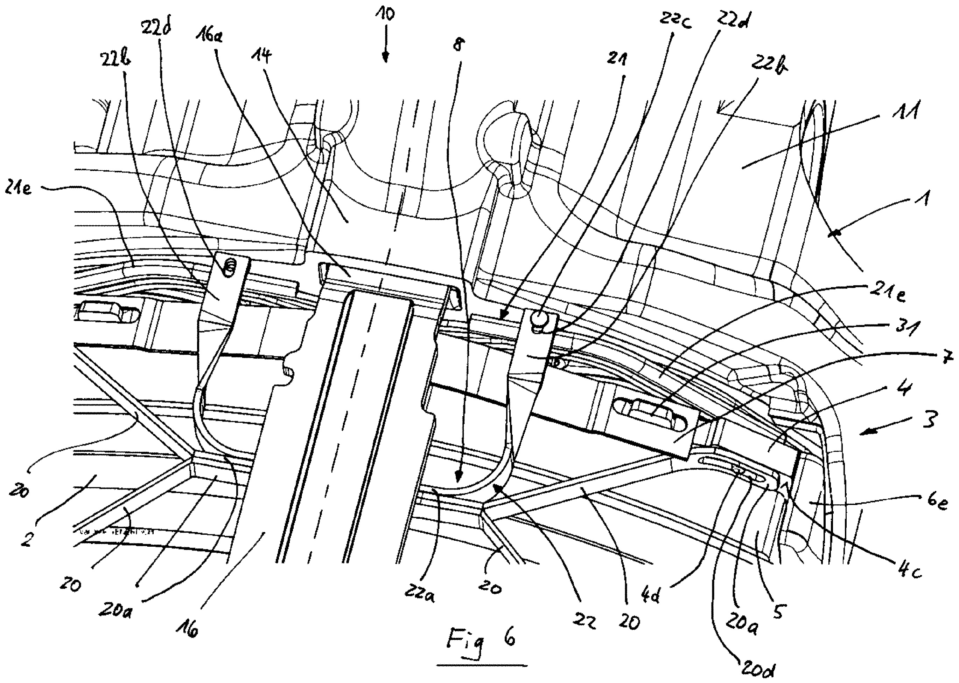

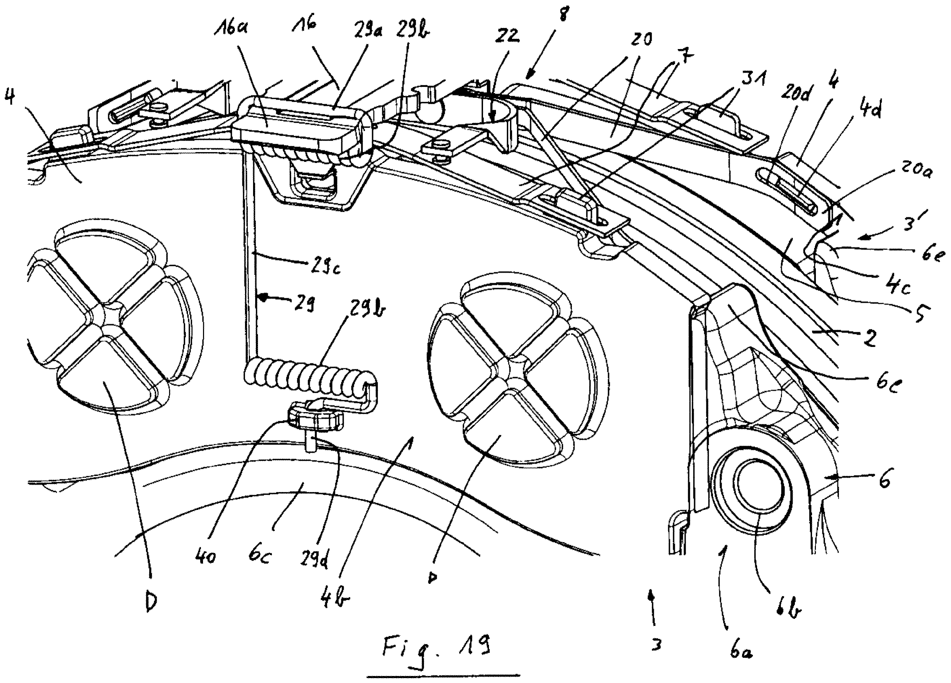

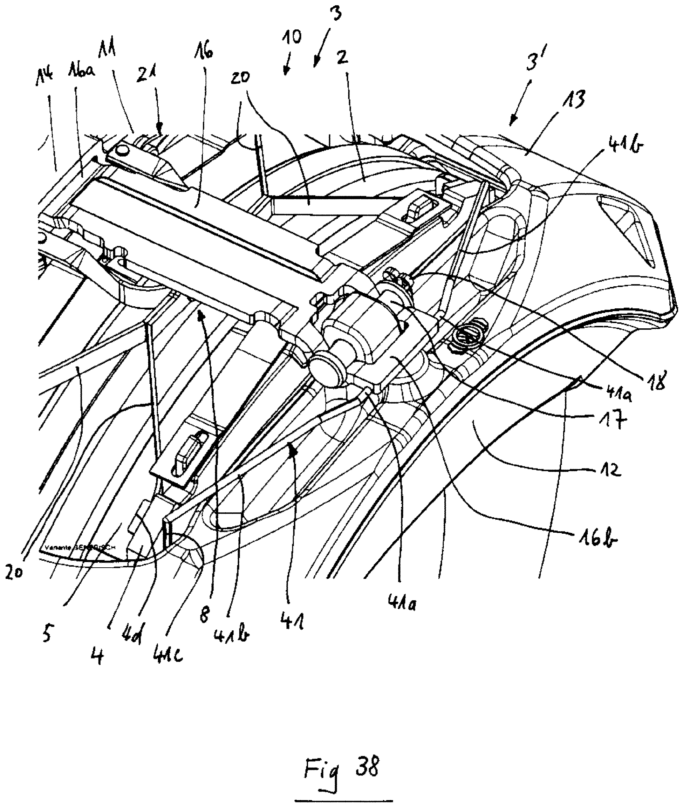

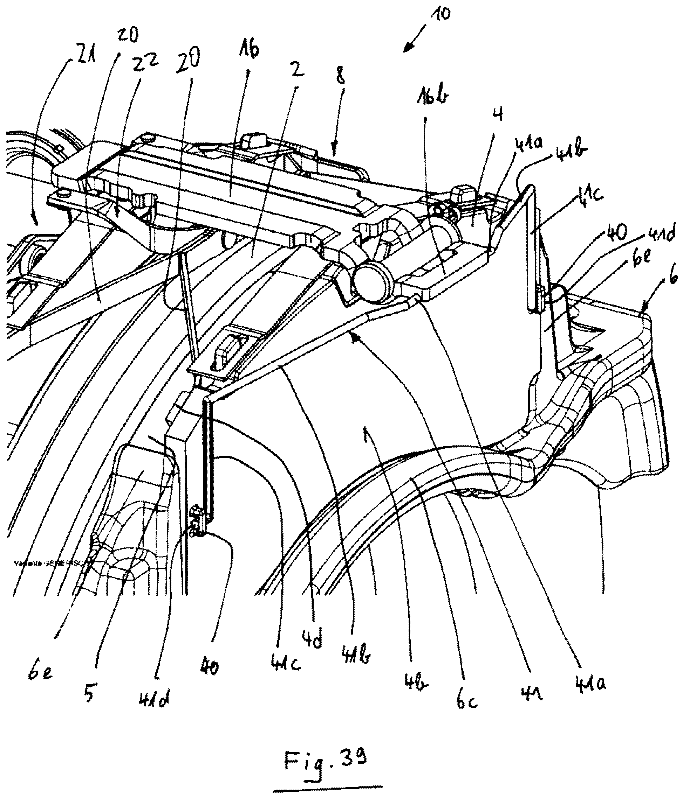

In Figur 3a ist eine Variante der Federarme 20 mit Druckabschnitten 20a gezeigt. Die Druckabschnitte 20a weisen hier Langlöcher 20d auf, welche mit Vorsprüngen der Belagträgerplatten 4 zur Führung zusammenwirken. Dies ist z.B. in Figur 6 (zapfenartiger Vorsprung 4d) und Figur 19 (prismenartiger Vorsprung 4d) gezeigt. Es ist auch möglich, dass die oberen Kanten der Druckabschnitte 20a von einem geeigneten Vorsprung an der Oberseite der Belagträgerplatte 4 geführt werden, wie in den Figuren 38 und 39 zu erkennen ist.

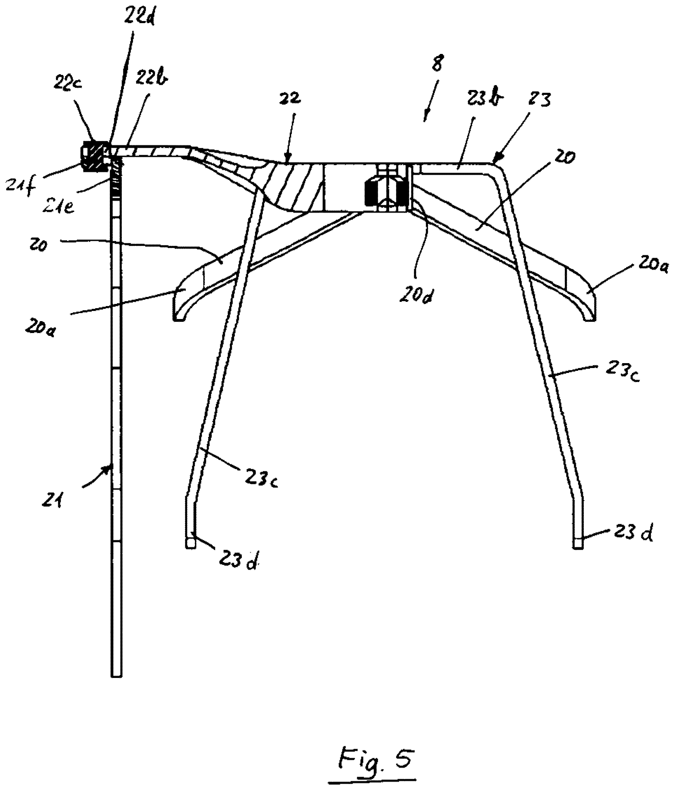

Der Haltebügel 22 wird bei der Montage der Scheibenbremse 10 zwischen den Lagerholmen 45 und der Befestigungsseite 6a des Bremsträgers 6 wie oben beschrieben angeordnet bzw. eingelegt und verschraubt. Die eigentliche Zusammenführung und Einstellung der Spreizeinrichtung 8 findet erst beim Kunden statt. Dabei wird das Lüftspiel zwischen Bremsscheibe 2 und den Bremsbelägen 3, 3' durch Zuspannen auf 0 mm gestellt und das Federpaket mit den Federarmen 20 und Haltebügel 22 zwischen die Bremsbeläge 3, 3' eingespannt. Durch ein Langloch 22d im Haltebügel 22 kann sich die Spreizeinrichtung 8 zwischen den Bremsbelägen 3, 3' zentrieren und ist somit exakt zur Scheibenmitte ausgerichtet. Dies ist in einer Schnittansicht in einer Vertikalebene durch einen Haltearm 22b des Haltebügels in **Figur 5** und in einer Draufsicht der Scheibenbremse 10 in **Figur 6** dargestellt Die Langlochverbindung wird danach mittels der Befestigungselement 22c fixiert. Zuletzt wird das Lüftspiel wieder eingestellt und die Spreizeinrichtung ist betriebsbereit.

In den Figuren 3b-6 sind schematische Ansichten der ersten Funktionsgruppe nach Figur 3 mit einer zweiten Funktionsgruppe dargestellt.

**Figur 3b** zeigt zwei Rückstellelemente 23, welche spiegelbildlich ausgeführt und auch spiegelbildlich an der Spreizeinrichtung 8 befestigt sind.

Jedes Rückstellelement 23 umfasst einen Verbindungsabschnitt 23a, einen Haltearm 23b, einen Federarm 23c und einen Druckabschnitt 23d. Der Verbindungsabschnitt 23a verläuft in einer Ebene der Bremsscheibe 2 und somit parallel zu den Verbindungsabschnitten 20b der Federarme 20 und des Verbindungsabschnitts 22a des Haltebügels 22. Rechtwinklig dazu ist der Haltearm 23b an dem Verbindungsabschnitt 23a angebracht und verläuft hier horizontal nach außen, d.h. in Richtung der Bremsscheibendrehachse 2a (im eingebauten Zustand der Spreizeinrichtung 8). An dem freien Ende des Haltearms 23b ist der Federarm 23c nach unten abgewinkelt angebracht. Der Federarm 23c weist an seinem freien Ende den Druckabschnitt 23d auf, der auch abgewinkelt sein kann, wie in Figur 3b zu erkennen ist.

Die Rückstellelemente 23 sind mit ihren Verbindungsabschnitten 23a jeweils an einer Längsseite eines Verbindungsabschnitts 20b und des Verbindungsabschnitts 22a des Haltebügels 22 angeordnet und gemeinsam mittels der Befestigungselement 20c, z.B. Nieten, untereinander fest verbunden.

**Figur 4** zeigt eine schematische Schnittansicht in einer Vertikalebene in der Bremsscheibendrehachse 2a. Die Rückstellelemente 23 stehen mit ihren Druckabschnitten 23d jeweils im unteren Bereich einer Belagseite 4a einer jeden Belagträgerplatte 4 in Kontakt, wobei sie jeweils eine Druckkraft auf die zugehörige Belagträgerplatte 4 in Richtung der Bremsscheibendrehachse 2a ausüben. Diese Druckkraft wirkt jeweils derart, dass zugehörigen Bremsbeläge 3, 3' von der Bremsscheibe 2 weg bewegt werden.

In Figur 6 sind in der Draufsicht auf die Scheibenbremse 10 mit der Spreizeinrichtung 8 die Langlöcher 22d an den Enden der Haltearme 22b des Haltebügels 22 deutlich zu erkennen. Zudem ist eine Führung eines Druckabschnitts 20a eines Federarms 20 durch einen zapfenartigen Vorsprung 4d zu sehen. Der Vorsprung 4d ist in dem Langloch 20d des Druckabschnitts 20a angeordnet und bewirkt auf diese Weise eine Führung des Federarms 20, wobei auch ein Abrutschen des Druckabschnitts 20a, z.B. durch Vibrationen etc., verhindert werden kann. Der Druckabschnitt 20a (und natürlich auch die anderen Druckabschnitte 20a, die hier nicht dargestellt sind) liegt dabei auf der Auflagefläche 4c der Belagseite 4b der Belagträgerplatte 4 auf.

Die Rückstellelemente 23 (und ebenfalls die weiter unten beschriebenen Varianten) bewirken eine Unterstützung der Rückstellung der Bremsbeläge 3, 3' von der Bremsscheibe 2 nach einem Bremsvorgang. Dabei greifen die Rückstellelemente 23 mit ihren Druckabschnitten 23d jeweils in einem unteren Bereich an der zugehörigen Belagträgerplatte 4 zusätzlich zu dem Angriffspunkt/den Angriffspunkten an der Oberseite der Federarme 20 an, wobei die Rückstellelemente 23 mit ihren Verbindungsabschnitten 23a über den Haltebügel 22 und den Haltebogen 21 an einem zu ihnen relativ ortsfesten Abschnitt, nämlich an dem Bremsträger 6, verbunden sind.

In einer weiteren, nicht dargestellten aber leicht vorstellbaren, Variante der Spreizeinrichtung 8 können die Federarme 20 gebogen sein, dass ihre Druckabschnitte 20a mit den Langlöchern 20d über den Vorsprüngen 31 über den Belaghaltefedern 7 montiert sind. Mit anderen Worten, die Vorsprünge 31 erstrecken sich dann durch die entsprechend den Vorsprüngen 31 angepassten Langlöcher 20d der jeweiligen Druckabschnitte 20a der Federarme 20. Damit werden die Drucckräfte der Spreizeinrichtung 8 über die Vorsprünge 31 in die jeweilige Belagträgerplatte 4 eingeleitet.

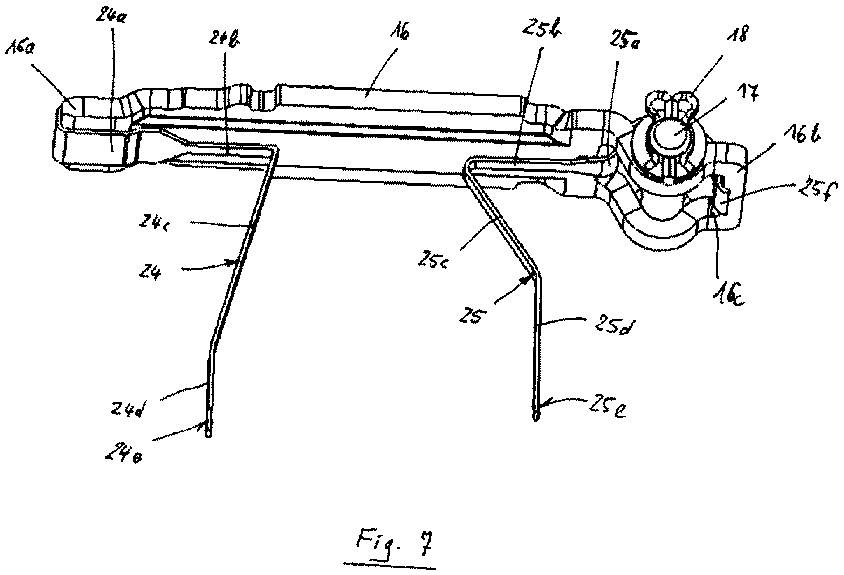

**Figuren 7-13** stellen schematische Ansichten einer Variante der zweiten Funktionsgruppe nach Figuren 3b-6 dar.

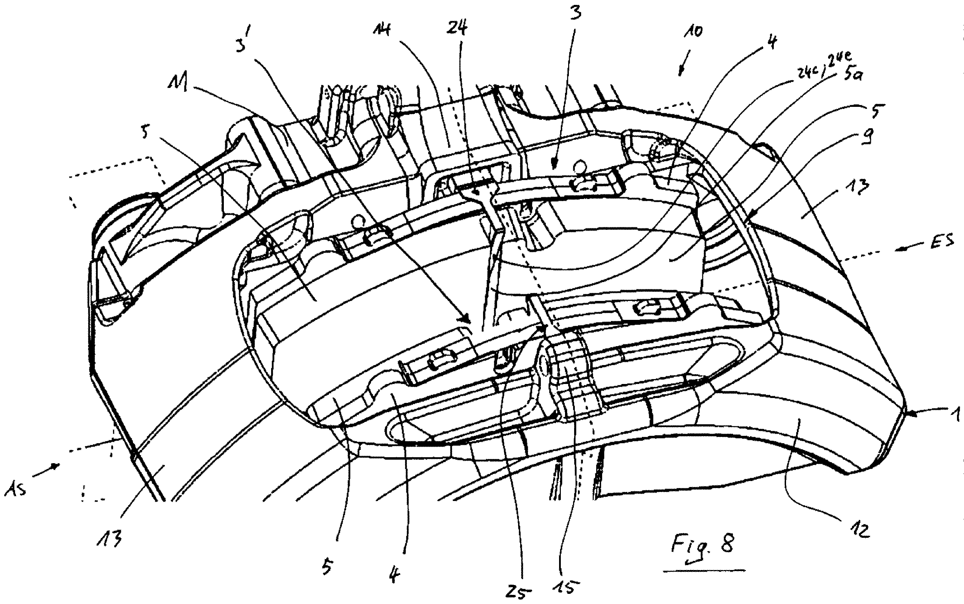

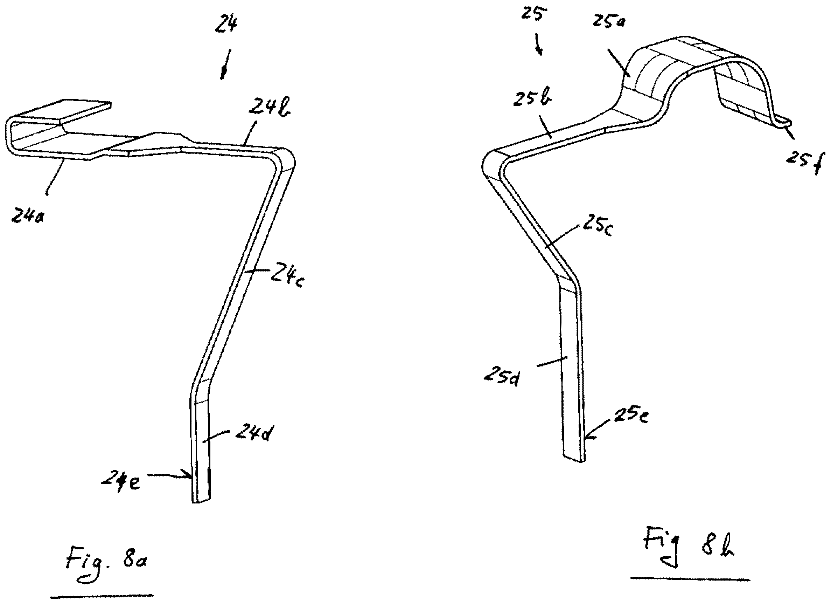

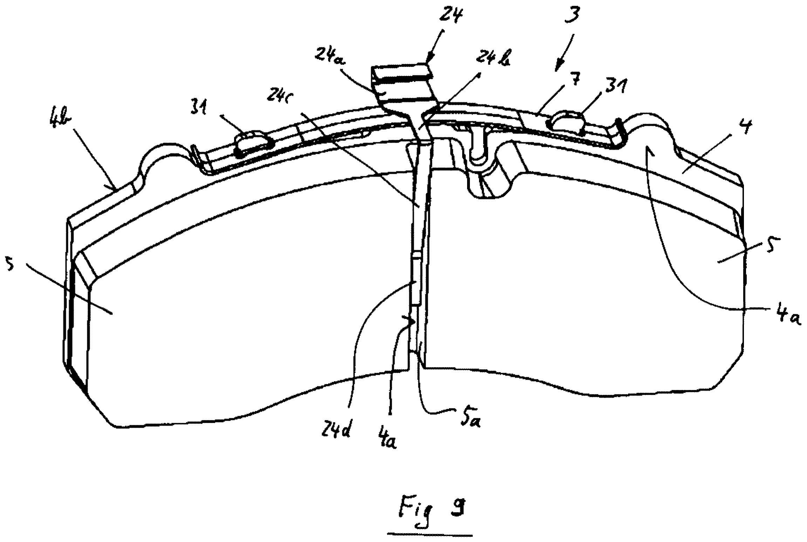

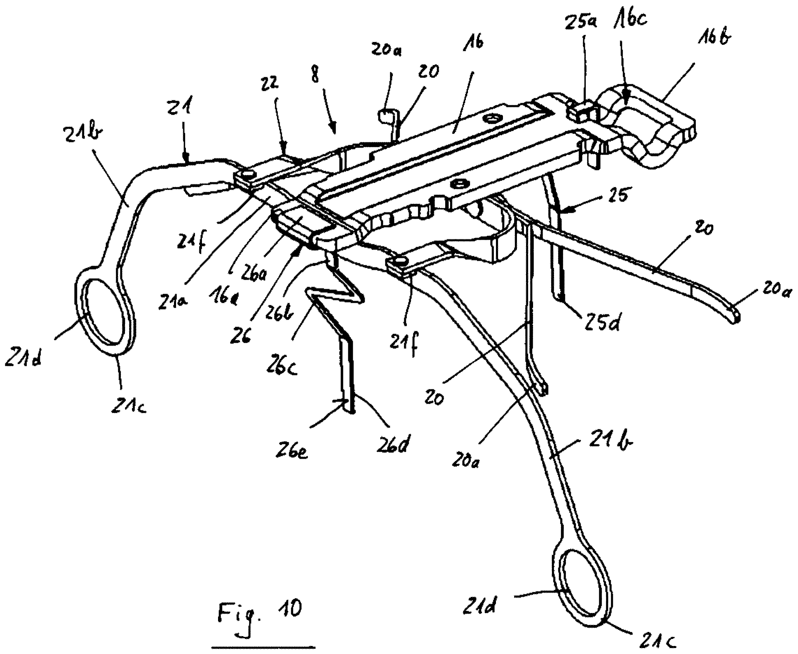

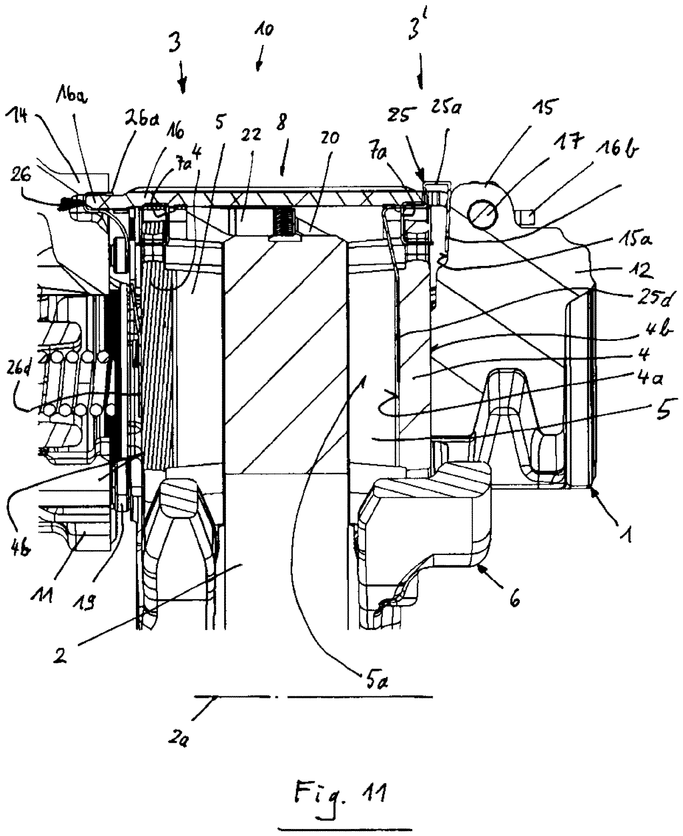

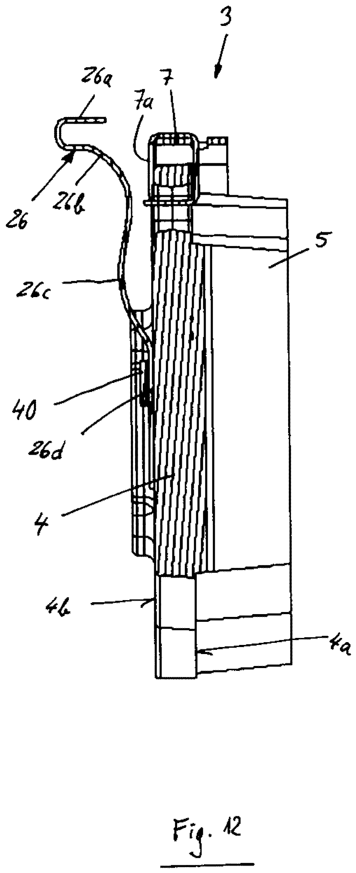

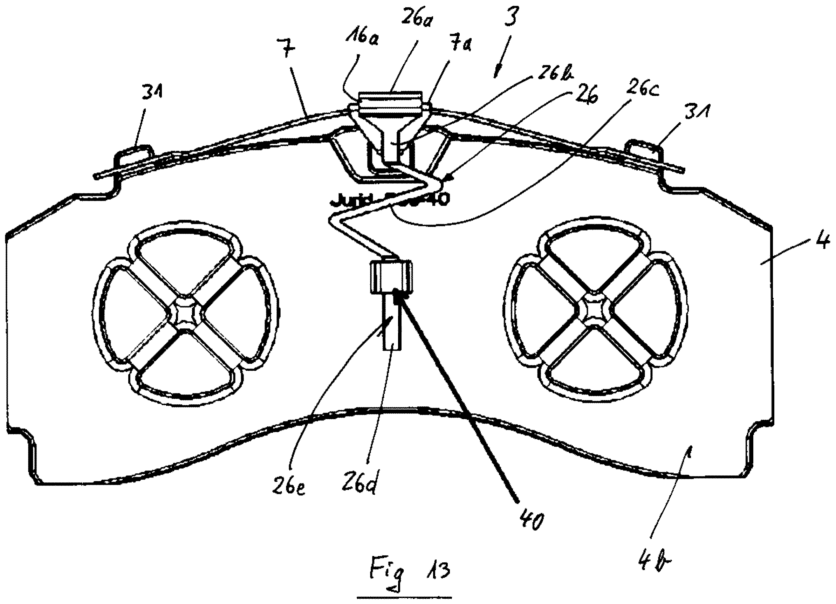

**Figur 7** zeigt eine perspektivische Ansicht einer Unterseite des Belaghaltebügels 16 mit an ihm angebrachten Rückstellelementen 24 und 25. **Figur 8** stellt eine Draufsicht einer Scheibenbremse 10 in einer Teilansicht mit der Anordnung der Rückstelleelemente 24 und 25 dar. **Figuren 8a und 8b** zeigen perspektivische Darstellungen der Rückstellelemente nach Figur 7. **Figur 9** zeigt die Belagseite des zuspannseitigen Bremsbelags 3 nach Figur 7. In **Figur 10** ist eine perspektivische Ansicht der Spreizeinrichtung 8 mit dem Belaghaltebügel 16 und daran befestigten Rückstellelementen gezeigt. **Figur 11** zeigt eine Schnittdarstellung dazu. **Figur 12** zeigt eine Schnittdarstellung des zuspannseitigen Bremsbelags 3 nach Figur 7, wobei **Figur 13** eine Ansicht der Druckseite des zuspannseitigen Bremsbelags 3 darstellt.

Ein zuspannseitiges Rückstellelement 24 ist hier an dem zuspannseitigen Halteende 16a des Belaghaltebügels 16 mit einem Befestigungsabschnitt 24a in Form einer U-förmigen Haube angebracht. Daran schließt sich ein Arm 24b an, der an der Unterseite des Belaghaltebügels 16 verläuft und dann in einen schräg nach unten zur Zuspannseite abgebogenen Federarm 24c übergeht, an dessen unterem Ende ein Druckabschnitt 24d mit einer zur Zuspannseite weisenden Druckfläche 24e vorgesehen ist.

An dem rückenseitigen Halteende 16b des Belaghaltebügels 16 ist ein rückenseitiges Rückstellelement 25 angebracht, dessen Befestigungsabschnitt 25a haubenförmig gebogen und mit einer Lasche 25f versehen ist, die durch eine Öffnung 16c im Halteende 16b des Belaghaltebügels 16 zur Fixierung des Rückstellelementes 25 greift. In ähnlicher Weise wie das zuspannseitige Rückstellelement 24 weist auch das rückenseitige Rückstellelement 25 einen Arm 25b und einen Federarm 25c mit einem Druckabschnitt 25d, nur spiegelbildlich, auf. Der Druckabschnitt 25d ist mit einer Druckfläche 25e, die zum Sattelrücken 12 weist, versehen.

Das zuspannseitige Rückstellelement 24 wird mit seinem Befestigungsabschnitt 24a mit dem Belaghaltebügel 16 verklemmt, und das rückenseitige Rückstellelement 25 wird mit seinem Befestigungsabschnitt 25a und der Lasche 25f über die so genannte Belaghaltebügel-Nase am rückenseitigen Halteende 16b des Belaghaltebügels 16 geklipst.

Gemäß Figur 8 ist zu erkennen, dass die Rückstellelemente 24, 25 jeweils mit ihren Federarmen 24c, 25d und den Druckabschnitten 24d, 25d in Schlitze 5a der jeweiligen Reibbeläge 5 der zugehörigen Bremsbeläge 3, 3' eingesetzt sind. Dies ist in Figur 9 vergrößert dargestellt. Die Druckabschnitte 24d, 25d stehen mit der jeweiligen Belagseite 4b der zugehörigen Belagträgerplatte 4 in Kontakt und üben jeweils eine Druckkraft auf den jeweiligen Bremsbelag 3, 3' zur Rückstellung von der Bremsscheibe 2 weg aus.

Figur 10, 11 und 13 zeigen eine Variante des rückenseitigen Rückstellelementes 25 und eines zuspannseitigen Rückstellelementes 26, welches einen Federarm 24c mit einer Federform in einer Ebene parallel zur Bremsscheibe 2 aufweist.

In Figur 12 ist eine Ausführung des zuspannseitigen Rückstellelementes 26 dargestellt, welches an der Druckseite 4b der zugehörigen Belagträgerplatte 4 über einen Halteabschnitt 40 mit Ausübung einer Zugkraft auf die Belagträgerplatte 4 angelenkt ist. Dazu zeigt Figur 13 eine Draufsicht auf diese Druckseite 4b. Eine Druckfläche 26e des Druckabschnitts 26d weist zum Zuspannabschnitt 11 des Bremssattels 1 (siehe auch Figur 2).

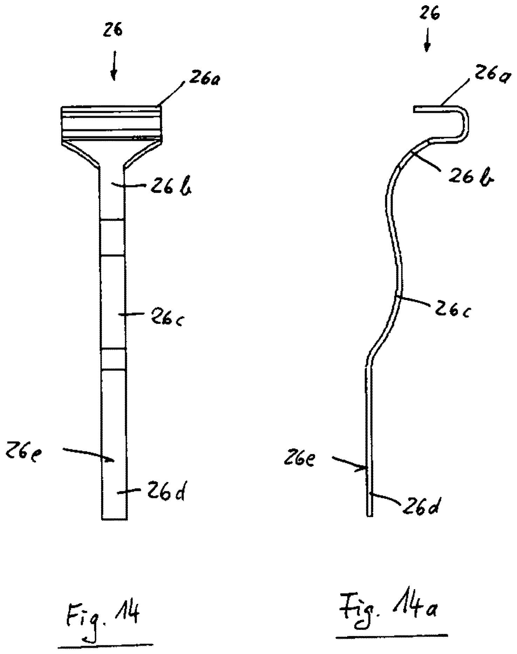

Das zuspannseitige Rückstellelement 26 in der Variante nach Figur 12 ist in den **Figuren 14 und 14a** in Draufsicht und Seitenansicht dargestellt.

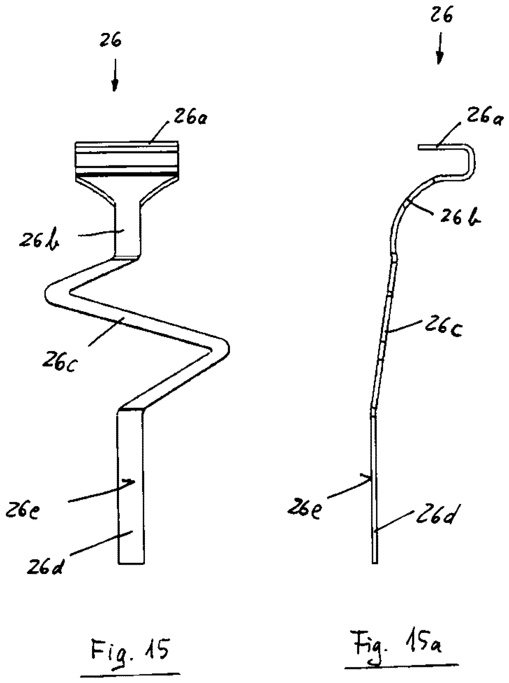

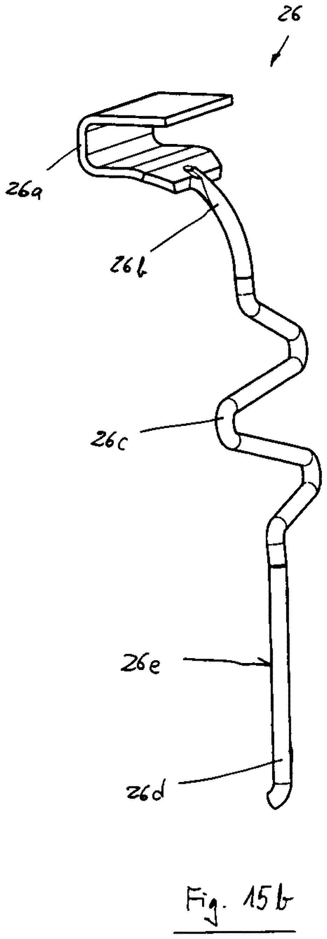

Die **Figuren 15 und 15a** stellen eine Drauf- und eine Seitenansicht des zuspannseitigen Rückstellelementes 26 nach Figur 10 und 13 dar.

Eine Variante des Rückstellelementes 26 nach Figuren 15 und 15a ist in **Figur 15b** gezeigt. Der Federarm 26c und der Druckabschnitt 26d sind hier aus einem Federdraht hergestellt, wobei der Befestigungsabschnitt 26a die U-förmige Haube gemäß Figur 8a aufweist.

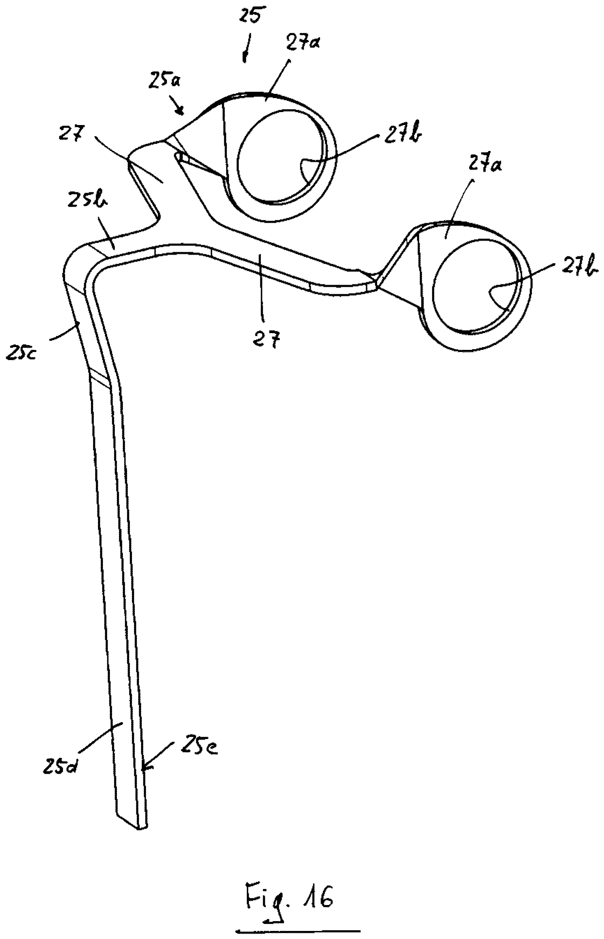

**Figur 16** zeigt eine Variante des rückenseitigen Rückstellelementes 25 mit zwei Befestigungsabschnitten 25a, die jeweils mit einem ringförmigen Befestigungsabschnitt 27a mit einer Öffnung 27b ausgebildet sind und jeweils an einem Arm 27 angebracht sind. Die Arme 27 sind in V-Form an dem Arm 25b des Rückstellelementes 25 angebracht. Die ringförmigen Befestigungsabschnitte 27a werden beiderseits des rückenseitigen Halteendes 16b des Belaghaltebügels 16 auf dem bolzenförmigen Sicherungselement 17 angebracht und fixiert.

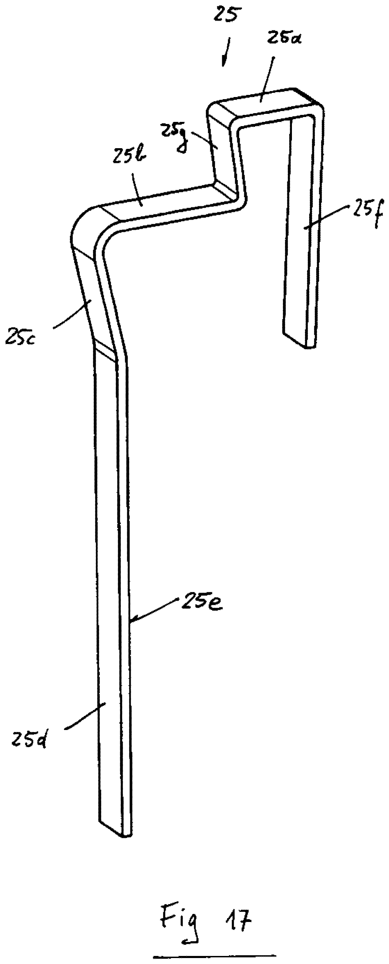

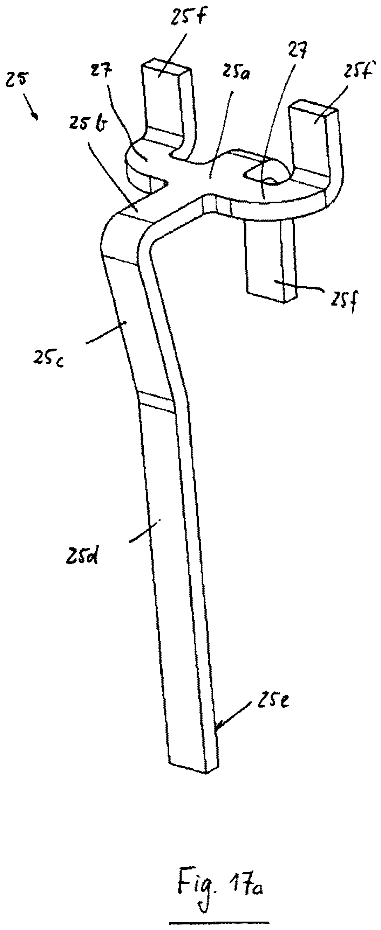

Die Variante des Rückstellelementes 25 nach **Figur 17** ist auch im eingebauten Zustand in den Figuren 10 und 11 zu sehen. An den Arm 25b schließt sich eine nach oben abgewinkelte Verbindung 25b an, die dann um etwa 90° wieder in die Horizontale in den Befestigungsabschnitt 25a übergeht, dessen Ende wiederum mit einer um 90° nach unten gebogenen Lasche 25f versehen ist, die etwa eine 1,5 fache Länge der Verbindung 25b aufweist. In Figur 11 ist dargestellt, dass der Arm 25b unterhalb des Belaghaltebügels 16 zwischen diesem und dem Klammerelement 7a bis zum Beginn der Öffnung 16c im Halteende 16b verläuft, durch welches sich die Verbindung 25g nach oben erstreckt. Der Befestigungsabschnitt 25a verläuft oberhalb des Belaghaltebügels 16, wobei sich die Lasche 25f wieder nach unten durch die Öffnung 16c erstreckt und an einer Wand 15a des Sattelrückens 15 anliegt.

Eine Variante zu dem Rückstellelement 25 nach Figur 17 stellt **Figur 17a** dar. Hier sind ähnlich wie in der Variante nach Figur 16 zwei Arme 27 vorgesehen. Der Arm 25b geht in gleicher Ebene in den Befestigungsabschnitt 25a über, dessen Ende in eine um 90° nach unten gebogene Lasche 25f verläuft. Beiderseits des Befestigungsabschnitts 25a ist jeweils einer der Arme 27 angebracht, deren freie Enden jeweils mit einer um 90° nach oben gebogenen Lasche 25f versehen sind.

Die Rückstellelemente 23, 24, 25, 26 bzw. -federn werden durch eine Lasche (Federarm 23c, 24c, 25c, 26c) an der jeweiligen Belagträgerplatte 4 geführt und mittels Belaghaltebügel 16 am / im Bremssattel 1 fixiert. Durch die geschwungene Form arbeiten die Rückstelleelemente 23, 24, 25, 26 über den kompletten Verschleißweg des Bremsbelages 3, 4'. Durch die Rückstellelemente 23, 24, 25, 26 bzw. -federn werden die Bremsbeläge 3, 3' nach jeder Bremsbetätigung nach dem Biegebalkenprinzip von der Bremsscheibe 2 weggedrückt. Dadurch gibt es keine Berührung der beiden Komponenten und es entsteht kein Restschleifmoment.

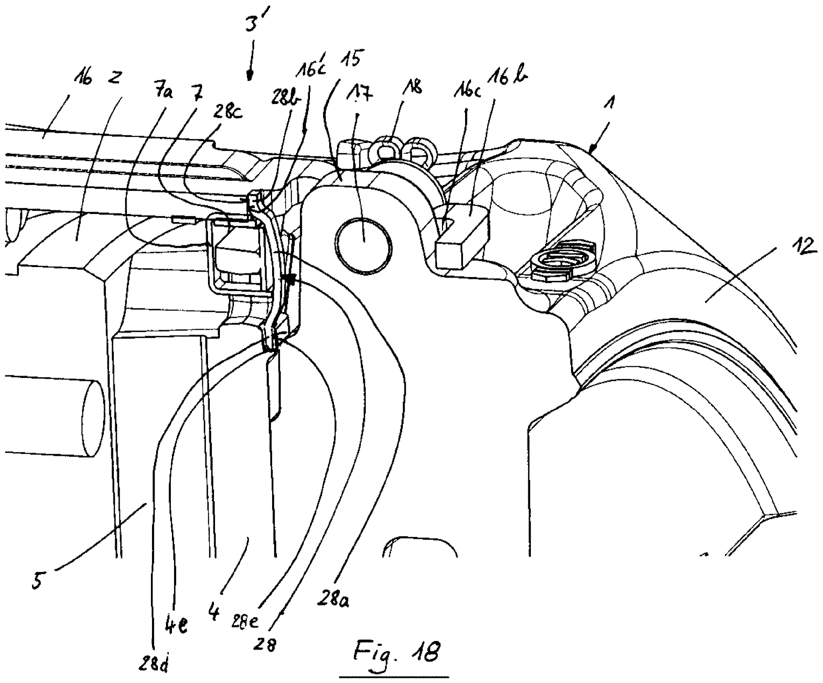

**Figur 18** zeigt eine noch weitere Variante eines rückenseitigen Rückstellelementes 28, welches einen Federbügel 28a mit einem oberen Halteende 28b und einem unteren Druckabschnitt 28d umfasst. Das obere Halteende 28b ist in der Öffnung 16c des Belaghaltebügels 16 zwischen Halteabschnitt 15 und Öffnung 16c im Bereich des Klammerelementes 7a angeordnet und drückt mit einem Auflageabschnitt 28c des Halteendes 28b gegen eine zuspannseitige Wand 16'c der Öffnung 16c. Der untere Druckabschnitt 28d ist in einer Tasche 4e an der Druckseite 4b der Belagträgerplatte 4 aufgenommen und steht über seine Druckfläche 28e mit einer zuspannseitigen Wand der Tasche 4e in Kontakt.

Figuren 19-28 stellen perspektivische Ansichten von weiteren Rückstellelementen der Funktionsgruppe der Rückstelleinrichtung nach Figuren 7-13 dar.

**Figur 19** zeigt ein Rückstellelement 29 mit einem Federarm 29c, dessen oberes Ende über einen Federwickel 29b mit einem Befestigungsabschnitt 29a an dem zuspannseitigen Halteende 16a des Belaghaltebügels 16 angebracht ist. Das untere Ende des Federarms 29c ist über einen weiteren Federwickel 29b mit einem Einspannende 29d verbunden. Die Federwickel 29b sind z.B. Spiralfedern mit parallelen Längsachsen, die tangential zur Bremsscheibe 2 verlaufen. Das Einspannende 29d ist in einer Öse des Halteabschnitts 40 an der Druckseite 4b der zuspannseitigen Belagträgerplatte 4 angeordnet.

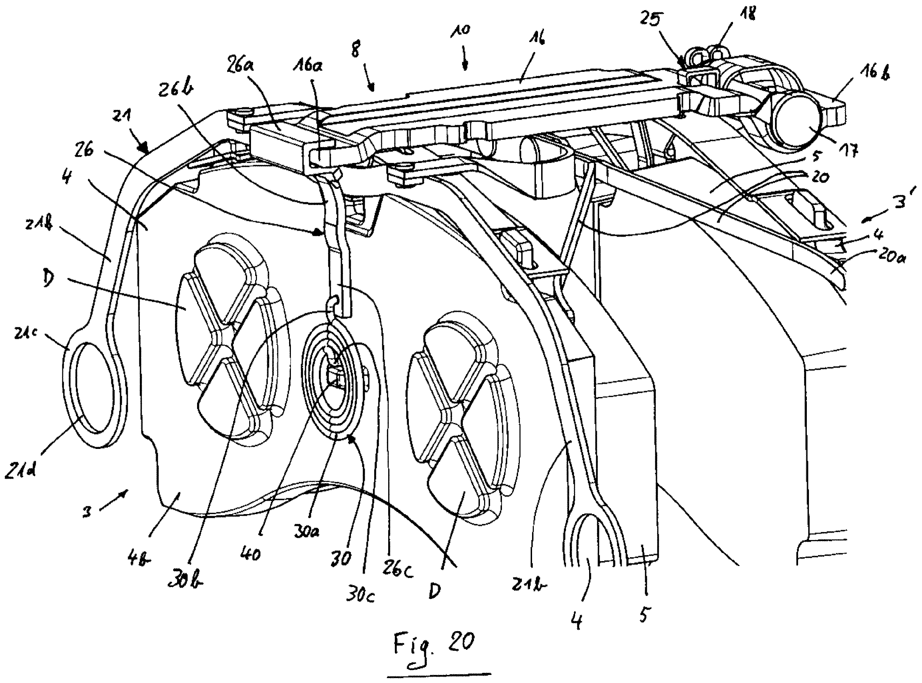

Ein Rückstellelement 26 nach **Figur 20** weist den Befestigungsabschnitt 26a mit dem Arm 26b nach Figur 8a auf. **Figur 21** zeigt dazu eine Ansicht in Richtung auf den Zuspannabschnitt 11 mit der Bodenplatte 19, wobei der Halteabschnitt 40 in Bügelform von der Druckseite 4b abgeschnitten ist. Es hat jedoch einen kurzen Federarm 26c, an dessen unterem Ende ein Federelement 30 mit angebracht ist. Das Federelement 30 umfasst einen Federwickel 30a, dessen oberes Federende 30b an dem Federarm 30 eingehängt ist, und dessen unteres Federende 30c in Eingriff mit dem Halteabschnitt 40 an der Druckseite 4b der zuspannseitigen Belagträgerplatte 4 steht. Der Federwickel 30 ist als flache Spiralfeder, z.B. als eine so genannte Evolutfeder, um den Halteabschnitt 40 herum angeordnet ausgebildet.

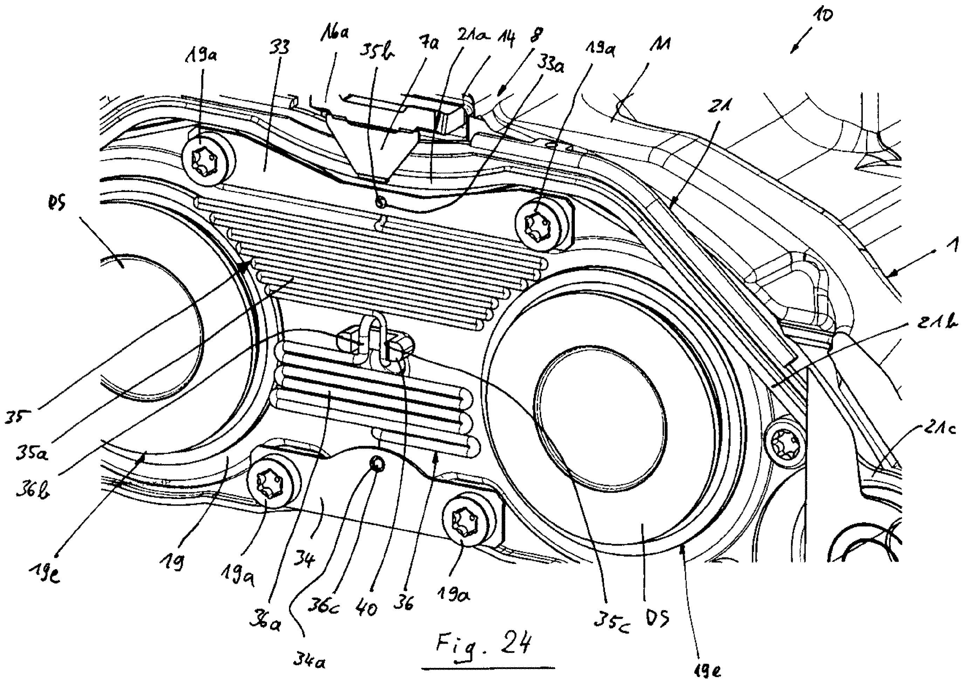

Auf der Druckseite 4b der zuspannseitigen Belagträgerplatte 4 sind beidseitig hervorstehende Druckabschnitte D angeordnet, die mit Druckstempeln DS (siehe Figur 24) der Zuspanneinrichtung zusammenwirken. Hierzu sind Öffnungen 19e in der Bodenplatte 19 für die Druckstempel DS vorgesehen.

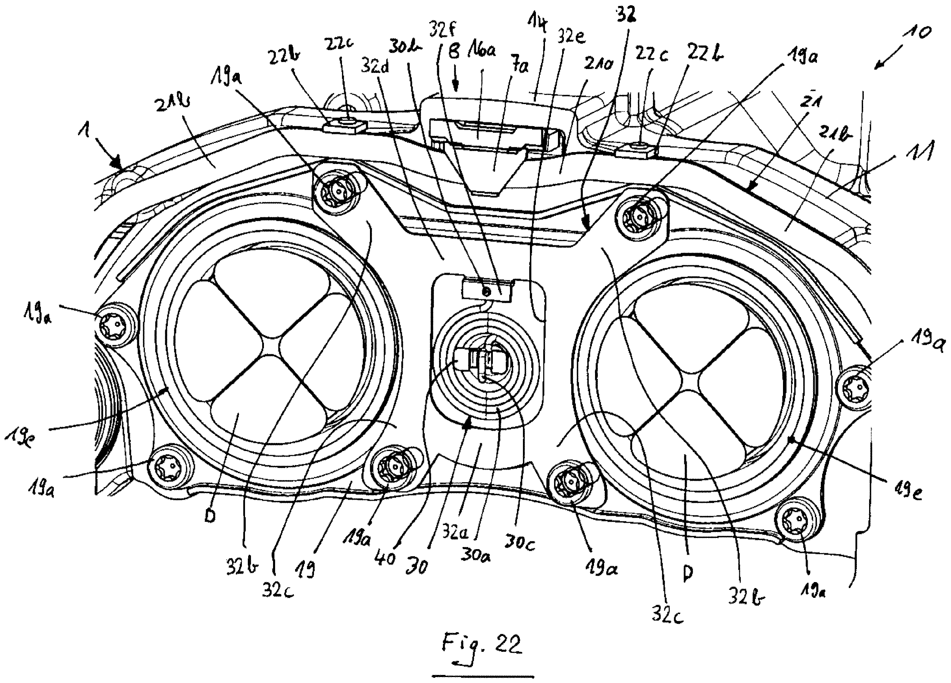

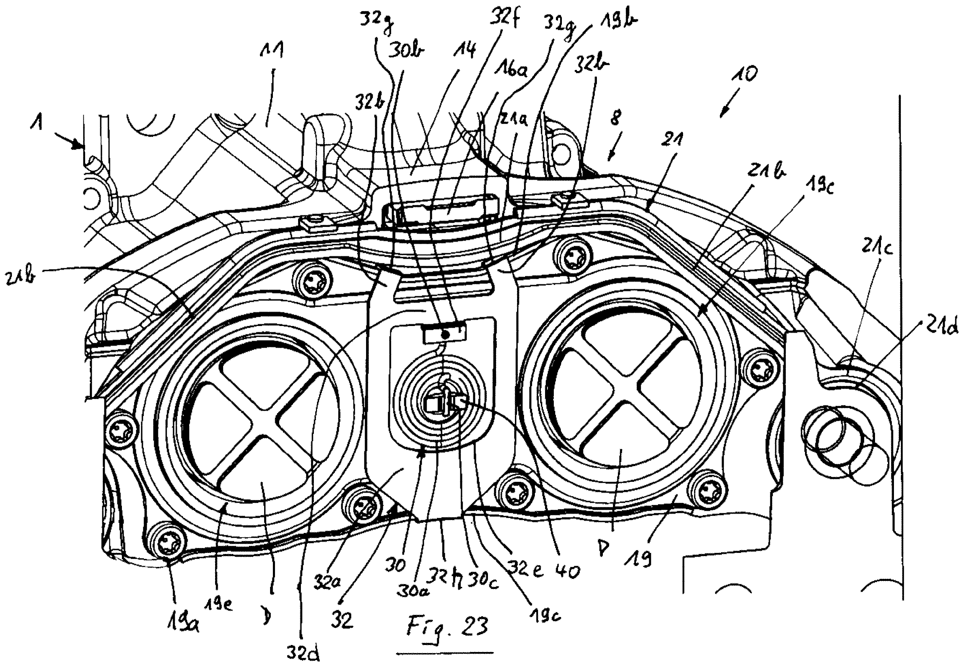

In einer anderen Ausführung, die **Figuren 22** **und** **23** zeigen, ist das Federelement 30 mit seinem oberen Federende 30b in eine Lasche 32f einer an der Bodenplatte 19 befestigten Verbindungsplatte 32 eingehängt. Die Verbindungsplatte 32 ist wie in der Version in Figur 22 gezeigt über Arme 32b, 32c eines Körpers 32a der Verbindungsplatte 32 an der Bodenplatte 19 mittels Befestigungselementen 19a der Bodenplatte 19 angebracht. Das Federelement 30 mit dem Halteabschnitt 40 ist in einer Öffnung 32e in dem Körper 32a angeordnet. Die oberen Arme 32b sind durch einen Laschenabschnitt 32d des Körpers 32a verbunden. Die Lasche 32f ist an dem Laschenabschnitt 32 innerhalb der Öffnung 32e angeordnet.

Im Gegensatz zu Figur 22 ist die Verbindungsplatte 32 nach **Figur 23** an der Bodenplatte 19 festgeklemmt. Dazu sind die oberen Arme 32b an ihren Enden mit jeweils einem Klemmabschnitt 32g versehen. Die Klemmabschnitte 32b sind an einer Oberseite 19b der Bodenplatte 19 angebracht. Zudem weist die Verbindungsplatte 32 an ihrer Unterseite einen weiteren Klemmabschnitt 32h auf, welcher mit einer Unterseite 19c der Bodenplatte 19 in Eingriff steht. Mittels der Klemmabschnitte 32g, 32h ist die Verbindungsplatte 32 an der ortsfesten Bodenplatte 19 befestigt.

Die **Figur 24** zeigt eine Ausführung mit zwei Federeinheiten 35 und 36 als Rückstellelemente des zuspannseitigen Bremsbelags 3. Jede Federeeinheit 35, 36 weist einen Federdraht 35a, 36a auf, der zu einer flachen Feder ausgebildet ist und jeweils Federenden 35b, 36b und 35c, 36c besitzt. Die Federeinheiten 35, 36 sind übereinander in Vertikalrichtung angeordnet. Die obere Federeinheit 35 ist mit ihrem oberen Federende 35b in eine Öffnung 33a einer oberen, an der Bodenplatte 19 mittels Befestigungselementen 19a befestigten Halteplatte 33 eingehängt. Das untere Federende 35c der oberen Federeinheit 35 ist zusammen mit dem oberen Federende 36b der unteren Federeinheit 36 an dem Halteabschnitt 40 der Belagträgerplatte 4 angelenkt. Das untere Federende 36c der unteren Federeinheit 36 ist in einer Öffnung 34a an einer unteren Halteplatte 34 befestigt. Die untere Halteplatte 34 ist ebenfalls über die schon vorhandenen Befestigungselemente 19a an der Bodenplatte 19 befestigt. Die Drahtdurchmesser der Federdrähte 35a, 36a der Federeinheiten 35, 36 sind unterschiedlich groß, um die unterschiedlichen Bauräume für die Federeinheiten 35, 36 auszugleichen.

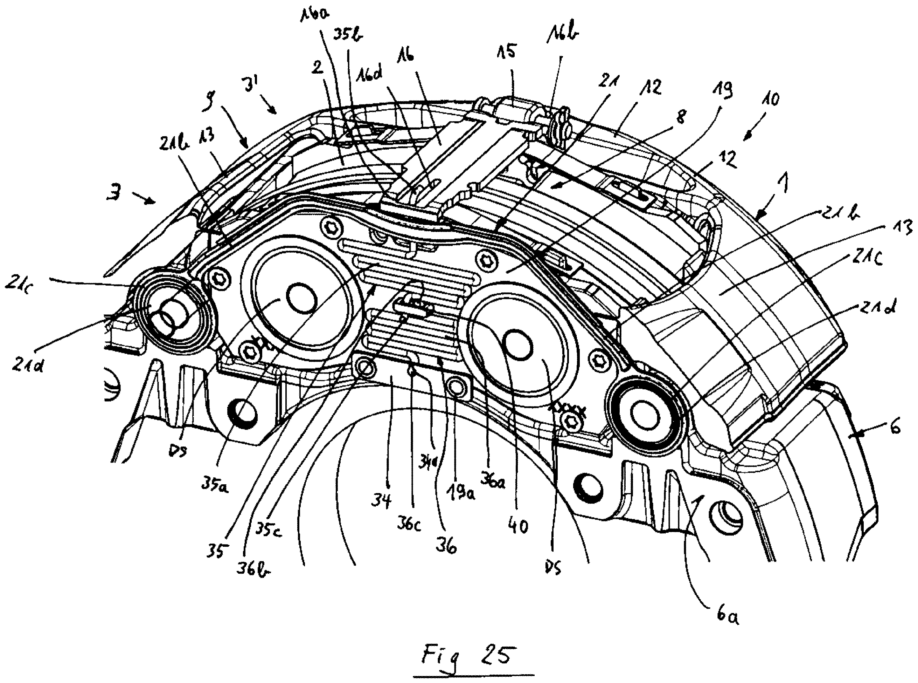

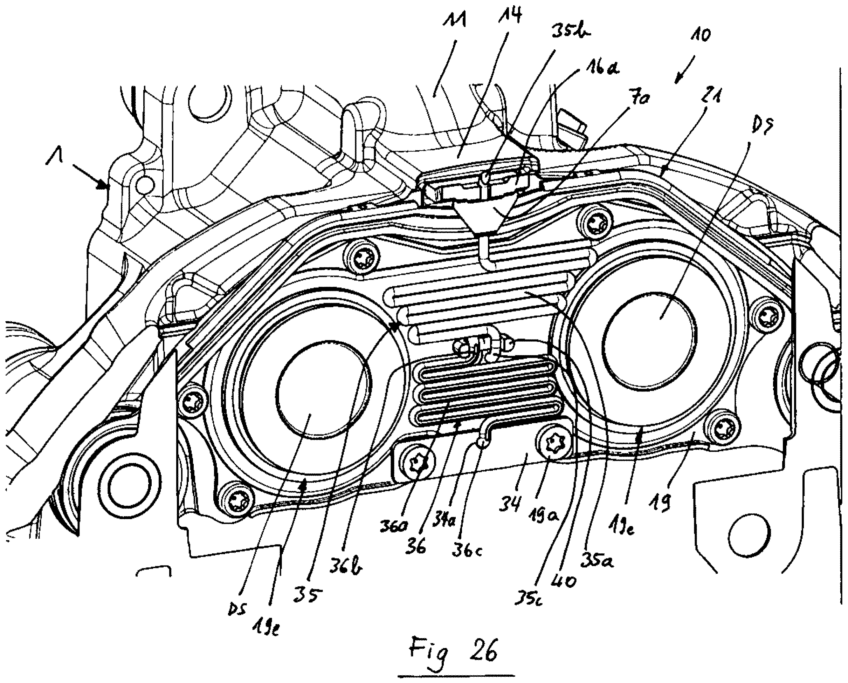

Die Version nach **Figur 25** entspricht der Ausführung nach Figur 24, jedoch mit dem Unterschied, dass das obere Federende 35b der oberen Federeinheit 35 in einem Schlitz 16d des Belaghaltebügels 16 eingehängt ist. Die obere Halteplatte 33 ist daher nicht vorhanden. Diese Einbausituation ist in einer weiteren Darstellung in **Figur 26** vergrößert gezeigt.

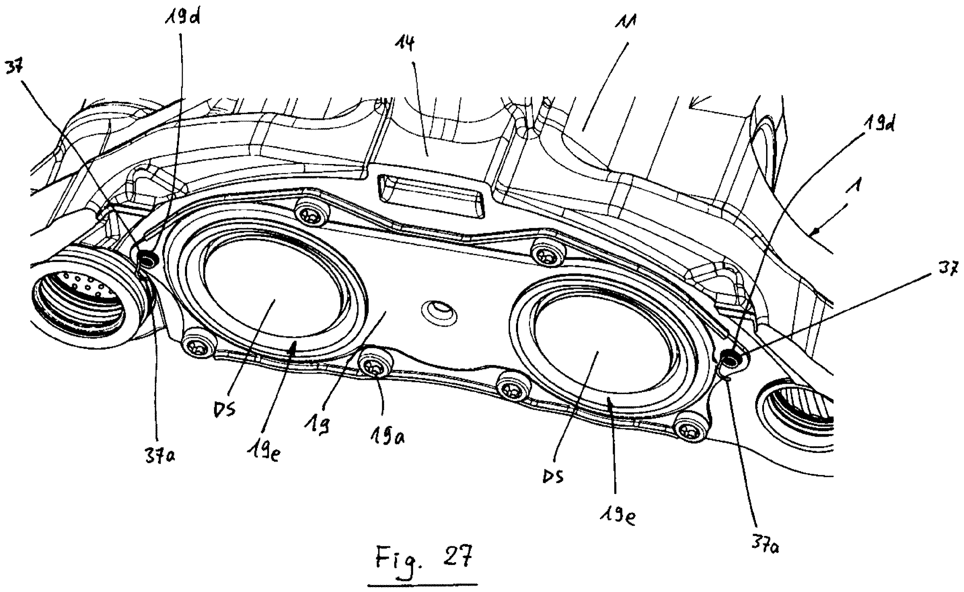

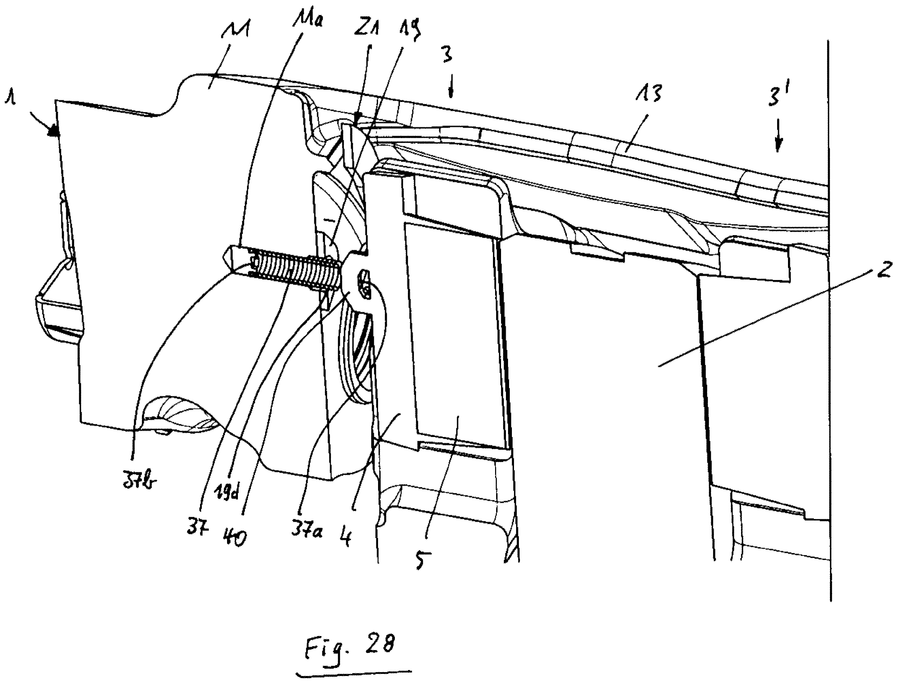

**Figuren 27** **und** **28** zeigen eine weitere Variante von Rückstellelementen 37 des zuspannseitigen Bremsbelags 3 in Form von Zugfedern 37, wobei Figur 27 eine Draufsicht auf die Bodenplatte 19 zeigt, und Figur 28 einen Vertikalschnitt im Bereich einer der Zugfedern 37 darstellt.

Die Zugfedern 37 sind jeweils in einer Bohrung 11a im Zuspannabschnitt 11 des Bremssattels 1 aufgenommen und mit einem Federende 37b in der Bohrung 11a festgelegt. Die anderen Federenden 37a stehen jeweils aus den Bohrungen 11a durch die Bodenplatte 19 hervor und sind in seitlich auf der Druckseite 4b der Belagträgerplatte 4 angeordneten Halteabschnitten 40 in Eingriff. In der gezeigten Ausführung sind die Bohrungen 11a schon vorhandene Befestigungsbohrungen für Befestigungselemente 19a der Bodenplatte 19.

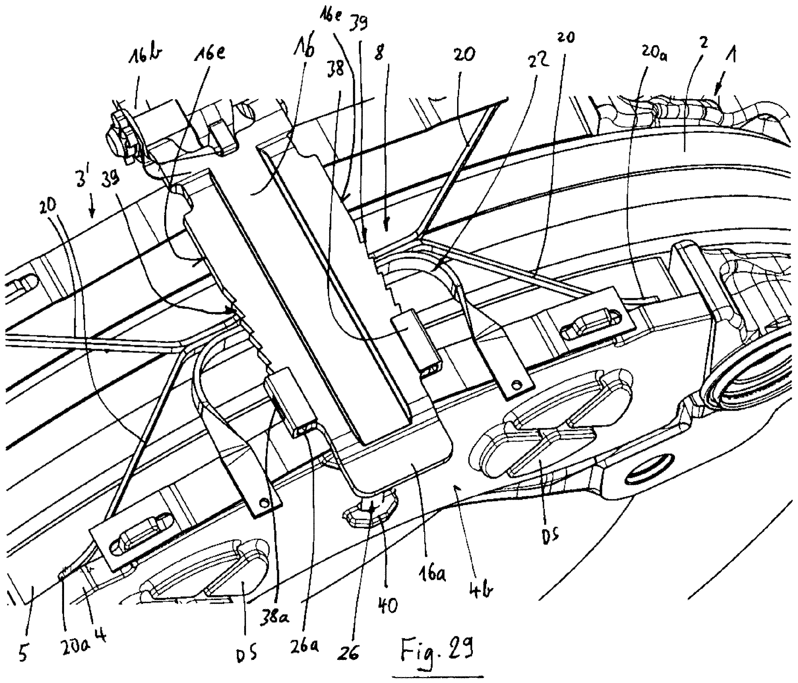

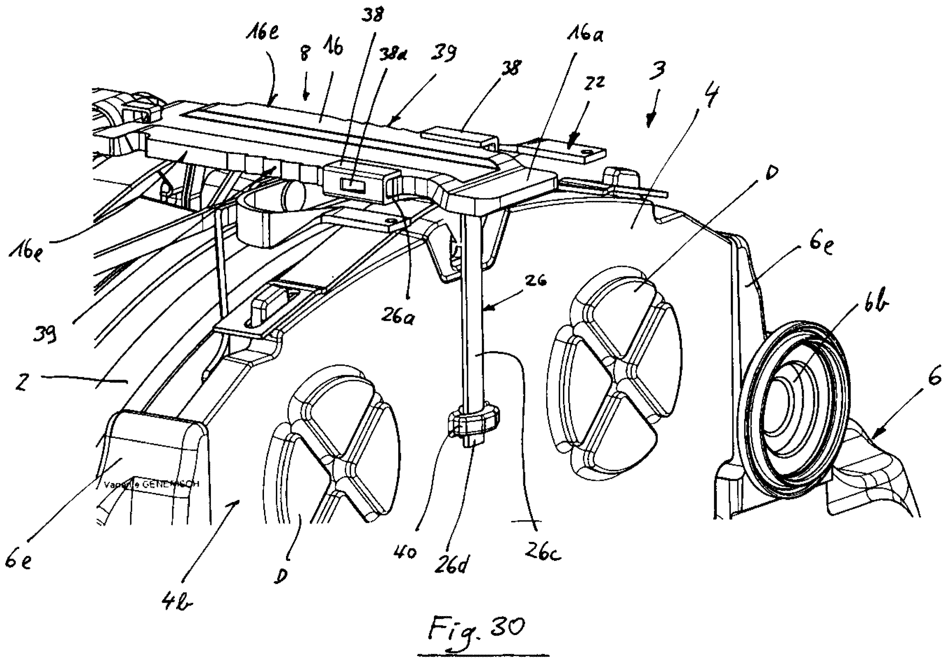

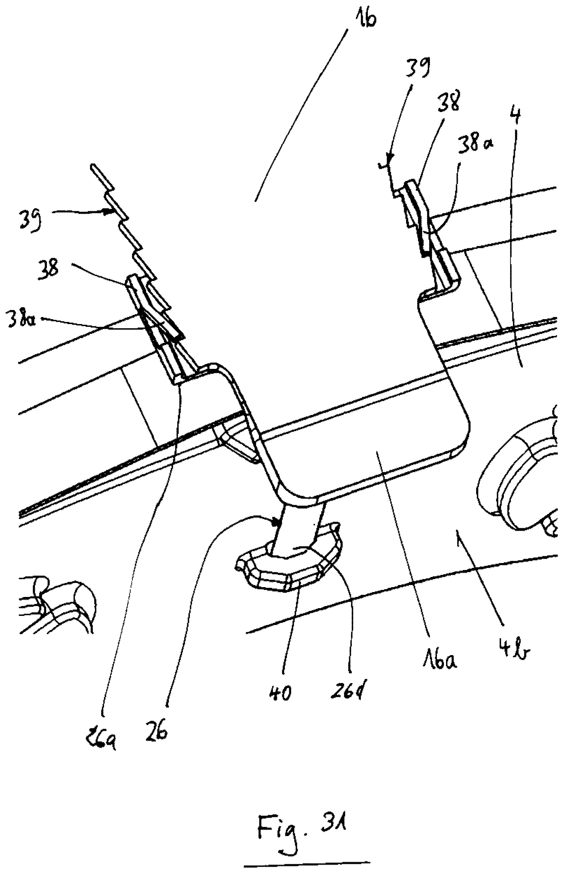

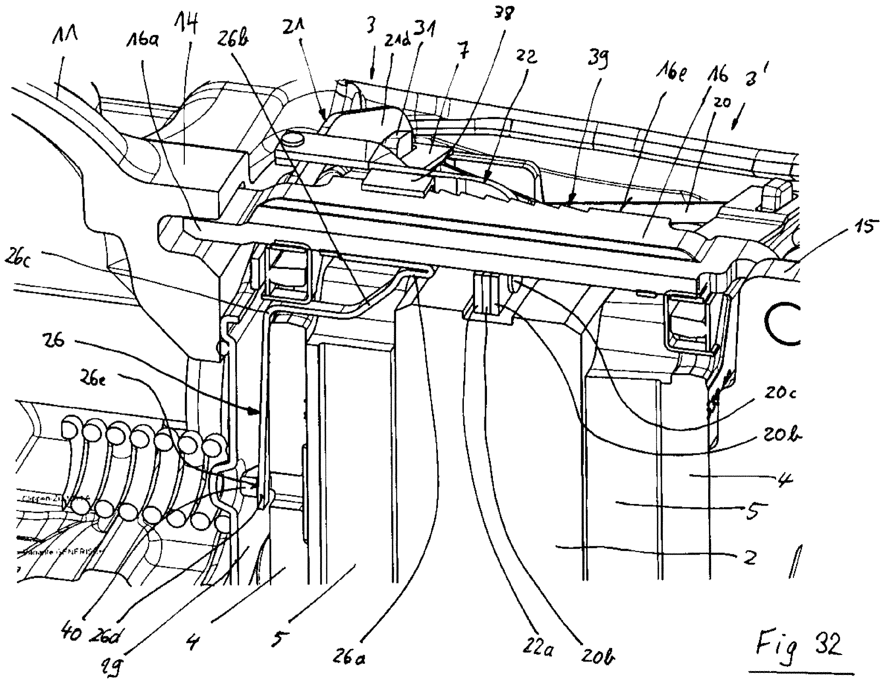

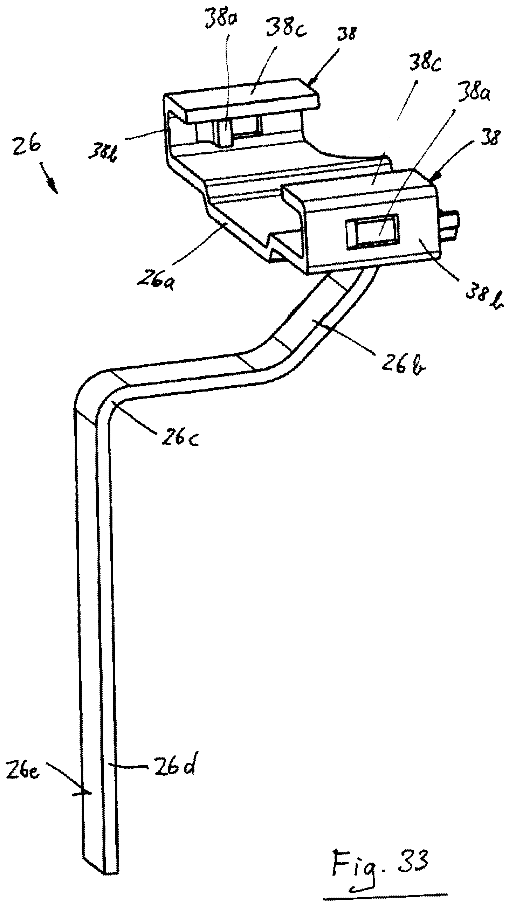

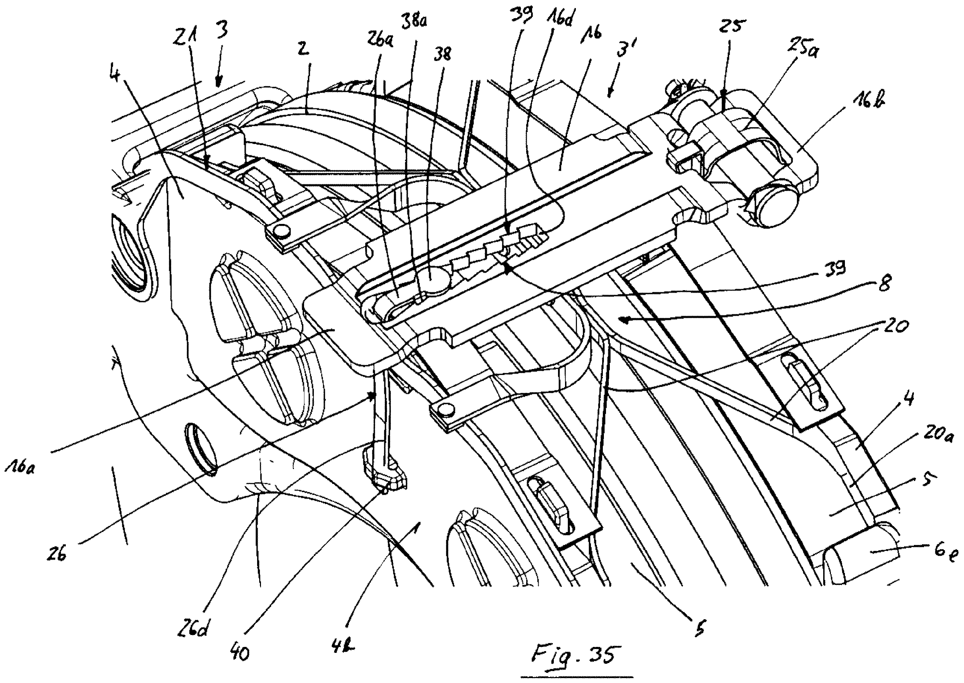

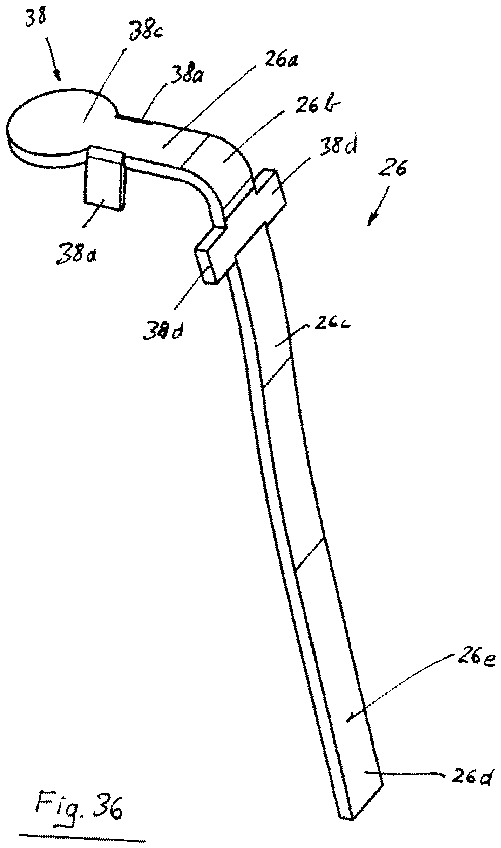

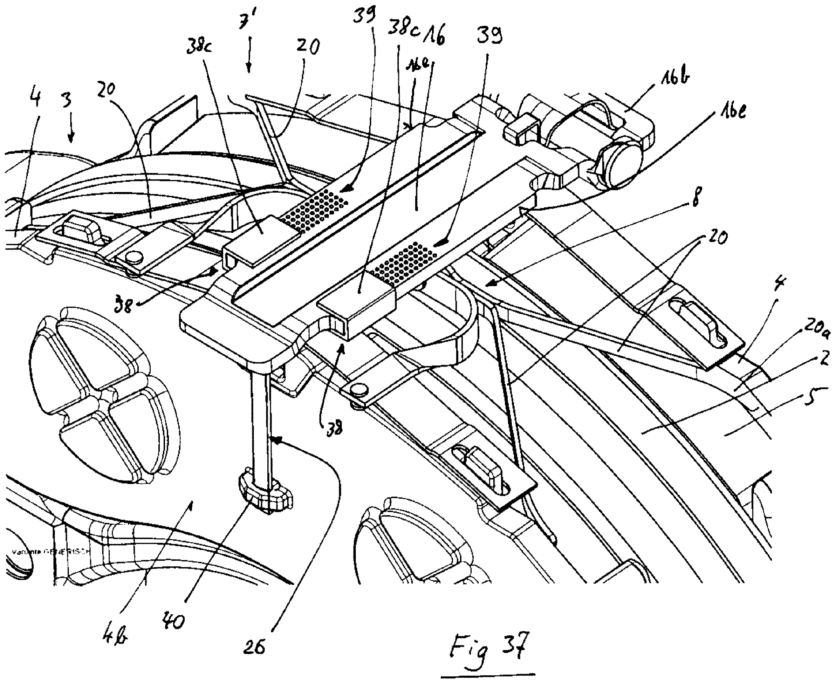

In den Figuren 29-37 sind perspektivische Ansichten von selbstjustierenden Rückstellelementen 26 der zweiten Funktionsgruppe der Rückstelleinrichtung nach Figuren 7-13 dargestellt. **Figuren 29** **und** **30** zeigen ein erstes selbstjustierendes Rückstellelement 26 in Perspektivansichten, wobei **Figur 31** einen Horizontalschnitt einer Rasteinrichtung 38 darstellt. **Figur 32** zeigt dazu einen weiteren Schnitt in Längsrichtung des Belaghaltebügels 16. Figur 33 stellt das selbstjustierende Rückstellelement 26 in einer Perspektivansicht dar. Ein weiteres selbstjustierendes Rückstellelement 26 ist in einer Perspektivansicht in eingebautem Zustand in **Figur 35** gezeigt, wobei **Figur 36** eine Perspektivansicht des Rückstellelementes selbst zeigt. **Figur 37** gibt eine Variante in einer perspektivischen Draufsicht an.

Um ein Restschleifmoment zu verhindern wird eine Feder als Rückstellelement 26 eingesetzt, die den druckstückseitigen, d.h. zuspannseitigen, Bremsbelag 3 in Richtung der Druckstücke bzw. des Zuspannabschnitts 11 bewegt. Das Rückstellelement 26 greift beispielsweise an einer Öse des Halteabschnitts 40 an der Druckseite 4b der Belagträgerplatte 4 an und ist so ausgelegt, dass es die nötige Rückstellkraft aufbringt, um den Bremsbelag 3 von der Bremsscheibe 2 zu entfernen

Die Funktionsfähigkeit muss idealerweise über den kompletten Verschleißweg des Bremsbelags 3 garantiert werden, somit darf sich das Rückstellelement 26 auch bei maximaler Auslenkung nur elastisch verformen.

Dazu ist das Rückstellelement 26 hier so ausgelegt, dass es sich bei zunehmendem Verschleiß mit dem Bremsbelag 3 in Richtung der Bremsscheibe 2, d.h. in Richtung der Bremsscheibendrehachse 2, automatisch verschiebt. Die bei starker Federauslenkung auftretenden, sehr hohen Spannungen können dadurch vermieden werden.

Das Rückstellelement 26 wird mit dem Befestigungsabschnitt 26a, welcher mit einer Rasteinrichtung 38 versehen ist, auf dem Belaghaltebügel 16 montiert. Der Belaghaltebügel 26 besitzt jeweils seitlich, d.h. an zumindest einer Seitenfläche 16e, einen Rastabschnitt 39 mit einer Verzahnung, in die zwei Federarme als Rastzungen 38a der Rasteinrichtung 38 eingreifen. Dies ist in Figur 31 vergrößert dargestellt. Die beiden Rastzungen 38a werden so ausgelegt, dass sie bei erheblichem Überschreiten einer Belagrückstellkraft über den nächsten Zahn "rutschen" und sich anschließend wieder verkeilen.

Die Rasteinrichtung 38 ist mit jeweils einer vertikalen Seitenplatte 38b am Rand des plattenförmigen Befestigungsabschnitts 26a, der hier eine mittlere Absenkung aufweist, ausgebildet. Dies ist in Figur 33 deutlich dargestellt. In jeder Seitenplatte 38b ist zumindest eine Rastzunge 38a vorgesehen. Auf dem oberen Rand einer jeden Seitenplatte 38b ist eine horizontale Führungsplatte 38c angebracht. Das Rückstellelement 26 kann somit auf den Belaghaltebügel 16 in dessen Längsrichtung wie z.B. in den Figuren 29-30 gezeigt aufgeschoben werden. Dabei ist der Belaghaltebügel 16 zwischen dem plattenförmigen Befestigungsabschnitt 26a und den dazu parallelen horizontalen Führungsplatten 38c aufgenommen.

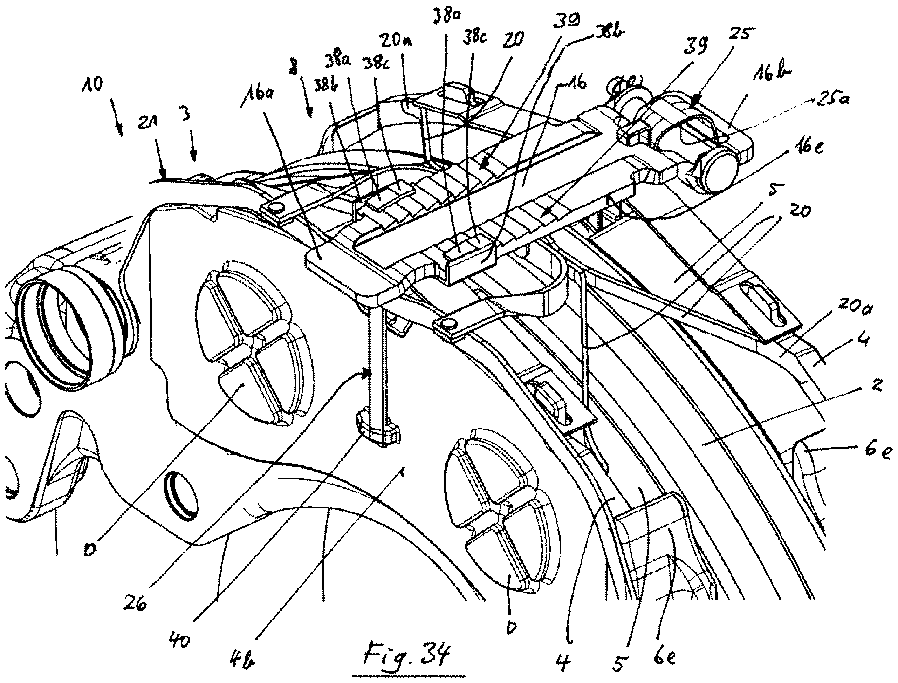

Die Ausführung nach Figur 34 unterscheidet sich zu derjenigen der Figuren 29-33 darin, dass die Rasteinrichtung 39 auf der Oberseite der seitlichen Bereiche des Belaghaltebügels 16 eingeformt ist, wobei die Rastzungen 38a in den Führungsplatten 38c angeordnet sind.

Figur 35 zeigt eine Variante der Rasteinrichtung 38 des Rückstellelementes 26, Figur 36 zeigt das Rückstellelement. Der Rastabschnitt 39 ist einem Schlitz 16d mittig in Längsrichtung des Belaghaltebügels 16 mit beidseitiger Verzahnung gebildet. An dem zuspannseitigen Ende des Schlitzes 16d ist eine Verbreiterung zur Einfädelung der Rasteinrichtung 38 des Rückstellelementes 26 eingeformt.

Der Befestigungsabschnitt 26a des Rückstellelementes 26 ist an seinem Ende mit eine hier kreisrunden Führungsplatte 38c versehen. Seitlich an dem Ende des Befestigungsabschnitts 26a ist jeweils eine schräg nach unten gebogene Rastzunge 38a angebracht. An dem oberen Ende des Federarms 26c ist eine Verbreiterung 38d auf beiden Seiten angeformt. Der Belaghaltebügel 16 ist zwischen diesen Verbreiterung 38d und der Führungsplatte 38c aufgenommen.

Der Rastabschnitt 39 in der Version nach Figur 37 ist auf der Oberseite des Belaghaltebügels 16 in Form von Noppen angeformt, die Rasteinrichtung 38 ist unterhalb der Führungsplatten 38c korrespondierend dazu ausgelegt.

**Figuren 38** **und** **39** zeigen eine Variante eines rückenseitigen Rückstellelementes 41, welches beidseitig an dem rückenseitigen Halteende 16b des Belaghaltebügels 16 angebracht ist. Im Folgenden wird nur eine Seite des Rückstellelementes 41 beschrieben, dies gilt natürlich spiegelbildlich für das andere auch. Das Rückstellelement 41 weist jeweils ein Einspannende 41a an einem relativ horizontalen Federarm 41b auf. Der Begriff horizontal bedeutet hier tangential in Bezug auf die Bremsscheibe 2. Der Federarm 41b ist mit dem Einspannende 41a an dem rückenseitigen Halteende 16b des Belaghaltebügels befestigt. Das andere Ende des Federarms 41b ist um 90° nach unten abgebogen und als vertikaler Hebelarm 41c ausgebildet, der mit einem nach außen umgebogenen Federende 41d mit einem seitlichen Halteabschnitt 40 auf der Druckseite 4b der rückenseitigen Belagträgerplatte 4 in Eingriff steht, wie in Figur 39 zu sehen ist.

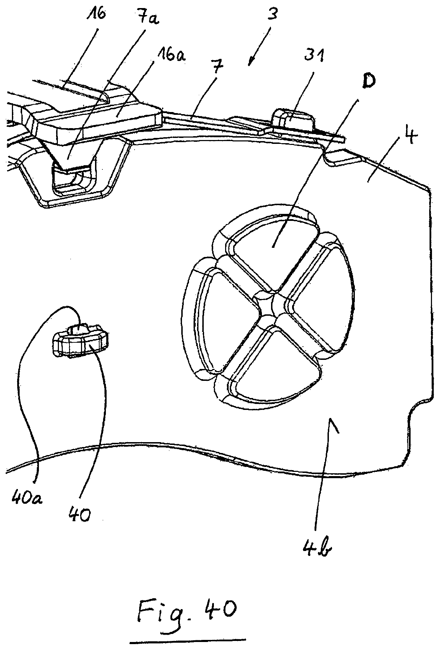

In den **Figuren 40 bis 48** sind perspektivischen Ansichten von Verbindungen von Rückstellelementen der zweiten Funktionsgruppe an Bremsbelägen 3, 3' gezeigt.

Bei den Bremsbelägen 3, 3' ist auf der jeweiligen Druckseite 4b zum Eingriff des Rückstellelementes 23, 24, 25, 26 der Halteabschnitt 40 vorgesehen. Dieser bildet z.B. mittels einer Bügelform ein Öse. Eine Herstellung der Belagrückenplatte 4 in Gussform würde aufgrund der vertikalen Lage ein Gussverfahren mit Kern oder eine zusätzliche Nachbearbeitung erfordern, was in beiden Fällen Zusatzkosten verursacht.

Mit der in den Figuren 40-44 gezeigten Ausführung des Halteabschnitts 40 kann dieser in einfacher Weise ohne Kern oder Nachbearbeitung gusstechnisch im Zusammenhang mit der Belagträgerplatte 4 erstellt werden.

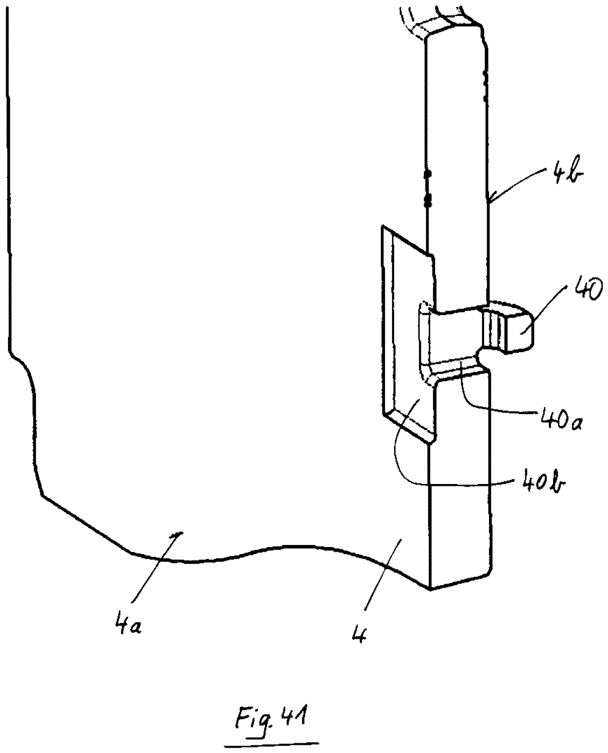

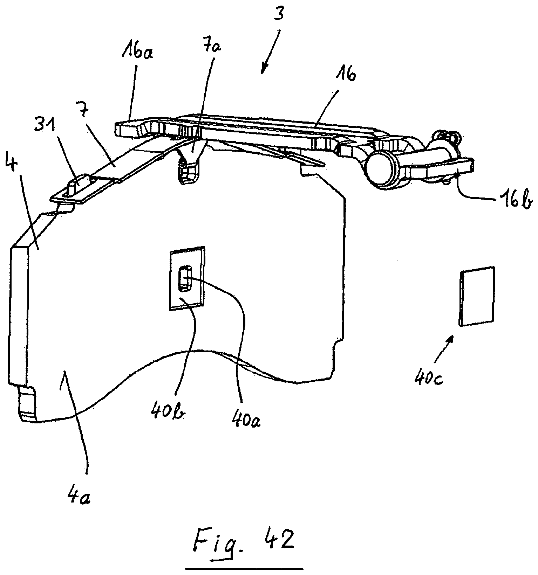

**Figur 40** stellt den Halteabschnitt 40 als Bügel auf der Druckseite 4b der zuspannseitigen Belagträgerplatte 4 dar. Es sind keine Hinterschneidungen vorhanden. Es ist eine Öffnung 40a unter dem Halteabschnitt 40 in der Belagträgerplatte 4 vorgesehen. Eine zusätzliche, hier quadratische, Ausnehmung 40b auf der Belagseite 4a wird beim Gießen mit erstellt. Dies Ausnehmung 40b zeigt **Figur 41** in einer Schnittdarstellung. Vor dem Aufpressen des Reibbelags 5 auf die Belagseite 4a der Belagträgerplatte 4 wird eine mit der Ausnehmung 40b korrespondierende Platte 40c in die Ausnehmung eingesetzt (**Figur 42**) und fluchtet mit der Oberfläche der Belagseite 4a. Die Platte 40c verhindert ein Durchdringen der Belagmasse durch die Öffnung 40a beim Pressen und Backen des Reibbelags 5.

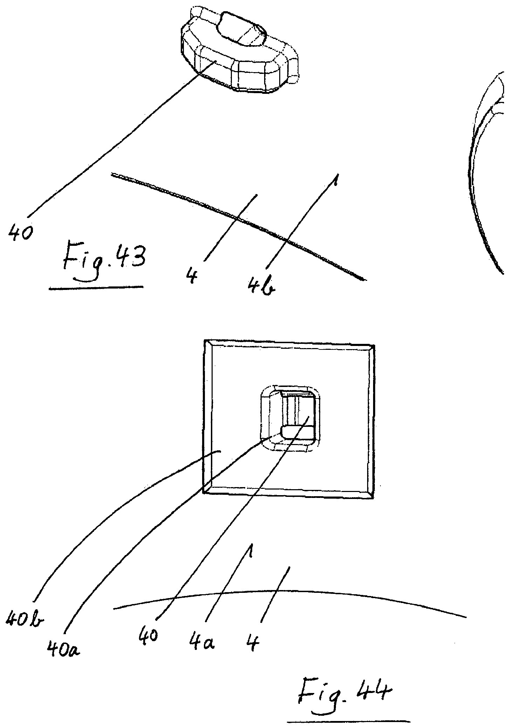

Eine Mindestwandstärke, z.B. 4 mm, muss bei dem bügelförmigen Halteabschnitt 40 als Öse gewährleistet werden (**Figur 43**), da das Gussmaterial bei der Gussherstellung der Belagträgerplatte 4 an dieser Stelle sonst einen so genannten Kaltlauf aufweisen und damit instabil werden könnte.

**Figur 44** zeigt in vergrößerter Darstellung ein Ansicht der Belagseite 4a der Belagträgerplatte 4 mit der Ausnehmung 40b, der Öffnung 40a und dem bügelförmigen Halteabschnitt 40 vor Einsetzen der Platte 40c.

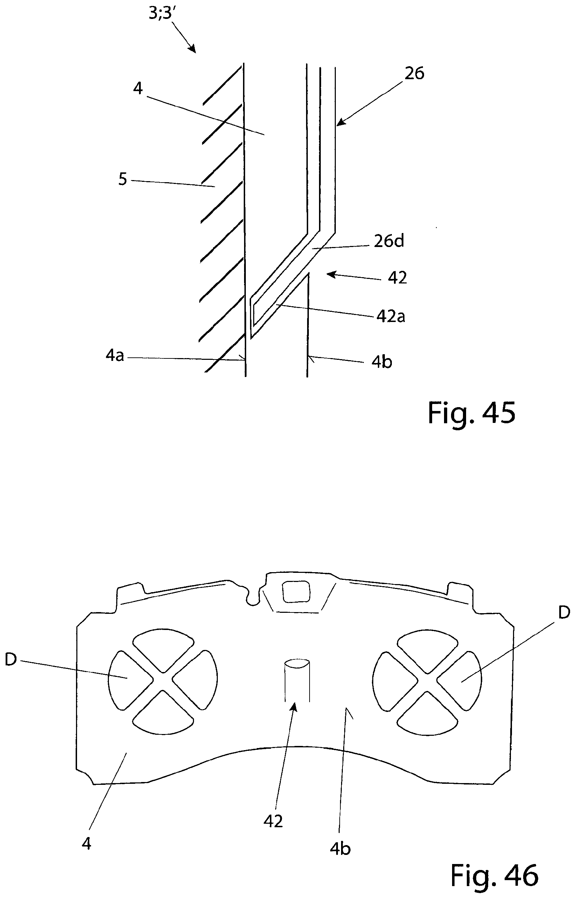

Weitere Möglichkeiten zur Befestigung bzw. Anlenkung der Rückstellelemente 23, 24, 25, 26 an der Belagträgerplatte 4 sind in den Figuren **45 bis 48** gezeigt. **Figuren 45 und 46** zeigen eine Verbindung 42, welche einen schrägen Verbindungsabschnitt 42a aufweist, der in die Belagträgerplatte 4 von der Druckseite 4b eingeformt ist. Dies kann z.B. eine schräg einlaufende Bohrung sein.

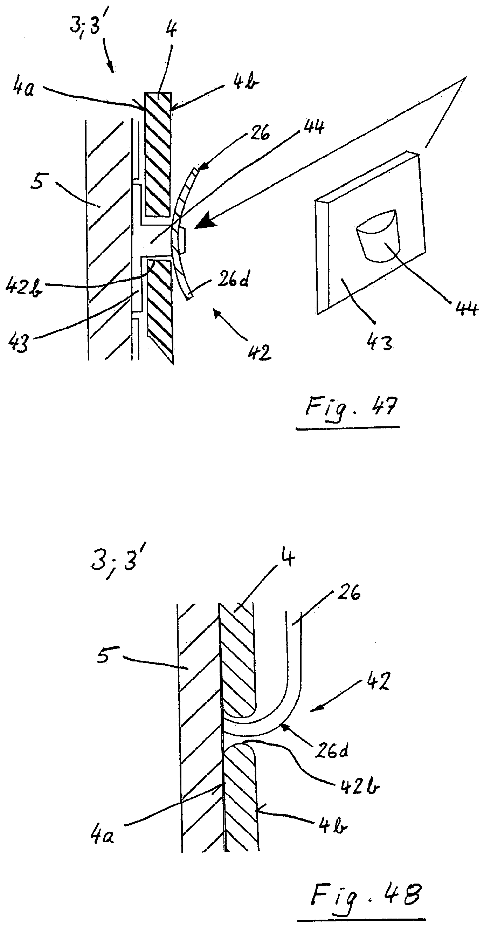

In **Figur 47** weist die Belagträgerplatte 4 eine Durchgangsöffnung 42b auf. Eine Halteplatte 43 mit einer von der Halteplatte 43 hervorstehenden Öse 44 ist auf der Belagseite 4a im Bereich der Öffnung 42a derart angeordnet, dass die Öse 44 durch die Öffnung 42a auf der Druckseite 4b hervorsteht und eine Verbindung 42 für beispielsweise den Druckabschnitt 26d des Rückstellelementes 26 bildet. Die Halteplatte 43 ist dabei zwischen dem Reibbelag 5 und der Belagseite 4a der Belagträgerplatte 4 festgelegt. Es ist auch möglich, dass die Halteplatte 43 wie die Platte 40c in eine korrespondierende Ausnehmung gemäß Figur 40, 41 eingesetzt werden kann.

In der Ausführung nach **Figur 48** ist eine zu einem entsprechend geformten Druckabschnitt 26d des Rückstellelementes 26 (nur als Beispiel zu sehen) Öffnung 42b in die Belagträgerplatte 4 von der Druckseite 4b her eingeformt. Die Öffnung 42b bildet die Verbindung 42 mit dem Rückstellelement, z.B. Rückstellelement 26.

**Figuren 49 bis 56** illustrieren Ansichten einer weiteren Funktionsgruppe der Rückstelleinrichtung.

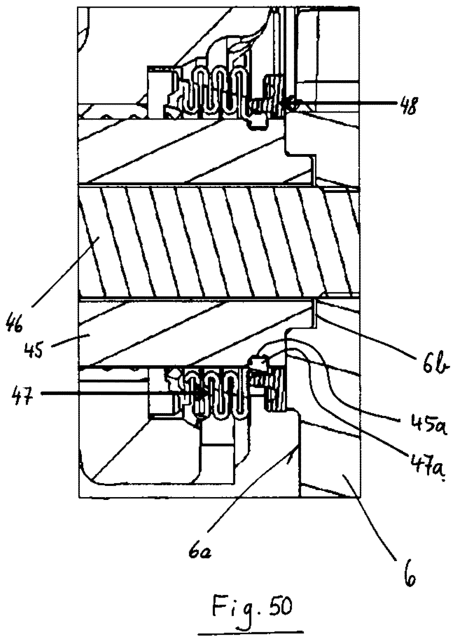

**Figur 49** zeigt eine Schnittansicht einer Scheibenbremse 10 mit serieller Fixierung eines Faltenbalgs 47 zwischen Bremssattel 6 und Lagerholm 45. In **Figur 50** ist eine vergrößerte Darstellung der Fixierung des Faltenbalgs 47 gezeigt.

Bei Scheibenbremsen für Nutzfahrzeuge werden die Faltenbälge 47, welche als flexible Abdichtung zwischen Bremssattel 6 und Lagerholm 45 wirken, meist in einer umlaufenden Nut 45a im Lagerholm 45 fixiert. Als zusätzliche Sicherung des Faltenbalgs 47, insbesondere eines Kragens 47a des Faltenbalgs 47, in der Nut 45a, wird ein Sicherungsring 48 aus Kunststoff montiert, welcher sicherstellt, dass sich der Faltenbalg 47 nicht aus der Nut 45a bewegt.

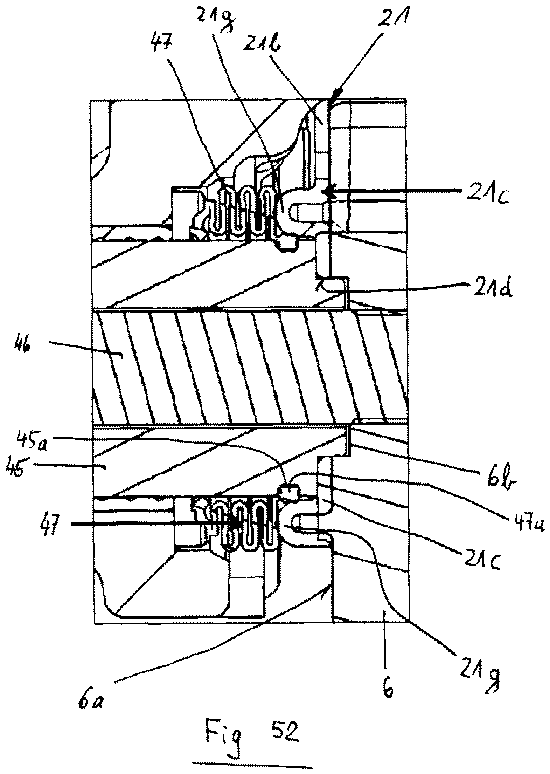

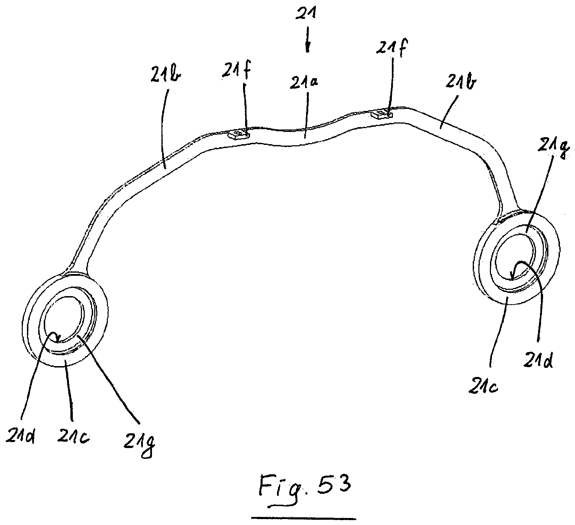

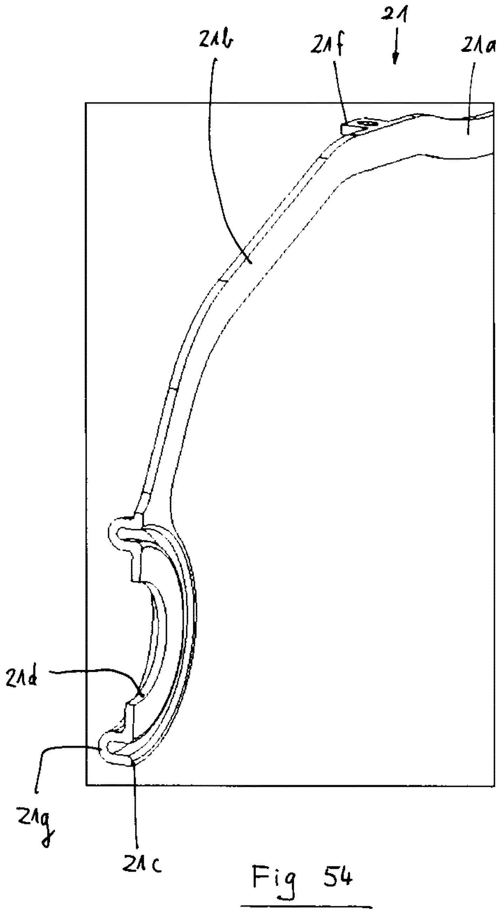

**Figur 51** zeigt eine Schnittansicht einer Scheibenbremse 10 mit einer Fixierung des Faltenbalgs 47 zwischen Bremssattel 6 und Lagerholm 45 mittels des Haltebogens 21 der Rückstelleinrichtung. In **Figur 52** ist eine vergrößerte Darstellung der Fixierung des Faltenbalgs 47 gezeigt. **Figur 53** zeigt den Haltebogen in einer perspektivischen Darstellung. **Figur 54** stellt eine vergrößerte Ansicht eines Befestigungsabschnitts 21c des Haltebogens 21 dar.

Der Haltebogen 21 wird mit seinen Befestigungsabschnitten 21c und den Öffnungen 21d wie oben schon erwähnt koaxial zu den Lageraufnahmen 6b für die Befestigung der Lagerholme 45 mittels Befestigungselementen 46 zwischen den Lagerholmen 45 und der Befestigungsseite 6a des Bremsträgers 6 angeordnet. Die Öffnungen 21d der Befestigungsabschnitte 21c sind jeweils mit einem Falzabschnitt 21g ausgebildet. Der Falzabschnitt 21g steht im eingebauten Zustand jeweils von dem Befestigungsabschnitt 21c in den Lagerholm 45 derart hervor, dass der jeweilige Falzabschnitt 21g über dem zugehörigen Kragen 47a des Faltenbalgs 47 liegt und diesen in der Nut 45a sichert. Damit wird der übliche Sicherungsring 48 eingespart.

Die Rückstelleinrichtung mit der Spreizeinrichtung 8 und dem Haltebogen 21 kann auch als Nachrüstteil, z.B. bei Belagwechsel und/oder Wartung in eine Scheibenbremse 10 eingebaut werden. Dies ist in einfacher Weise möglich, da der Haltebogen 21 mit der Spreizeinrichtung 8 nach Figur 3 nur nachträglich eingesetzt werden muss, ohne dass Änderungen vorzunehmen sind.

Für einen nachträglichen Einbau der Spreizeinrichtung 8 mit Rückstellelementen, z.B. nach Figur 3b, können die entsprechenden Bremsbeläge 3, 3' beim Wechsel verwendet werden. Ebenfalls kann dabei ein entsprechender Belaghaltebügel 16 mit den an ihm befestigten Rückstellelementen zum Einsatz kommen.

Die Erfindung wird durch die oben beschriebenen Ausführungsbeispiele nicht eingeschränkt. Sie ist im Rahmen der beigefügten Ansprüche modifizierbar.

### BEZUGSZEICHENLISTE

- 1: Bremssattel
- 2: Bremsscheibe
- 2a: Bremsscheibendrehachse
- 3, 3': Bremsbelag
- 4: Belagträgerplatte
- 4a: Belagseite
- 4b: Druckseite
- 4c: Auflagefläche
- 4d: Vorsprung
- 5: Reibbelag
- 5a: Schlitz
- 6: Bremsträger
- 6a: Befestigungsseite
- 6b: Lageraufnahme
- 6c: Brückenverbinder
- 6d: Belagschachtboden
- 6e: Bremsträgerhorn
- 7: Belaghaltefeder
- 7a: Klammerelement
- 8: Spreizeinrichtung
- 9: Öffnung
- 10: Scheibenbremse
- 11: Zuspannabschnitt
- 11a: Bohrung
- 12: Sattel rücken
- 12a: Halteabschnitt
- 13: Zugstrebe
- 14, 15: Halteabschnitt
- 15a: Wand
- 16: Belaghaltebügel
- 16a, 16b: Halteende
- 16c: Öffnung
- 16'c: Wand
- 16d: Schlitz
- 16e: Seitenfläche
- 17: Sicherungselement
- 18: Klammerelement
- 19: Bodenblech
- 19a: Befestigungselement
- 19b: Oberseite
- 19c: Unterseite
- 19d, 19e: Öffnung
- 20: Federarm
- 20a: Druckabschnitt
- 20b: Verbindungsabschnitt
- 20c: Befestigungselement
- 20d: Langloch
- 21: Haltebogen
- 21a: Zentralabschnitt
- 21b: Bügelarm
- 21c: Befestigungsabschnitt
- 21d: Öffnung
- 21e: Verstärkung
- 21f: Auflager
- 21g: Falzabschnitt
- 22: Haltebügel
- 22a: Verbindungsabschnitt
- 22b: Haltearm
- 22c: Befestigungselement
- 22d: Langloch
- 23: Rückstellelement
- 23a: Verbindungsabschnitt
- 23b: Haltearm
- 23c: Federarm
- 23d: Druckabschnitt
- 24: Rückstellelement
- 24a: Befestigungsabschnitt
- 24b: Arm
- 24c: Federarm
- 24d: Druckabschnitt
- 24e: Druckfläche
- 25: Rückstellelement
- 25a: Befestigungsabschnitt
- 25b: Arm
- 25c: Federarm
- 25d: Druckabschnitt
- 25e: Druckfläche
- 25f: Lasche
- 25g: Verbindung
- 26: Rückstellelement
- 26a: Befestigungsabschnitt
- 26b: Arm
- 26c: Federarm
- 26d: Druckabschnitt
- 26e: Druckfläche
- 27: Arm
- 27a: Befestigungsabschnitt
- 27b: Öffnung
- 28: Rückstellelement
- 28a: Federbügel
- 28b: Halteende
- 28c: Auflageabschnitt
- 28d: Druckabschnitt
- 28e: Druckfläche
- 29: Rückstellelement
- 29a: Befestigungsbügel
- 29b: Federwickel
- 29c: Federarm
- 29d: Einspannende
- 30: Federelement
- 30a: Wickel
- 30b, 30c: Federende
- 31: Vorsprung
- 32: Verbindungsplatte
- 32a: Körper
- 32b, 32c: Arm
- 32d: Laschenabschnitt
- 32e: Öffnung
- 32f: Lasche
- 32g, 32h: Klemmabschnitt
- 33, 34: Halteplatte
- 33a, 34a: Öffnung
- 35, 36: Federeinheit
- 35a, 36a: Federdraht
- 35b, 36b: Federende
- 35c, 36c: Federende
- 37: Zugfeder
- 37a, 37b: Federende
- 38: Rasteinrichtung
- 38a: Rastzunge
- 38b: Vertikalplatte
- 38c: Führungsplatte
- 38d: Verbreiterung
- 39: Rastabschnitt
- 40: Halteabschnitt
- 40a: Öffnung
- 40b: Ausnehmung
- 40c: Platte
- 41: Rückstellelement
- 41a: Einspannende
- 41b, 41c: Federarm
- 41d: Federende
- 42: Verbindung
- 42a: Verbindungsabschnitt
- 42b: Durchgangsöffnung
- 43: Halteplatte
- 44: Öse
- 45: Lagerholm
- 45a: Nut
- 46: Befestigungselement
- 47: Faltenbalg
- 47a: Kragen
- 48: Sicherungsring

- AS: Auslaufseite
- B: Bügel
- D: Druckabschnitt
- DS: Druckstempel
- ES: Einlaufseite
- S: Sicherung

## Patentansprüche

1. Scheibenbremse (10) für ein Nutzfahrzeug, mit einem eine Bremsscheibe (2) übergreifenden, als Schiebesattel ausgebildeten Bremssattel (1), der an einem ortsfesten Bremsträger (6) befestigt ist und eine zentrale Öffnung (9) über der Bremsscheibe (2) aufweist, zwei im Bremssattel (1) angeordneten, gegensinnig bewegbaren, jeweils eine Belagträgerplatte (4) und einen darauf befestigten Reibbelag (5) aufweisenden Bremsbelägen (3, 3'), von denen ein aktionsseitiger bzw. zuspannseitiger Bremsbelag (3), mittels einer Zuspanneinrichtung über mindestens einen Bremsstempel gegen die Bremsscheibe (2) pressbar ist, sowie mindestens einer Rückstelleinrichtung, mit der der Bremssattel (1) nach einem bremsbedingten Verschieben und Lösen der Bremse rückführbar ist, wobei die Rückstelleinrichtung eine an den sich gegenüberliegenden Bremsbelägen (3) angreifenden, entgegen der jeweiligen Zuspannrichtung gleich wirkenden Spreizeinrichtung (8) mit an der jeweiligen Belagträgerplatte (4) angreifenden federnden Spreizelementen aufweist,
wobei die Spreizeinrichtung (8) in der zentralen Öffnung (9) angeordnet ist, wobei die Spreizelemente direkt oder indirekt außerhalb der Reibbeläge (5) an mindestens zwei zur Mitte abständig zueinander angeordneten Anlagebereichen der Bremsbeläge (3) angreifen, wobei die Spreizeinrichtung Federarme (20) aufweist, die in dem zentralen Bereich der Öffnung (9) miteinander und mit einem Haltebogen (21), der am Bremsträger (6) angebracht ist, verbunden sind,
wobei der Haltebogen (21) im Bereich eines zuspannseitigen Rands der Öffnung (9) ortsfest zwischen dem Bremsträger (6) und Lagerholmen (45) des Bremssattels (1) angebracht ist,
**dadurch gekennzeichnet, dass**
der Haltebogen (21) zumindest einen Befestigungsabschnitt (21c) mit einer Öffnung (21d) aufweist, welche koaxial zu einer Lageraufnahme (6b) des Bremsträgers (6), an welcher der Bremssattel (1) über einen Lagerholm (45) befestigt ist, angeordnet ist.

2. Scheibenbremse (10) nach Anspruch 1,
**dadurch gekennzeichnet, dass**
sich die Spreizelemente ausgehend von einem zentralen Bereich in der Mitte der Öffnung (9) von innen nach außen zu den gleichmäßig zur Mitte abständig zueinander angeordneten Anlagebereichen erstrecken.

3. Scheibenbremse (10) nach Anspruch 1 oder 2,
**dadurch gekennzeichnet, dass**
der sich der zentrale Bereich der Öffnung (9) beiderseits einer virtuellen Mitte der Öffnung (9) in etwa parallel zu der Ebene der Bremsscheibe (2) in einer Länge in einem Bereich von 30 bis 50 % einer Längsachse der Öffnung (9) erstreckt.

4. Scheibenbremse (10) nach einem der vorhergehenden Ansprüche, **dadurch gekennzeichnet, dass**
von den Federarmen (20) jeweils zwei an einer zugeordneten Belagträgerplatte (4) über jeweils einen Druckabschnitt (20a) anliegen.

5. Scheibenbremse (10) nach Anspruch 1,
**dadurch gekennzeichnet, dass**
die Federarme (20) über einen Haltebügel (22) mit dem Haltebogen (21) verbunden sind, wobei der Haltebügel (22) zwei Haltearme (22b) aufweist, von denen sich jeder bis über den Haltebogen (21) erstreckt und mit diesem fest verbunden ist.

6. Scheibenbremse (10) nach Anspruch 5,
**dadurch gekennzeichnet, dass**
die Federarme (20) als zwei Paare von Federarmen (20) ausgebildet sind, wobei die Paare sich gegenüberliegend in Längsrichtung der Öffnung (9) so angeordnet sind, dass sie mit inneren Enden, die jeweils über einen Verbindungsabschnitt (20b) verbunden sind, in der Mitte der Öffnung (9) an dem Haltebügel (22) befestigt sind, wobei ihre äußeren freien Enden mit den Belagträgerplatte (4) der Bremsbeläge (3, 3') zusammenwirken.

7. Scheibenbremse (10) nach Anspruch 6,
**dadurch gekennzeichnet, dass**
die Haltearme (22b) des Haltebügels (22) Langlöcher (22d) an Befestigungsstellen an dem Haltebogen (21) aufweisen.

8. Scheibenbremse (10) nach einem der Ansprüche 4 bis 7,
**dadurch gekennzeichnet, dass**
jeder Federarm (20) endseitig mit einem Druckabschnitt (20a) ausgebildet ist, welcher in seiner Längsrichtung mit einem Langloch (20d) ausgebildet ist, das ein Führungsabschnitt des Federarms (20) der Spreizeinrichtung (8) ist.

9. Scheibenbremse nach Anspruch 8,
**dadurch gekennzeichnet, dass**
jeder Druckabschnitt (20a) jeweils auf einer Auflagefläche (4c) einer jeweiligen Belagträgerplatte (4) aufliegt, wobei die Langlöcher (20d) eines jeden Druckabschnitts (20a) jeweils mit einem Vorsprung (4d, 31) der Belagrückenplatte (4) in Zusammenwirkung stehen.

10. Scheibenbremse (10) nach einem der vorhergehenden Ansprüche, **dadurch gekennzeichnet, dass**
die Spreizeinrichtung (8) zumindest ein zusätzliches Rückstellelement (23, 24, 25, 26) aufweist, welches zusätzlich zu dem Angriffspunkt/den Angriffspunkten der Federarme (20) in einem weiteren Angriffspunkt an der jeweiligen Belagträgerplatte (4) eines Bremsbelags (3, 3') angreift.

11. Scheibenbremse (10) nach Anspruch 10,
**dadurch gekennzeichnet, dass**
das zumindest eine zusätzliche Rückstellelement (23) über den Haltebügel (22) an dem Haltebogen (21) befestigt ist.

12. Scheibenbremse (10) nach Anspruch 10,
**dadurch gekennzeichnet, dass**
das zumindest eine zusätzliche Rückstellelement (24, 25) an einem Belaghaltebügel (16) angebracht ist.

13. Scheibenbremse (10) nach Anspruch 11 oder 12,
**dadurch gekennzeichnet, dass**
das zumindest eine zusätzliche Rückstellelement (23, 24, 25) mit einem Druckabschnitt (23d, 24d, 25d) eine Belagseite (4a) der Belagträgerplatte (4) eines Bremsbelags (3, 3') kontaktiert.

14. Scheibenbremse (10) nach Anspruch 13,
**dadurch gekennzeichnet, dass**
das zumindest eine Rückstellelement (23, 24, 25) mit seinem Druckabschnitt (23d, 24d, 25d) mit der Belagseite (4a) der Belagträgerplatte (4) des Bremsbelags (3, 3') in einem unteren Bereich der Belagträgerplatte (4) in Kontakt steht.

15. Scheibenbremse (10) nach Anspruch 13 oder 14,
**dadurch gekennzeichnet, dass**
das zumindest eine Rückstellelement (23, 24, 25) mit seinem Druckabschnitt (23d, 24d, 25d) mit der Belagseite (4a) der Belagträgerplatte (4) des Bremsbelags (3, 3') in einem Schlitz (5a) in dem Reibbelag (5) in Kontakt steht.

16. Scheibenbremse (10) nach Anspruch 12,
**dadurch gekennzeichnet, dass**
das zumindest eine Rückstellelement (26) mit einem Druckabschnitt (26d) eine Druckseite (4b) der Belagträgerplatte (4) eines Bremsbelags (3, 3') kontaktiert oder mit einem Halteabschnitt (40) dieser Druckseite (4b) in Eingriff steht.

17. Scheibenbremse (10) nach Anspruch 16,
**dadurch gekennzeichnet, dass**
das zumindest eine Rückstellelement (26) einen Federarm (26c) aufweist, der eine Feder in einer Ebene parallel zu der Bremsscheibe (2) bildet.

18. Scheibenbremse (10) nach Anspruch 12,
**dadurch gekennzeichnet, dass**
das zumindest eine Rückstellelement (28) mit einem oberen Halteende (28b) in einer Öffnung (16c) des Belaghaltebügels (16) an einer zuspannseitigen Wand (16'c) der Öffnung (16c) angeordnet ist und mit einem unteren Druckabschnitt (28d) eine Druckseite (4b) der Belagträgerplatte (4) eines rückenseitigen Bremsbelags (3') kontaktiert.

19. Scheibenbremse (10) nach Anspruch 12,
**dadurch gekennzeichnet, dass**
das zumindest eine Rückstellelement (29) einen Federarm (29c), dessen oberes Ende über einen Federwickel (29b) mit einem Befestigungsabschnitt (29a) an einem zuspannseitigen Halteende (16a) des Belaghaltebügels (16) angebracht ist, und ein unteres Ende des Federarms (29c), das über einen weiteren Federwickel (29b) mit einem Einspannende (29d) verbunden ist, wobei das Einspannende (29d) mit einem Halteabschnitt (40) an der Druckseite (4b) der Belagträgerplatte (4) des zuspannseitigen Bremsbelags (3) in Eingriff steht.

20. Scheibenbremse (10) nach Anspruch 19,
**dadurch gekennzeichnet, dass**
die Federwickel (29b) als Spiralfedern mit parallelen Längsachsen, die tangential zur Bremsscheibe (2) verlaufen, ausgebildet sind.

21. Scheibenbremse (10) nach Anspruch 12,
**dadurch gekennzeichnet, dass**
das zumindest eine Rückstellelement (26) an einem zuspannseitigen Halteende (16a) des Belaghaltebügels (16) angebracht ist und einen Federarm (26c) aufweist, der mit einer Federeinheit (30) verbunden ist, die wiederum mit einem Halteabschnitt (40) an der Druckseite (4b) der Belagträgerplatte (4) des zuspannseitigen Bremsbelags (3) in Eingriff steht.

22. Scheibenbremse (10) nach Anspruch 12,
**dadurch gekennzeichnet, dass**
das zumindest eine Rückstellelement eine Federeinheit (30) ist, die an einer Bodenplatte (19) eines Zuspannabschnitts angebracht ist und mit einem Halteabschnitt (40) an der Druckseite (4b) der Belagträgerplatte (4) des zuspannseitigen Bremsbelags (3) in Eingriff steht.

23. Scheibenbremse (10) nach Anspruch 19 oder 20,
**dadurch gekennzeichnet, dass**
die Federeinheit (30) als eine Evolutfeder ausgebildet ist.

24. Scheibenbremse (10) nach Anspruch 10,
**dadurch gekennzeichnet, dass**
das zumindest eine Rückstellelement aus mindestens zwei Federeinheiten (34, 35) gebildet ist, von denen beide Federeinheiten (34, 35) mit jeweils einem Federende (35c, 36b) mit einem Halteabschnitt (40) an der Druckseite (4b) der Belagträgerplatte (4) des zuspannseitigen Bremsbelags (3) in Eingriff stehen, und wobei die mindestens zwei Federeinheiten (34, 35) in einer Ebene angeordnet sind.

25. Scheibenbremse (10) nach Anspruch 24,
**dadurch gekennzeichnet, dass**
die anderen Federenden (35b, 36c) der mindestens zwei Federeinheiten (34, 35) jeweils an einer Bodenplatte (19) eines Zuspannabschnitts (11) des Bremssattels (1) angebracht sind.

26. Scheibenbremse (10) nach Anspruch 24,
**dadurch gekennzeichnet, dass**
das andere Federende (35b) der einen Federeinheit (35) der mindestens zwei Federeinheiten (34, 35) an einem Belaghaltebügel (16) angebracht ist, wobei das andere Federende (36c) der anderen Federeinheit (36) der mindestens zwei Federeinheiten (34, 35) an einer Bodenplatte (19) eines Zuspannabschnitts (11) des Bremssattels (1) angebracht ist.

27. Scheibenbremse (10) nach Anspruch 10,
**dadurch gekennzeichnet, dass**
das mindestens eine Rückstellelement mindestens eine Zugfeder (37) ist, die in einer Bohrung (11a) im Zuspannabschnitt (11) des Bremssattels (1) aufgenommen und mit einem Federende (37b) in der Bohrung (11a) festgelegt ist, wobei das andere Federende (37a) mit einem Halteabschnitt (40) an der Druckseite (4b) der Belagträgerplatte (4) eines zuspannseitigen Bremsbelags (3) in Eingriff steht.

28. Scheibenbremse (10) nach Anspruch 12,
**dadurch gekennzeichnet, dass**
das mindestens eine an dem Belaghaltebügel (16) angebrachte Rückstellelement (26) als ein selbstjustierendes Rückstellelement (26) mit einer Rasteinrichtung (38) versehen ist, die mit einem Rastabschnitt (39) des Belaghaltebügels (16) in Zusammenwirkung steht..

29. Scheibenbremse (10) nach Anspruch 12,
**dadurch gekennzeichnet, dass**
das mindestens eine an dem Belaghaltebügel (16) angebrachte Rückstellelement (41) beidseitig an einem rückenseitigen Halteende (16b) des Belaghaltebügels (16) mit jeweils einem Einspannende (41a) angebracht ist, wobei die Einspannenden jeweils mit einem sich zur Bremsscheibe (2) tangential erstreckenden Federarm (41b) verbunden sind, dessen anderes jeweiliges Ende im Bereich der Seiten der Belagträgerplatte (4) um 90° nach unten abgebogen und als vertikaler Federarm (41c) ausgebildet ist und jeweils mit einem nach außen umgebogenen Federende (41d) jeweils mit einem seitlichen Halteabschnitt (40) an der Druckseite (4b) einer Belagträgerplatte (4) eines rückenseitigen Bremsbelags (3') in Eingriff steht.

30. Scheibenbremse (10) nach einem der vorhergehenden Ansprüche,
**dadurch gekennzeichnet, dass**
zumindest ein Befestigungsabschnitt (21c) des Haltebogens (21) mit einem Falzabschnitt (21g) versehen ist, welcher mit einem Kragen (47a) eines Faltenbalgs (47) eines Führungsholms (45) des Bremssattels (1) derart in Kontakt steht, dass der Kragen (47a) in einer Nut (45a) des Führungsholms (45) des Bremssattels (1) fixiert ist.

31. Scheibenbremse (10) nach einem der Ansprüche 16 bis 30,
**dadurch gekennzeichnet, dass**
der Halteabschnitt, (40) der Belagträgerplatte (4) des Bremsbelags (3, 3') auf der Druckseite (4b) der Belagträgerplatte (4) bügelartig ohne Hinterschneidungen mit einer Öffnung (40a) und einer Ausnehmung (40b) auf der Belagseite (4a) der Belagträgerplatte (4) für eine Platte (40c) einstückig mit der Belagträgerplatte (4) als Gussteil hergestellt ist.

32. Scheibenbremse (10) nach Anspruch 31,
**dadurch gekennzeichnet, dass**
eine Verbindung (42) für ein Rückstellelement (23, 24, 25, 26) mit der Belagträgerplatte (4) eines Bremsbelags (3, 3') eine Halteplatte (43) mit einer Öse (44) aufweist, wobei die Halteplatte (43) zwischen einem Reibbelag (5) und einer Belagseite (4a) der Belagträgerplatte (4) angeordnet ist, und wobei sich die Öse (44) durch eine Durchgangsöffnung (42b) durch die Belagträgerplatte (4) hindurch erstreckt und von einer Druckseite (4b) der Belagträgerplatte (4) hervorsteht.

## Claims

1. Disc brake (10) for a utility vehicle, with a brake caliper (1) in the form of a sliding caliper that spans across a brake disc (2), which caliper is attached to a positionally fixed brake carrier (6) and has a central opening (9) over the brake disc (2), two brake pads (3, 3') arranged in the brake caliper (1) which can move in opposite directions, each of them comprising a pad carrier plate (4) with a friction pad (5) fixed thereto, of which brake pads a brake pad (3) on the action or application side can be pressed against the brake disc (2) by means of at least one brake piston, and at least one restoring device by means of which, after a braking-induced displacement and release of the brake, the brake caliper can be moved back, wherein the restoring device comprises a spreading device (8) that acts equally upon the brake pads (3) opposite one another in opposition to the said application device, which spreading device has spreading elements that engage in an elastic manner with the respective pad carrier plate (4),
wherein the spreading device (8) is arranged in the central opening (9), wherein the spreading elements act directly or indirectly outside the friction pads (5) upon at least two contact areas of the brake pads (3) arranged a distance away from one another relative to the middle, wherein the spreading device comprises spring arms (20) which are connected in the central area of the opening (9) to one another and to a retaining arc (21) attached to the brake carrier (6),
wherein the retaining arc (21) is attached in a fixed position in the area of an application-side edge of the opening (9) between the brake carrier (6) and bearing beams (45) of the brake caliper (1),
**characterised in that**
the retaining arc (21) has at least one fastening section (21c) with an opening (21d), which is arranged coaxially with a bearing holder (6b) of the brake carrier (6), to which the brake caliper (1) is attached by way of a bearing beam (45).

2. Disc brake (10) according to Claim 1,
**characterised in that**
starting from a central area in the middle of the opening (9), the spreading elements extend from the inside outwards toward the contact areas arranged a distance apart from one another uniformly relative to the middle.

3. Disc brake (10) according to Claims 1 or 2,
**characterised in that**
the central area of the opening (9) extends on both sides of a virtual mid-point of the opening (9) approximately parallel to the plane of the brake disc (2) over a length in the range of 30 to 50% of a longitudinal axis of the opening (9).

4. Disc brake (10) according to any of the preceding claims,
**characterised in that**
of the spring arms (20), in each case two bear against an associated pad carrier plate (4) by way of a respective thrust section (20a).

5. Disc brake (10) according to Claim 1,
**characterised in that**
the spring arms (20) are connected by means of a retaining stirrup (22) to the retaining arc (21), the retaining stirrup (22) having two retaining arms (22b), each of which extends beyond the retaining arc (21) and is permanently connected thereto.

6. Disc brake (10) according to Claim 5,
**characterised in that**
the spring arms (20) are in the form of two pairs of spring arms (20), wherein the said pairs are arranged opposite one another in the longitudinal direction of the opening (9) in such manner that their inner ends, each of which is connected via a connecting section (20b), are attached in the middle of the opening (9) to the retaining stirrup (22), whereas their outer, free ends co-operate with the pad carrier plate (4) of the brake pads (3, 3').

7. Disc brake (10) according to Claim 6,
**characterised in that**
the retaining arms (22b) of the retaining stirrup (22) have elongated holes (22d) at fastening points to the retaining arc (21).

8. Disc brake (10) according to any of Claims 4 to 7,
**characterised in that**
at its end each spring arm (20) has a thrust section (20a), which in its longitudinal direction is formed with an elongated hole (20d) that is a guiding section of the spring arm (20) of the spreading device (8).

9. Disc brake (10) according to Claim 8,
**characterised in that**
each thrust section (20a) bears against a contact surface (4c) of a respective pad carrier plate (4), and the elongated hole (20d) of each thrust section (20a) in each case co-operates with a projection (4d, 31) of the pad rear plate (4).

10. Disc brake (10) according to any of the preceding claims,
**characterised in that**
the spreading device (8) comprises at least one additional restoring element (23, 24, 25, 26), which in addition to the point or points of action of the spring arm (20), acts upon a further point of action of the respective pad carrier plate (4) of a brake pad (3, 3').

11. Disc brake (10) according to Claim 10,
**characterised in that**
the at least one additional restoring element (23) is attached to the retaining arc (21) by way of the retaining stirrup (22).

12. Disc brake (10) according to Claim 10,
**characterised in that**
the at least one additional restoring element (24, 25) is attached to a pad retaining stirrup (16).

13. Disc brake (10) according to Claims 11 or 12,
**characterised in that**
the at least one additional restoring element (23, 24, 25) is in contact by way of a thrust section (23d, 24d, 25d) against a pad side (4a) of the pad carrier plate (4) of a brake pad (3, 3').

14. Disc brake (10) according to Claim 13,
**characterised in that**
the at least one restoring element (23, 24, 25) is in contact by way of its thrust section (23d, 24d, 25d) against the pad side (4a) of the pad carrier plate (4) of the brake pad (3, 3'), in a lower area of the pad carrier plate (4).

15. Disc brake (10) according to Claims 13 or 14,
**characterised in that**
at least one restoring element (23, 24, 25) is in contact by way of its thrust section (23d, 24d, 25d) against the pad side (4a) of the pad carrier plate (4) of the brake pad (3, 3'), in a slot (5a) in the friction pad (5).

16. Disc brake (10) according to Claim 12,
**characterised in that**
at least one restoring element (26) is in contact by way of a thrust section (26d) against a thrust side (4b) of the pad carrier plate (4) of a brake pad (3, 3'), or engages with a retaining section (40) of the said thrust side (4b).

17. Disc brake (10) according to Claim 16,
**characterised in that**
the at least one restoring element (26) has a spring arm (20) in the form of a spring in a plane parallel to the brake disc (2).

18. Disc brake (10) according to Claim 12,
**characterised in that**
the at least one restoring element (20) is arranged with an upper retaining end (28b) in an opening (16c) of the pad retention stirrup (16) on an application-side wall (16'c) of the opening (16c), and is in contact by way of a lower thrust section (26d) against a thrust side (4b) of the pad carrier plate (4) of a rear-side brake pad (3').

19. Disc brake (10) according to Claim 12,
**characterised in that**
the at least one restoring element (29) comprises a spring arm (29c), whose upper end is attached by way of a spring coil 29b) with a fastening section (29a) to an application-side retaining end (16a) of the pad retaining stirrup (16), and a lower end of the spring arm (29c), which is connected by way of a further spring coil (29b) to a clamping end (29d), wherein the clamping end (29d) engages with a retaining section (40) on the thrust side (4b) of the pad carrier plate (4) of the application-side brake pad (3).

20. Disc brake (10) according to Claim 19,
**characterised in that**
the spring coils (29b) are in the form of spiral springs with parallel longitudinal axes, which extend tangentially to the brake disc (2).

21. Disc brake (10) according to Claim 12,
**characterised in that**
the at least one restoring element (26) is attached to an application-side retaining end (16a) of the pad retaining stirrup (16), and comprises a spring arm (26c) which is connected to a spring unit (30) which in turn engages with a retaining section (40) on the thrust side (4b) of the pad carrier plate (4) of the application-side brake pad (3).

22. Disc brake (10) according to Claim 12,
**characterised in that**
the at least one restoring element is a spring unit (30), which is attached to a base-plate (19) of an application section and engages with a retaining section (40) on the thrust side (4b) of the pad carrier plate (4) of the application-side brake pad (3).

23. Disc brake (10) according to Claims 19 or 20,
**characterised in that**
the spring unit (30) is in the form of an evolute spring.

24. Disc brake (10) according to Claim 10,
**characterised in that**
the at least one restoring element is formed of at least two spring units (34, 35), of which the two spring units (34, 35) engage by way of a respective spring end (35c, 36b) with a retaining section (40) on the thrust side (4b) of the pad carrier plate (4) of the application-side brake pad (3), and wherein the at least two spring units (34, 35) are arranged in one plane.

25. Disc brake (10) according to Claim 24,
**characterised in that**
the other spring ends (35b, 36c) of the at least two spring units (34, 35) are in each case attached to a base-plate (19) of an application section (11) of the brake caliper (1).

26. Disc brake (10) according to Claim 24,
**characterised in that**
the other spring end (35b) of one spring unit (35) of the at least two spring units (34, 35) is attached to a pad retaining stirrup (16), whereas the other spring end (36c) of the other spring unit (36) of the at least two spring units (34, 35) is attached to a base-plate (19) of an application section (11) of the brake caliper (1).

27. Disc brake (10) according to Claim 10,
**characterised in that**
the at least one restoring element is at least one tension spring (37), which is accommodated in a bore (11a) in the application section (11) of the brake caliper (1) and fixed at one spring end (37b) in the said bore (11a), whereas the other spring end (37a) engages with a retaining section (40) on the thrust side (4b) of the pad carrier plate (4) of an application-side brake pad (3).

28. Disc brake (10) according to Claim 12,
**characterised in that**
the at least one restoring element (26) attached to the pad retaining stirrup (16) is in the form of a self-adjusting restoring element (26), with a latching device (38) that co-operates with a detaining section (39) of the pad retaining stirrup (16).

29. Disc brake (10) according to Claim 12,
**characterised in that**
the at least one restoring element (41) attached to the pad retaining stirrup (16) is attached on both sides to a rear-side retaining end (16b) of the pad retaining stirrup (16) in each case by way of a clamping end (41a), wherein the said clamping ends are in each case connected to a spring arm (41b) that extends tangentially to the brake disc (2), the other respective end of the said spring arm, in the area of the sides of the pad carrier plate (4), being bent downwards through 90° to form a vertical spring arm (41c) and in each case engaging with an outward-bent spring end (41d) with a lateral retaining section (40) on the thrust side (4b) of a pad carrier plate (4) of a rear-side brake pad (3').

30. Disc brake (10) according to any of the preceding claims,
**characterised in that**
at least one fastening section (21c) of the retaining arc (21) is provided with a folded section (21g), which is in contact with a collar (47a) of a bellows (47) of a guiding beam (45) of the brake caliper (1) in such manner that the collar (47a) is fixed in a groove (45a) of the guiding beam (45) of the brake caliper (1).

31. Disc brake (10) according to any of Claims 16 to 30,
**characterised in that**
the retaining section (40) of the pad carrier plate (4) of the brake pad (3, 3') on the thrust side (4b) of the pad carrier plate (4) is made in the form of a stirrup without undercuts, with an opening (40a) and a recess (40b) on the pad side of the pad carrier plate (4) for a plate (40c) made integrally with the pad carrier plate (4) as a cast component.

32. Disc brake (10) according to Claim 31,
**characterised in that**
a connection for a restoring element (23, 24, 25, 26) with the pad carrier plate (4) of a brake pad (3, 3') comprises a retaining plate (43) with an eyelet (44), such that the retaining plate (43) is arranged between a friction pad (5) and a pad side (4a) of the pad carrier plate (4), and such that the eyelet (44) extends through a through-going opening (42b) through the pad carrier plate (4) and projects from a thrust side (4b) of the pad carrier plate (4).

## Revendications

1. Frein (10) à disque d'un véhicule utilitaire comprenant un étrier (1) de frein, qui chevauche un disque (2) de frein qui est constitué en étrier coulissant, qui est fixé à un flasque (6) de frein à poste fixe et qui a une ouverture (9) centrale au-dessus du disque (2) de frein, deux garnitures (3, 3') de frein ayant chacune une plaque (4) de support de garniture et une garniture (5) de friction qui y est fixée, dont l'une, une garniture (3) de frein du côté action ou du côté serrage, peut, au moyen d'un dispositif de serrage, être pressée sur le disque (2) de frein par au moins un piston de frein, ainsi qu'au moins un dispositif de rappel, par lequel l'étrier (1) de frein peut être ramené après un coulissement dû au freinage et un desserrage du frein, dans lequel le dispositif de rappel a, attaquant les garnitures (3) de frein opposées et agissant pareillement à l'inverse du sens de serrage respectif, des éléments d'écartement à ressort attaquant la plaque (4) de support de garniture respective,
le dispositif (8) d'écartement est disposé dans l'ouverture (9) centrale, les éléments d'écartement attaquant, directement ou indirectement à l'extérieur des garnitures (5) de friction, au moins deux régions de contact, disposées l'une par rapport à l'autre à distance du milieu, des garnitures (3) de frein, le dispositif d'écartement ayant des bras (20) de ressort qui sont reliés entre eux dans la région centrale de l'ouverture (9) et à un arceau (21) de retenue qui est monté sur le flasque (6) de frein,
l'arceau (21) de retenue étant monté, dans la région d'un bord du côté du serrage de l'ouverture (9), à poste fixe entre le flasque (6) de frein et des longerons (45) de support de l'étrier (1) de frein,
**caractérisé en ce que**
l'arceau (21) de retenue a au moins une partie (21c) de fixation ayant une ouverture (21d) qui est disposée coaxialement à un logement (6b) de palier du flasque (6) de frein auquel l'étrier (1) de frein est fixé par un longeron (45) de palier.

2. Frein (10) à disque suivant la revendication 1,
**caractérisé en ce que**
les éléments d'écartement s'étendent à partir d'une région centrale au milieu de l'ouverture (9) de l'intérieur vers l'extérieur vers les régions de contact disposées à même distance du milieu.

3. Frein (10) à disque suivant la revendication 1 ou 2,
**caractérisé en ce que**
la région centrale de l'ouverture (9) des deux côtés d'un milieu virtuel de l'ouverture (9) s'étend, en étant à peu près parallèle au plan du disque (2) de frein, sur une longueur dans une plage représentant de 30 à 50 % d'un axe longitudinal de l'ouverture (9).

4. Frein (10) à disque suivant l'une des revendications précédentes,
**caractérisé en ce que**
des bras (20) de ressort, respectivement deux s'appliquent à une plaque (4) de support de garniture associée par, respectivement, une partie (20a) de poussée.

5. Frein (10) à disque suivant la revendication 1,
**caractérisé en ce que**
les bras (20) de ressort sont reliés à l'arceau (21) de retenue par un pontet (21) de maintien, le pontet (22) de maintien ayant deux bras (22b) de maintien, dont chacun s'étend jusqu'au-dessus de l'arceau (21) de retenue et est relié fixement à celui-ci.

6. Frein (10) à disque suivant la revendication 5,
**caractérisé en ce que**
les bras (20) de ressort sont constitués sous la forme de deux paires de bras (20) de ressort, les paires étant disposées en opposition dans la direction longitudinale de l'ouverture (9), de manière à être fixées, par des extrémités intérieures, qui sont reliées, respectivement, par une partie (20b) de liaison, au milieu de l'ouverture (9), à l'étrier (22) de retenue, leurs extrémités libres extérieures coopérant avec les plaques (4) de support de garniture des garnitures (3, 3') de frein.

7. Frein (10) à disque suivant la revendication 6,
**caractérisé en ce que**
les bras (22b) de maintien du pontet (22) de maintien ont des boutonnières (22d) aux points de fixation à l'arceau (21) de retenue.

8. Frein (10) à disque suivant l'une des revendications 4 à 7, **caractérisé en ce que**
chaque bras (20) de ressort est constitué en ayant une partie (20a) de poussée, qui est constituée en ayant dans sa direction longitudinale une boutonnière (20d) qui est une partie de guidage du bras (20) de ressort du dispositif (8) d'écartement.

9. Frein (10) à disque suivant la revendication 8,
**caractérisé en ce que**
chaque partie (20a) de poussée s'applique, respectivement, à une surface (4c) d'application d'une plaque (4) de support de garniture respective, les boutonnières (20c) de chaque partie (20a) de poussée étant en coopération, respectivement, avec une saillie (4d, 31) de la plaque (4) de dos de garniture.

10. Frein (10) à disque suivant l'une des revendications précédentes,
**caractérisé en ce que**
le dispositif (8) d'écartement a au moins un élément (23, 24, 25, 26) supplémentaire de rappel lequel, supplémentairement au point d'attaque/aux points d'attaque des bras (20) de ressort, attaque, à un autre point d'attaque, la plaque (4) de support de garniture respective d'une garniture (3, 3') de frein.

11. Frein (10) à disque suivant la revendication 10,
**caractérisé en ce que**
le au moins un élément (23) supplémentaire de rappel est fixé à l'arceau (21) de retenue par le pontet (22) de maintien.

12. Frein (10) à disque suivant la revendication 10,
**caractérisé en ce que**
le au moins l'élément (24, 25) supplémentaire de rappel est monté sur un pontet (16) de maintien de garniture.

13. Frein (10) à disque suivant la revendication 11 ou 12,
**caractérisé en ce que**
le au moins un élément (23, 24, 25) supplémentaire de rappel est, par une partie (23d, 24d, 25d) de poussée, en contact avec un côté (4a) de garniture de la plaque (4) de support de garniture d'une garniture (3, 3') de frein.

14. Frein (10) à disque suivant la revendication 13,
**caractérisé en ce que**
le au moins un élément (23, 24, 25) de rappel est, par sa partie (23d, 24d, 25d) de poussée, en contact avec le côté (4a) de garniture de la plaque (4) de support de garniture de la garniture (3, 3') de frein dans une région inférieure de la plaque (4) de support de garniture.

15. Frein (10) à disque suivant la revendication 13 ou 14,
**caractérisé en ce que**
le au moins un élément (23, 24, 25) de rappel est, par sa partie (23d, 24d, 25d) de poussée, en contact avec le coté (4a) de garniture de la plaque (4) de support de garniture de la garniture (3, 3') de frein dans une fente (5a) de la garniture (5) de friction.

16. Frein (10) à disque suivant la revendication 12,
**caractérisé en ce que**
le au moins un élément (26) de rappel est, par une partie (26d) de poussée, en contact avec un côté (4d) de poussée de la plaque (4) de support de garniture d'une garniture (3, 3') de frein ou est en prise avec une partie (40) de maintien de ce côté (4b) de poussée.

17. Frein (10) à disque suivant la revendication 16,
**caractérisé en ce que**
le au moins un élément (26) de rappel a un bras (26c) de ressort, qui forme un ressort dans un plan parallèlement au disque (2) de frein.

18. Frein (10) à disque suivant la revendication 12,
**caractérisé en ce que**
le au moins un élément (28) de rappel est disposé, par une extrémité (28b) supérieure de maintien, dans une ouverture (16c) du pontet (16) de maintien de garniture sur une paroi (16'c) du côté du serrage de l'ouverture (16c) et, par une partie (28d) inférieure de poussée, est en contact avec un côté (4b) de poussée de la plaque (4) de support de garniture d'une garniture (3') de frein du côté du dos.

19. Frein (10) à disque suivant la revendication 12,
**caractérisé en ce que**
le au moins un élément (29) de rappel a un bras (29c) de ressort, dont l'extrémité supérieure est montée, par l'intermédiaire d'un enroulement (29b) de ressort ayant une partie (29a) de fixation, sur une extrémité (16a) de maintien du côté du serrage du pontet (16) de maintien de garniture, et une extrémité inférieure du bras (29c) de ressort, qui est reliée à une extrémité (29d) de blocage par l'intermédiaire d'un autre enroulement (29b) de ressort, l'extrémité (29d) de blocage étant en prise avec une partie (40) de maintien du côté (4b) de poussée de la plaque (4) de support de garniture de la garniture (3) de frein du côté du serrage.

20. Frein (10) à disque suivant la revendication 19,
**caractérisé en ce que**
les enroulements (29b) de ressort sont constitués sous la forme de ressorts spirales ayant des axes longitudinaux parallèles qui s'étendent tangentiellement au disque (2) de frein.

21. Frein (10) à disque suivant la revendication 12,
**caractérisé en ce que**
le au moins un élément (26) de rappel est monté sur une extrémité (16a) de maintien du côté du serrage du pontet (16) de maintien de garniture et a un bras (26c) de ressort, qui est relié à une unité (30) de ressort, laquelle à son tour est en prise avec une partie (40) de maintien du côté (4b) de poussée de la plaque (4) de support de garniture de la garniture (3) de frein du côté du serrage.

22. Frein (10) à disque suivant la revendication 12,
**caractérisé en ce que**
le au moins un élément de rappel est une unité (30) de ressort, qui est montée sur une plaque (19) de fond d'une partie de serrage et est en prise avec une partie (40) de maintien du côté (4b) de poussée de la plaque (4) de support de garniture de la garniture (3) de frein du côté du serrage.

23. Frein (10) à disque suivant la revendication 19 ou 20,
**caractérisé en ce que**
l'unité (30) de ressort est constituée sous la forme d'un ressort en volute.

24. Frein (10) à disque suivant la revendication 10,
**caractérisé en ce que**
le au moins un élément de rappel est constitué d'au moins deux unités (34, 35) de ressort, dont les deux unités (34, 35) de ressort sont en prise à, respectivement, une extrémité (35c, 36b) de ressort, avec une partie (40) de maintien du côté (4b) de poussée de la plaque (4) de support de garniture de la garniture (3) de frein du côté du serrage, et dans lequel les au moins deux unités (34, 35) de ressort sont disposées dans un plan.

25. Frein (10) à disque suivant la revendication 24,
**caractérisé en ce que**
les autres extrémités (35b, 36c) de ressort des au moins deux unités (34, 35) de ressort sont disposées chacune sur une plaque (19) de fond d'une partie (11) de serrage de l'étrier (1) de frein.

26. Frein (10) à disque suivant la revendication 24,
**caractérisé en ce que**
l'autre extrémité (35b) de ressort de l'une des unités (35) de ressort des au moins deux unités (34, 35) de ressort est disposée sur un pontet (16) de maintien de garniture, l'autre extrémité (36b) de ressort de l'autre unité (36) de ressort des au moins deux unités (34, 35) de ressort étant disposée sur une plaque (19) de fond d'une partie (11) de serrage de l'étrier (1) de frein.

27. Frein (10) à disque suivant la revendication 10,
**caractérisé en ce que**
le au moins l'élément de rappel est au moins un ressort (37) de traction, qui est reçu dans un trou (11a) de la partie (11) de serrage de l'étrier (1) de frein et qui est fixé par une extrémité (37b) du ressort dans le trou (11a), l'autre extrémité (37a) du ressort étant en prise avec une partie (40) de maintien du côté (4b) de poussée de la plaque (4) de support de garniture d'une garniture (3) de frein du côté du serrage.

28. Frein (10) à disque suivant la revendication 12,
**caractérisé en ce que**
le au moins un élément (26) de rappel monté sur le pontet (16) de maintien de garniture est pourvu, en tant qu'élément (26) de rappel à auto-ajustement, d'un dispositif (38) d'encliquetage, qui est en coopération avec une partie (39) d'encliquetage du pontet (16) de maintien de garniture.

29. Frein (10) à disque suivant la revendication 12,
**caractérisé en ce que**
le au moins un élément (41) de rappel monté sur le pontet (16) de maintien de garniture est monté des deux côtés sur une extrémité (16b) de maintien du côté du dos du pontet (16) de maintien de garniture par, respectivement, une extrémité (41a) de blocage, les extrémités de blocage étant reliées chacune à un bras (41b) de ressort s'étendant tangentiellement au disque (2) de frein, dont l'autre extrémité respective est coudée vers le bas à 90° dans la région des côtés de la plaque (4) de support de garniture et est constituée sous la forme d'un bras (41) de ressort vertical et est en prise, respectivement, par une extrémité (41d) de ressort recourbée vers l'extérieur, respectivement, avec une partie (40) latérale de maintien du côté (4b) de poussée d'une plaque (4) de support de garniture d'une garniture (3') de frein du côté du dos.

30. Frein (10) à disque suivant l'une des revendications précédentes,
**caractérisé en ce qu'**
au moins une partie (21c) de fixation de l'arceau (21) de retenue est pourvue d'une partie (21g) de pliage, qui est en contact avec un collet (47a) d'un soufflet (47) à plis d'un longeron (45) de guidage de l'étrier (1) de frein, de manière à immobiliser le collet (47a) dans une rainure (45a) du longeron (45) de guidage de l'étrier (1) de frein.

31. Frein (10) à disque suivant l'une des revendications 16 à 30,
**caractérisé en ce que**
la partie (40) de maintien de la plaque (4) de support de garniture de la garniture (3, 3') de frein est fabriquée du côté (4b) de poussée de la plaque (4) de support de garniture à la manière d'un pontet sans contredépouille, en ayant une ouverture (40a) et un évidement (40b) du côté (4a) de garniture de la plaque (4) de support de garniture pour une plaque (40c), en étant d'une seule pièce avec la plaque (4) de support de garniture sous la forme d'une pièce coulée.

32. Frein (10) à disque suivant la revendication 31,
**caractérisé en ce qu'**
une liaison (42) pour un élément (23, 24, 25, 26) de rappel à la plaque (4) de support de garniture d'une garniture (3, 3') de frein a une plaque (43) de maintien ayant un œillet (44), la plaque (43) de maintien étant disposée entre une garniture (5) de friction et un côté (4a) de garniture de la plaque (4) de support de garniture et l'œillet (44) s'étendant dans une ouverture (42b) de passage de la plaque (4) de support de garniture et étant en saillie d'un côté (4b) de poussée de la plaque (4) de support de garniture.
